# EUROPEAN PATENT SPECIFICATION

(11) **EP 2 961 189 B1**
(45) Date of publication and mention of the grant of the patent: **30.01.2019**
(21) Application number: 13874862.9
(22) Date of filing: 31.10.2013
(51) Int. Cl.: H04Q 9/00, G06F 13/00

(54) **METHODE FOR CONTROLLING INFORMATION APPARATUS AND PROGRAM**
VERFAHREN ZUM STEUERN EINER INFORMATIONSVORRICHTUNG UND PROGRAMM
PROCÉDÉ DE COMMANDE D'UN APPAREIL D'INFORMATIONS ET PROGRAMME

(30) Priority: 20.02.2013 US 201361766854 P; 19.07.2013 US 201361856243 P; 24.09.2013 US 201361881585 P
(43) Date of publication of application: 30.12.2015
(73) Proprietor: Panasonic Intellectual Property Corporation of America, Torrance, CA 90503 (US)
(72) Inventor: SASAKI, Takamitsu, Osaka 540-6207 (JP); TAHARA, Kohei, Osaka 540-6207 (JP)
(74) Representative: SSM Sandmair
(86) International application number: PCT/JP2013/006466
(87) International publication number: WO 2014/128800

(56) References cited:
- JP-A- 2001 092 762
- JP-A- 2003 085 356
- JP-A- 2004 021 522
- JP-A- 2005 198 252
- JP-A- 2010 145 169
- US-B1- 7 730 223

## Description

### Technical Field

The present disclosure relates to a method for controlling an information apparatus and a program.

### Background Art

Technologies for remotely monitoring or remotely controlling one or more target devices using one remote controller are proposed.

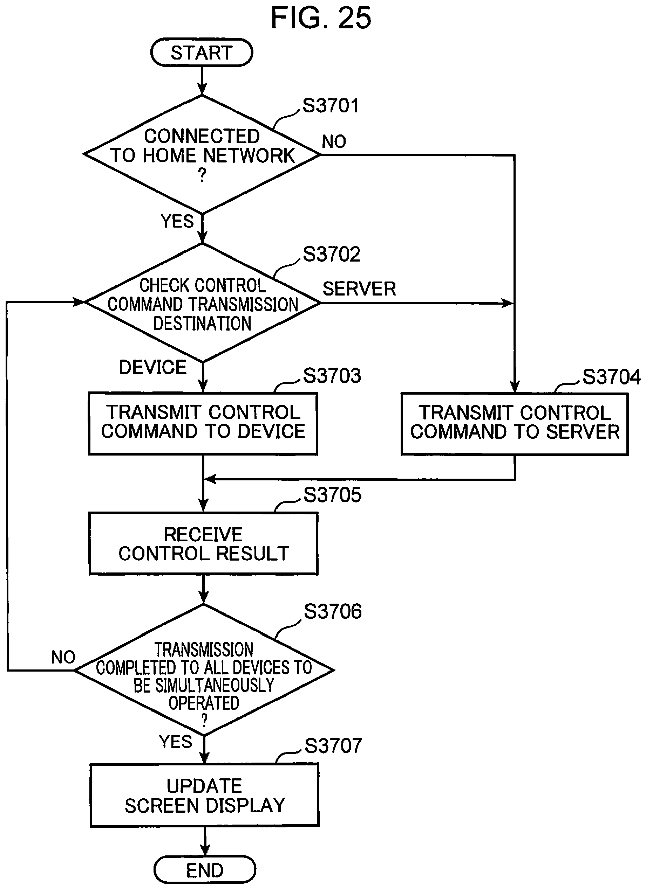

Patent Document 1 discloses a technology for remotely operating one or more target devices from a monitor of a television set. Specifically, icons for the one or more target devices are displayed on the right side of a monitor screen. When a desired one of the icons is selected (i), a floor plan is displayed on the left side of the monitor screen (ii). When a pointer is moved to the location of installation of a target device desired to be operated in the floor plan (iii), an operation screen for the target device selected by moving the pointer is displayed on the monitor screen (iv) (paragraphs [0138] to [0140] and Figs. 25A and 25B).

However, Patent Document 1 described above needs a further improvement.

Patent Document 1: Japanese Patent Application Laid-open No. 2007-104567.

A similar method is for example disclosed in document US 7 730 223 B1.

### Summary of the Invention

In order to address the foregoing issue, an aspect of the present invention provides a method for controlling an information apparatus as recited in claim 1.

According to the aspect described above, it is possible to embody a further improvement.

### Brief Description of the Drawings

Fig. 1 is a diagram showing an overall configuration of a home control system to which a home controller according to an embodiment of the present invention is applied.
Fig. 2 is a diagram showing main devices to be controlled by the home controller according to an embodiment of the present invention.
Fig. 3 is a block diagram showing the configuration of the home controller, a device, and a server according to an embodiment of the present invention.
Fig. 4 is a diagram showing a configuration example of the form of implementation of the home controller according to an embodiment of the present invention.
Fig. 5 is a diagram showing an example of a basic screen of the home controller according to an embodiment of the present invention.
Fig. 6 is a diagram showing an example of a room screen that is displayed on a display of a home controller according to an embodiment of the present invention.
Fig. 7 is a diagram showing an example of a detail control screen that is displayed on a display of a home controller according to an embodiment of the present invention.
Fig. 8 is a diagram showing another example of a detail control screen that is displayed on a display of a home controller according to an embodiment of the present invention.
Fig. 9 is a diagram showing an example of transition of a display screen on a display according to an embodiment of the present invention.
Fig. 10 is a diagram showing an example of transition of a display screen on a display according to an embodiment of the present invention.
Fig. 11 is a diagram showing an example of transition of a display screen on a display according to an embodiment of the present invention.
Fig. 12 is a diagram showing an example of transition of a display screen on a display according to an embodiment of the present invention.
Fig. 13 is a diagram showing an example of a collective control setting screen that is displayed on a display of a home controller according to an embodiment of the present invention.
Fig. 14 is a diagram showing an example of transition of a display screen including a collective control setting screen according to an embodiment of the present invention.
Fig. 15 is a diagram showing an example of transition of a display screen including a collective control setting screen according to an embodiment of the present invention.
Fig. 16 is a diagram showing a configuration of home information according to an embodiment of the present invention.
Fig. 17A is a diagram showing a configuration of room information that is managed by a server according to an embodiment of the present invention.
Fig. 17B is a diagram showing a configuration of room information that is managed by a home controller according to an embodiment of the present invention.
Fig. 18 is a diagram showing a configuration of a device list that is managed by a server according to an embodiment of the present invention.
Fig. 19 is a diagram showing a configuration of a device list that is managed by a home controller according to an embodiment of the present invention.
Fig. 20 is a sequence diagram showing a flow of processes by which a home controller acquires home information from a server according to an embodiment of the present invention.
Fig. 21 is a sequence diagram showing a flow of processes by which a home controller detects a device on a network upon connecting to the network according to an embodiment of the present invention.
Fig. 22 is a sequence diagram showing a flow of processes by which a home controller detects a device on a network when the device connects to the network according to an embodiment of the present invention.
Fig. 23 is a flowchart showing a flow of processes by which a home controller controls a device when a basic screen or a room screen is displayed on a display according to an embodiment of the present invention.
Fig. 24 is a flowchart showing a flow of processes by which a home controller controls a device when a detail control screen is displayed on a display according to an embodiment of the present invention.
Fig. 25 is a flowchart showing a flow of processes by which a home controller transmits a control command according to an embodiment of the present invention.
Fig. 26 is a sequence diagram showing a flow of processes by which a home controller directly controls a device according to an embodiment of the present invention.
Fig. 27 is a sequence diagram showing a flow of processes by which a home controller controls a device via a server according to an embodiment of the present invention.
Fig. 28 is a sequence diagram showing a flow of processes by which a home controller acquires a state of a device from a server according to an embodiment of the present invention.
Fig. 29 is a sequence diagram showing a flow of processes by which a home controller directly controls a device in a case where the home controller controls a plurality of devices by a single operation according to an embodiment of the present invention.
Fig. 30 is a sequence diagram showing a flow of processes by which a home controller controls a device via a server in a case where the home controller controls a plurality of devices by a single operation according to an embodiment of the present invention.
Fig. 31 is a sequence diagram showing a flow of processes by which a home controller controls a device via a server in a case where the home controller controls a plurality of devices by a single operation according to an embodiment of the present invention.
Fig. 32 is a sequence diagram showing a flow of processes by which device lists of a home controller and a server are updated according to an embodiment of the present invention.
Fig. 33 is a sequence diagram showing a flow of processes by which device lists of a home controller and a server are updated according to an embodiment of the present invention.
Fig. 34 is a sequence diagram showing a flow of processes by which device lists of a home controller and a server are updated according to an embodiment of the present invention.
Fig. 35A is a diagram showing a configuration of power consumption information that is transmitted by a home controller or a server according to an embodiment of the present invention.
Fig. 35B is a diagram showing a configuration of power consumption information that is transmitted by a home controller or a server according to an embodiment of the present invention.
Fig. 36 is a sequence diagram showing an example of processes by which a home controller and a server acquire power consumption according to an embodiment of the present invention.
Fig. 37 is a sequence diagram showing another example of processes by which a home controller and a server acquire power consumption according to an embodiment of the present invention.
Fig. 38 is a sequence diagram showing yet another example of processes by which a home controller and a server acquire power consumption according to an embodiment of the present invention.
Fig. 39 is a diagram showing another example of a room screen that is displayed on a display of a home controller according to an embodiment of the present invention.
Fig. 40 is a diagram showing an example of transition of a display screen on a display in the case of the room screen shown in Fig. 39 according to an embodiment of the present invention.
Fig. 41 is a diagram showing an example of transition of a display screen on a display in the case of the room screen shown in Fig. 39 according to an embodiment of the present invention.
Fig. 42 is a diagram showing an example of transition of a display screen on a display in the case of the room screen shown in Fig. 39 according to an embodiment of the present invention.
Fig. 43 is a diagram showing an example of transition of a display screen on a display in the case of the room screen shown in Fig. 39 according to an embodiment of the present invention.
Fig. 44 is a diagram showing another example of transition of a display screen on a display in the case of the room screen shown in Fig. 39 according to an embodiment of the present invention.
Fig. 45 is a flowchart showing a flow of processes by which a home controller controls a device when a basic screen is displayed on a display in the case of the room screen shown in Fig. 39 according to an embodiment of the present invention.
Fig. 46 is a flowchart showing a flow of processes by which a home controller controls a device when the room screen shown in Fig. 39 is displayed on a display according to an embodiment of the present invention.
Fig. 47 is a diagram showing another example of a basic screen of a home controller according to an embodiment of the present invention.
Fig. 48 is a diagram showing yet another example of a basic screen of a home controller according to an embodiment of the present invention.
Fig. 49 is a diagram showing another display example of the room screen shown in Fig. 6 according to an embodiment of the present invention.

### Description of Embodiments

### (Circumstances leading to the invention of an aspect of the present disclosure)

First, viewpoints of an aspect according to the present disclosure will be described.

In Patent Document 1 described above, when a device icon corresponding to a target device to be operated among a floor plan is selected, an operation screen of a target device corresponding to the selected device icon is displayed. When the operation screen of a target device is displayed, device icons corresponding to devices other than the target device corresponding to the selected device icon are not displayed.

Due to the configuration described above, with Patent Document 1, device icons which correspond to devices other than the target device corresponding to the selected device icon and which are arranged in a same room as the target device cannot be displayed in a state where the operation screen of the target device is being displayed.

Therefore, in order to display an operation screen of another device that is arranged in the same room, one must first return to the display screen presenting the floor plan to select a device icon corresponding to the other device.

Based on the considerations described above, the present inventors arrived at the respective aspects of the present invention as presented below.

A method according to an aspect of the present disclosure is a method for controlling an information apparatus as recited in claim 1.

In addition, in the aspect described above, for example,
the first operation screen may include a first operation button for causing a first extended operation screen to be displayed, the first extended operation screen being used for operating instructions other than instructions operable by the first operation screen, and
when it is determined that selection of the first operation button is sensed, the first extended operation screen may be displayed on the display.

According to the present aspect, the first operation screen can be included in the displayed room screen for a part of the instructions to the first target device, whereas the first extended operation screen can be separately displayed for remaining instructions. Therefore, for example, by including frequently used instructions in the first operation screen, a size of the first operation screen can be reduced. Accordingly, for example, even in a case including a target device that is installed in a large number such as an illumination device or an air conditioner, a larger number of operation screens can be displayed in a limited display area. On the other hand, for example, less frequently used instructions can be accommodated by separately displaying the first extended operation screen.

In addition, in the aspect described above, for example, a second control command may be outputted to the network based on an operation on the first extended operation screen, the second control command controlling the first target device.

In addition, in the aspect described above, for example,
the displayed room screen may include a second operation screen for operating a second target device, the second target device corresponding to a second device icon other than the selected first device icon, the second target device being arranged in the room represented on the room screen, and
a third control command may be outputted to the network based on an operation on the second operation screen, the third control command controlling the second target device.

According to the aspect described above, when the first device icon is selected, not only a first control screen corresponding to the first device icon but a second operation screen for operating a second target device is also displayed on the display, the second target device corresponding to a second device icon other that the selected first device icon, the second target device being arranged in a room represented on the room screen.

Accordingly, when the first device icon is selected, the second target device other than the first target device which is arranged in the same room can be operated in a unit of a room corresponding to the first device icon.

Therefore, in order to operate the second target device that is arranged in the same room, the second target device can be operated in a state where the room screen is still being displayed instead of returning to the display screen representing the respective rooms included in the building and selecting the second device icon. As a result, operations in a case where a plurality of target devices are arranged in the same room can be simplified.

In addition, in the aspect described above, for example,
the second operation screen may include a second operation button for causing a second extended operation screen to be displayed, the second extended operation screen being used for operating instructions other than instructions operable by the second operation screen, and
when it is determined that selection of the second operation button is sensed, the second extended operation screen may be displayed on the display.

According to the present aspect, the second operation screen can be included in the displayed room screen for a part of the instructions to the second target device, whereas, the second extended operation screen can be separately displayed for remaining instructions. Therefore, for example, by including frequently used instructions in the second operation screen, a size of the second operation screen can be reduced. Accordingly, for example, even in a case including a target device that is installed in a large number such as an illumination device or an air conditioner, a larger number of operation screens can be displayed in a limited display area. On the other hand, for example, less frequently used instructions can be accommodated by separately displaying the second extended operation screen.

In addition, in the aspect described above, for example, a fourth control command may be outputted to the network based on an operation on the second extended operation screen, the fourth control command controlling the second target device.

Furthermore, in the aspect described above, for example, the second device icon may be a device icon representing a target device of a same type as the first device icon.

In addition, in the aspect described above, for example, the second device icon may be a device icon representing a target device of a type that differs from the first device icon.

Furthermore, in the aspect described above, for example, the room screen may include a display field for displaying power consumption of the corresponding room.

In addition, in the aspect described above, for example, the information apparatus may be connected to a management apparatus via a network, the management apparatus managing the power consumption of each of the one or more rooms in units of each room, power information may be acquired from the management apparatus, the power information indicating the power consumption of each of the one or more rooms. In this case, the power consumption is displayed in the display field based on the power information.

A control method according to another aspect of the present disclosure is
a method for controlling an information apparatus as recited in claim 11.

According to the aspect described above, when the first device icon is selected, not only a first operation screen corresponding to the first device icon but an operation screen device icon, for causing a second operation screen for operating a second target device to be displayed on the display, is also displayed on the display, the second target device corresponding to a second device icon other than the selected first device icon, the second target device being arranged in a room represented on the room screen.

Accordingly, when the first device icon is selected, the second target device other than the first target device which is arranged in the same room can be operated in a unit of a room corresponding to the first device icon.

Therefore, in order to operate the second target device that is arranged in the same room, the second target device can be operated by selecting the operation screen device icon for causing the second operation screen to be displayed in a state where the room screen is still being displayed instead of returning to the display screen representing the respective rooms included in the building and selecting the second device icon. As a result, operations in a case where a plurality of target devices are arranged in the same room can be simplified.

In addition, in the other aspect described above, for example, when selection of the operation screen device icon on the displayed room screen is sensed, the second operation screen for operating the second target device may be displayed on the display by switching from the first operation screen, and a second control command may be outputted to the network based on an operation on the second operation screen, the second control command controlling the second target device.

In this case, for example, when selection of the operation screen device icon on the displayed room screen is sensed, display is switched from the first operation screen to the second operation screen. Accordingly, the second target device can be operated in a state where the room screen is still being displayed without having to return to an initial display screen that represents the respective rooms included in the building. Therefore, switching from the operation of the first target device to the operation of the second target device which is arranged in the same room as the first target device can be performed in a smooth manner and operations can be simplified while effectively utilizing a limited display area.

Furthermore, in the other aspect described above, for example, the second device icon may be a device icon representing a target device of a same type as the first device icon.

In addition, in the other aspect described above, for example, the second device icon may be a device icon representing a target device of a type that differs from the first device icon.

Furthermore, in the other aspect described above, for example, the room screen may include a display field for displaying power consumption of the corresponding room.

### (Embodiment)

An embodiment of the present disclosure will be described below with reference to the drawings. In the drawings, the same symbols are used for the same constituent elements.

In the embodiment, a home controller which can singly control one or more devices will be described.

### (Overall Configuration)

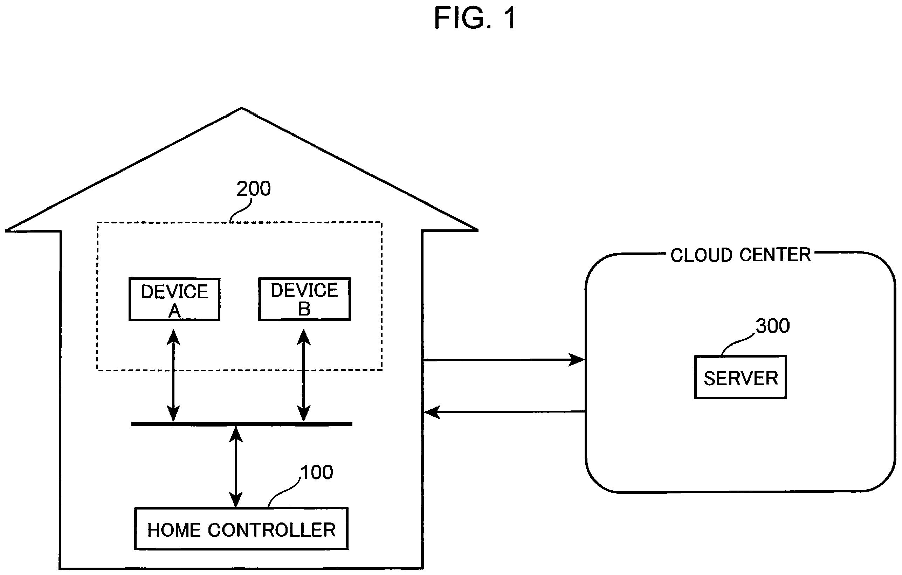

Fig. 1 is a diagram showing an overall configuration of a home control system to which a home controller according to the embodiment is applied. As shown in Fig. 1, the home control system includes a home controller 100, a device 200 (an example of a target device), and a server 300.

The home controller 100 and one or more devices 200 (for example, a device A 200 and a device B 200) are disposed in a house. The server 300 is disposed in a cloud center. The home controller 100, the device 200, and the server 300 communicate with each other via a wired or wireless network. For example, the device 200 and the home controller 100 are communicably connected to each other via a wireless or wired in-home network, and the home controller 100, the device 200, and the server 300 are communicably connected to each other via an external network such as the Internet.

The home controller 100 is not necessarily disposed in the house, and may be disposed outside the house. In this case, a user controls the one or more devices 200 from a location away from the home.

A portable information terminal such as a smartphone or a tablet terminal may be adopted as the home controller 100. It should be noted, however, that the smartphone and the tablet terminal are merely exemplary, and a portable information terminal of a button type such as a cellular phone may be adopted as the home controller 100.

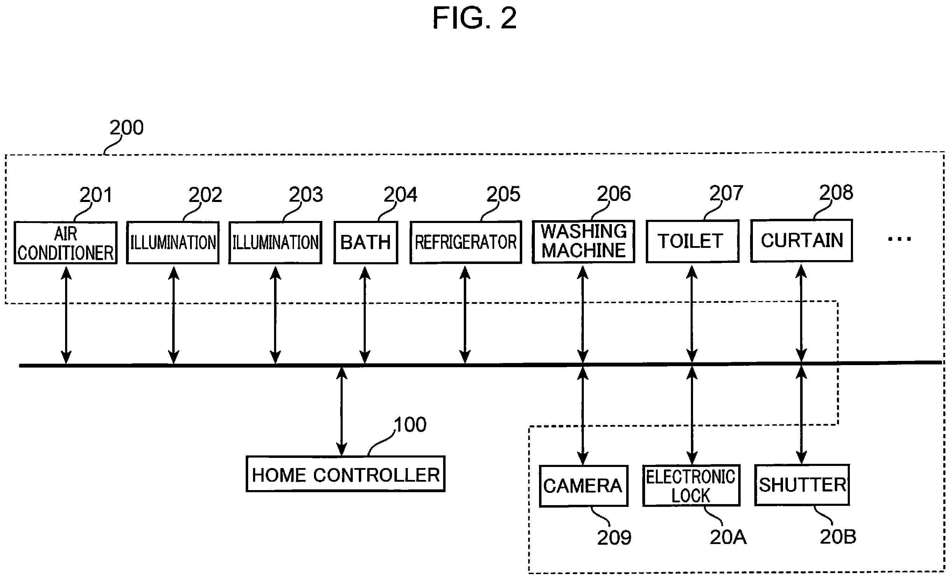

Fig. 2 is a diagram showing the main devices 200 to be controlled by the home controller 100. The home controller 100 controls the devices 200 such as an air conditioning apparatus (hereinafter called "air conditioner") 201, illumination devices 202 and 203, a bath 204, a refrigerator 205, a washing machine 206, a toilet 207, and a curtain 208. The devices 200 to be controlled by the home controller 100 may include a plurality of devices 200 of the same type such as the illumination devices 202 and 203.

The devices 200 such as the air conditioner 201 shown in Fig. 2 are merely exemplary, and a television set (hereinafter called "television"), a Blu-ray recorder, an audio device, and so forth may be adopted as the devices 200. That is, any electrical device that functions to communicate with the home controller 100 may be adopted as the device 200. In Fig. 2, electrical devices for use in ordinary households are shown as the devices 200. However, the embodiment is not limited thereto, and office devices for use in offices or the like may be adopted as the devices 200. Examples of the office devices include a printer, a personal computer, a scanner, and a copy machine.

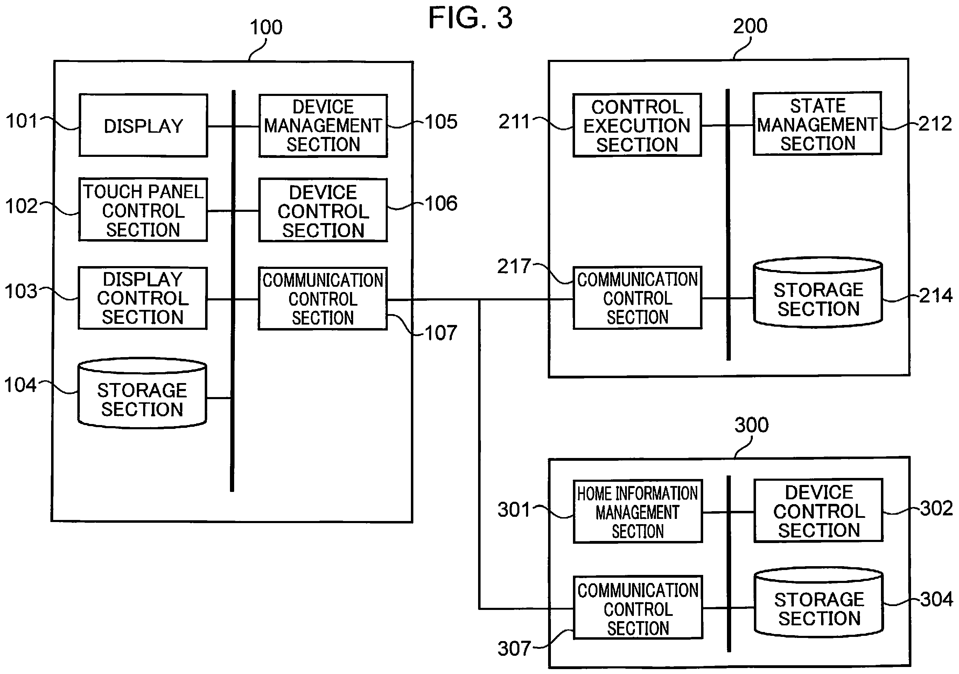

Fig. 3 is a block diagram showing the configuration of the home controller 100, the device 200, and the server 300. As shown in Fig. 3, the home controller 100 includes a display 101, a touch panel control section 102, a display control section 103, a storage section 104, a device management section 105, a device control section 106, and a communication control section 107.

The display 101 is formed from a touch panel display, for example, and displays a user interface that allows the user to operate the home controller 100. The user can input various operations to the home controller 100 by contacting the display 101.

The touch panel control section 102 recognizes an operation performed on the display 101 by the user, interprets the content of the operation, and notifies the other constituent elements of the content of the operation. For example, if an object is displayed at a position on the display 101 tapped on by the user, the touch panel control section 102 determines that the object is selected by the user. A variety of GUI parts that receive a user operation such as buttons are adopted as the object.

The display control section 103 generates a GUI (Graphical User Interface) of the home controller 100, and causes the display 101 to display the GUI. The storage section 104 stores information that is necessary for operation of the home controller 100 such as a device list managed by the device management section 105.

The device management section 105 manages the control target devices 200 using the device list stored in the storage section 104. In addition, the device management section 105 detects a device 200 when the device 200 is connected to the in-home network. Further, the device management section 105 acquires home information 1300 to be discussed later from the server 300, stores the acquired home information 1300 in the storage section 104, and manages the home information 1300. The device control section 106 issues a control command for the devices 200. The communication control section 107 controls communication between the home controller 100 and the devices 200 and communication between the home controller 100 and the server 300. In addition, the communication control section 107 transmits a variety of data to the devices 200 or the server 300 upon receiving a request to transmit such data from other blocks, and receives data transmitted from the devices 200 or the server 300 to deliver the data to the relevant block.

The display 101 may be a normal display rather than a touch panel display. In this case, the user may use an external input device such as a mouse (not shown) to input an instruction to select an object by moving a pointer displayed on the display 101 and clicking on a desired object. That is, in the embodiment, a series of operations performed by the user by contacting the display 101 may be replaced with operations of moving a pointer and clicking using an external input device such as a mouse.

As shown in Fig. 3, the device 200 includes a control execution section 211, a state management section 212, a storage section 214, and a communication control section 217. The control execution section 211 receives a control command from the home controller 100 or the server 300, and controls the device 200 in accordance with the received control command. The content of control of the device 200 performed by the control execution section 211 differs in accordance with the type of the device 200. For example, if the device 200 is an illumination device, the control execution section 211 turns on and off the illumination device. In addition, the control execution section 211 transmits the result of execution of the control command and the state of the device 200 to the home controller 100 or the server 300.

The state management section 212 manages the state of the device 200. The content of management of the device 200 performed by the state management section 212 differs in accordance with the type of the device 200. For example, if the device 200 is an illumination device, the state management section 212 manages whether the illumination device is currently turned on or turned off. The storage section 214 stores information related to the state of the device 200 managed by the state management section 212. The communication control section 217 controls communication between the device 200 and the home controller 100 and communication between the device 200 and the server 300. In addition, the communication control section 217 transmits a variety of data to the home controller 100 or the server 300 upon receiving a request to transmit such data from other blocks, and receives data transmitted from the home controller 100 or the server 300 to deliver the data to the relevant block.

As shown in Fig. 3, the server 300 includes a home information management section 301, a device control section 302, a storage section 304, and a communication control section 307. The home information management section 301 manages the home information 1300 to be discussed later for each house or each user account. In addition, the home information management section 301 transmits the home information 1300 to the home controller 100 in response to a request from the home controller 100. Further, the home information management section 301 acquires log information related to the use history of the device 200 and information related to the state of the device 200 from the device 200, stores the acquired information in the storage section 304, and manages the information.

The device control section 302 transmits a control command to the device 200 in response to a request from the home controller 100. The storage section 304 stores information that is necessary for operation of the server 300 such as the home information 1300 and the information related to the state of the device 200 managed by the home information management section 301. The communication control section 307 controls communication between the server 300 and the home controller 100 and communication between the server 300 and the device 200 as with the communication control section 107. In addition, the communication control section 307 transmits a variety of data to the home controller 100 or the device 200 upon receiving a request to transmit such data from other blocks, and receives data transmitted from the home controller 100 or the device 200 to deliver the data to the relevant block.

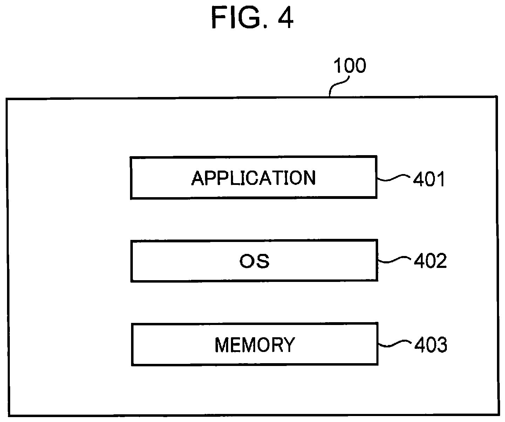

Fig. 4 is a diagram showing a configuration example of the form of implementation of the home controller 100. As shown in Fig. 4, the home controller 100 includes an application 401, an OS (Operating System) 402, a memory 403, and other hardware (not shown).

The application 401 is application software for causing the portable information terminal to function as the home controller 100, and is executed by a processor of the home controller 100. The home controller 100 may read the application 401 from a computer readable recording medium to implement the application 401, or may download the application 401 from a network to implement the application 401. The OS 402 is basic software of the portable information terminal, and is executed by the processor of the home controller 100. The memory 403 is formed from a storage device such as a RAM and a ROM of the home controller 100, and stores a group of data included in the application 401. The processor of the home controller 100 executes the application 401 to embody the functions of the touch panel control section 102, the display control section 103, the storage section 104, the device management section 105, the device control section 106, and the communication control section 107 shown in Fig. 3. In addition, the processor of the home controller 100 executes the application 401 to cause the memory 403 to function as the storage section 104.

It should be noted, however, that in the embodiment, the home controller 100 may be implemented by the application 401 alone, may be implemented by the application 401 and the OS 402, may be implemented by the application 401, the OS 402, and the memory 403, or may be implemented by the application 401, the OS 402, the memory 403, and other hardware (not shown). In any embodiment, the home controller 100 according to the embodiment can be embodied. In the embodiment, the processor and the storage device forming the portable information terminal, for example, form a computer. One of a CPU, an FPGA, and an ASIC or a combination of two or more of these may be adopted as the processor. One of a ROM, a RAM, and a hard disk or a combination of two or more of these may be adopted as the storage device.

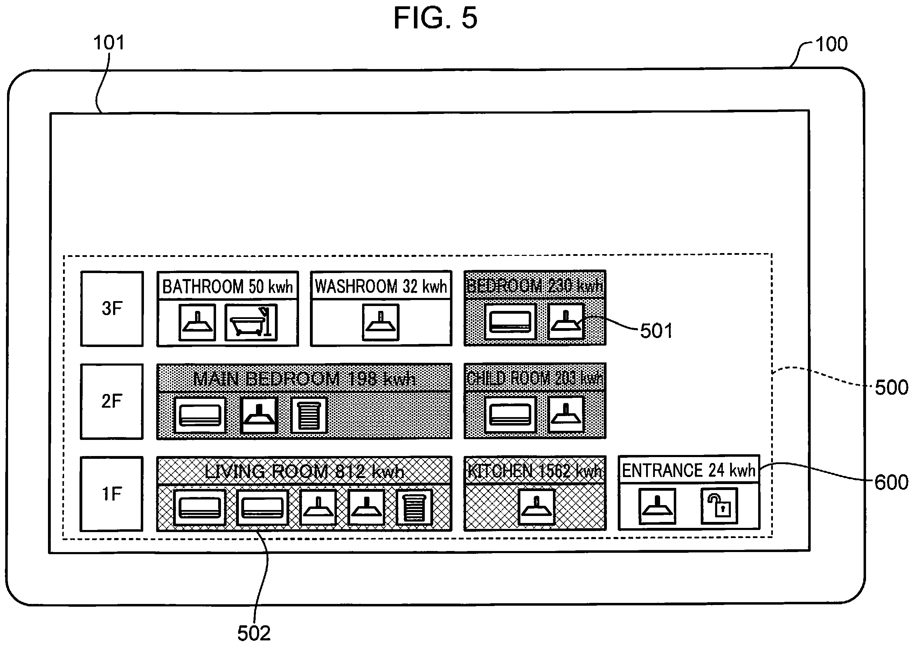

Fig. 5 is a diagram showing an example of a basic screen of the home controller 100. As shown in Fig. 5, the basic screen of the home controller 100 displayed on the display 101 includes a floor plan 500. The floor plan 500 is a diagram that schematically shows an arrangement of one or more rooms that constitute each floor of a house. The floor plan 500 includes room icons 502 representing rooms. The room icons 502 schematically represent rooms and are depicted by square blocks. In the floor plan 500, respective room icons 502 representing respective rooms that constitute the respective floors are arranged in a matrix pattern.

As shown in Fig. 5, the room icon 502 includes a device icon 501 and a display field 600 for displaying power consumption of a room. The device icon 501 schematically represents a corresponding device 200. In the example shown in Fig. 5, the device icons 501 are arranged in each room icon 502 in a number corresponding to the number of devices 200 installed in a room that corresponds to the room icon 502. As shown in Fig. 5, on a basic screen according to the present embodiment, the device icons 501 are displayed on the display 101 in room units.

The room icons 502 are depicted by square blocks. The room icons 502 are labeled with a name or an abbreviated name of a room. In addition, floor numbers are displayed in a vertical direction, and room icons 502 representing rooms that constitute a same floor are arranged in horizontal rows.

In the example shown in Fig. 5, since the house is constituted by three floors from the 1st to 3rd floor, room icons 502 representing rooms that constitute the 3rd floor are arranged in a first row, room icons 502 representing rooms that constitute the 2nd floor are arranged in a second row, and room icons 502 representing rooms that constitute the 1st floor are arranged in a third row. Furthermore, floor numbers such as 1F, 2F, and 3F are presented at a left end of each row.

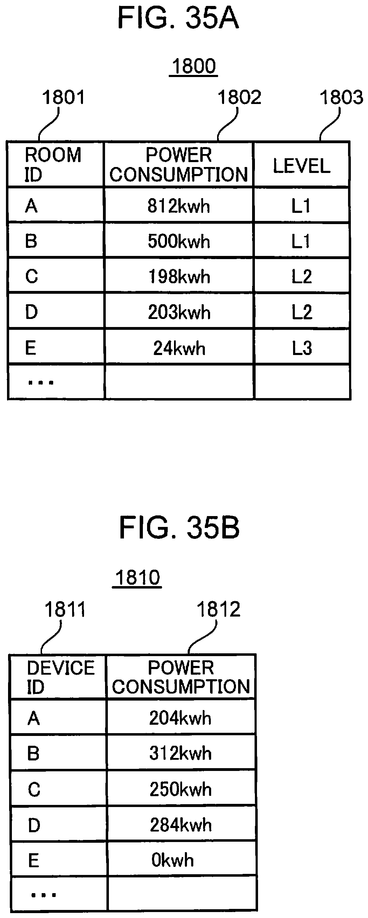

The display control section 103 displays power consumption of a room in the display field 600 in the room icon 502 on the basis of power consumption information 1800 (Fig.35A) to be described later. In Fig. 5, the display field 600 of the room icon 502 representing a bathroom displays 50 kwh. The display field 600 of the room icon 502 representing a washroom displays 32 kwh. The display field 600 of the room icon 502 representing a bedroom displays 230 kwh. The display field 600 of the room icon 502 representing a main bedroom displays 198 kwh. The display field 600 of the room icon 502 representing a child room displays 203 kwh. The display field 600 of the room icon 502 representing a living room displays 812 kwh. The display field 600 of the room icon 502 representing a kitchen displays 1562 kwh. The display field 600 of the room icon 502 representing an entrance displays 24 kwh.

The basic screen shown in Fig. 5 displays the respective room icons 502 in different colors on the basis of the power consumption information 1800 (Fig. 35A). In the example shown in Fig. 5, the display control section 103 displays the respective room icons 502 representing the living room and the kitchen in a different first display color (for example, red). Accordingly, it is displayed that power consumption by the devices 200 installed in the living room and the kitchen is at level L1 (where TH1 ≤ L1). A threshold TH1 is set to, for example, 500 kWh.

In addition, the display control section 103 displays the respective room icons 502 representing the main bedroom, the child room, and the bedroom in a further different second display color (for example, orange). Accordingly, it is displayed that power consumption by the devices 200 installed in the main bedroom, the child room, and the bedroom is at level L2 (where TH2 ≤ L2 < TH1). A threshold TH2 is set to, for example, 100 kWh.

Furthermore, the display control section 103 displays the respective room icons 502 representing the bathroom, the washroom, and the entrance in a default color. Accordingly, it is displayed that power consumption by the devices 200 installed in the bathroom, the washroom, and the entrance is at level L3 (where 0 ≤ L3 < TH2).

By changing display colors of the room icons 502 according to power consumption as on the basic screen shown in Fig. 5, a user can recognize whether power consumption of each room is high or low at a glance. Moreover, in Fig. 5, the thresholds TH1 and TH2 are set to values common to the respective rooms. Alternatively, the thresholds TH1 and TH2 may be values that are individually set for each room. For example, the thresholds TH1 and TH2 for a room in which a large number of devices 200 are installed may be increased while the thresholds TH1 and TH2 for a room in which a small number of devices 200 are installed may be reduced.

In addition, the room icons 502 do not have the same size on the basic screen shown in Fig. 5. In other words, the display control section 103 changes a size of a square block depicting the room icon 502 according to the number of devices 200 installed in the room. The example shown in Fig. 5 uses room icons 502 of two sizes including the room icons 502 representing the "bathroom", the "washroom", the "bedroom", the "child room", the "kitchen", and the "entrance" where the number of devices 200 installed in the room is two or less and the room icons 502 representing the "main bedroom" and the "living room" where the number of devices 200 installed in the room is three or more.

Alternatively, only one device icon 501 representing the devices 200 may be arranged in the respective room icons 502. In this case, the device control section 106 may be configured to be capable of simultaneously controlling a plurality of the devices 200 by operations performed on the single device icon 501 representing the devices 200.

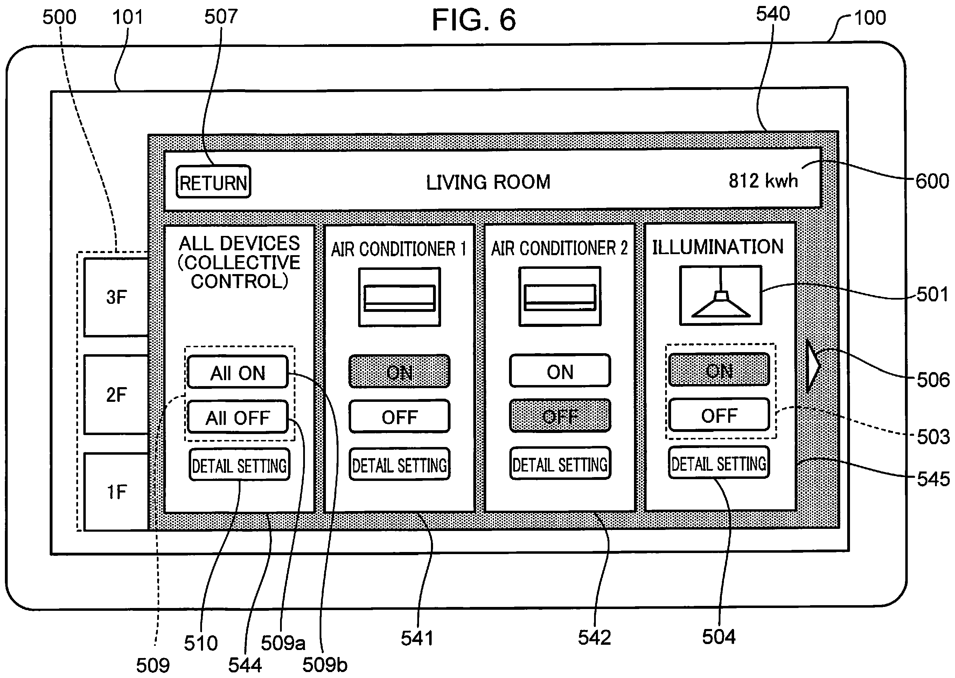

Fig. 6 is a diagram showing an example of a room screen 540 displayed on the display 101 of the home controller 100. When the user selects the device icon 501 included in the room icon 502 on the basic screen shown in Fig. 5, the touch panel control section 102 senses the selection thereof. As a result, the display control section 103 displays a room screen 540 representing a room corresponding to the selected device icon 501 on the display 101 so as to overlap with the floor plan 500.

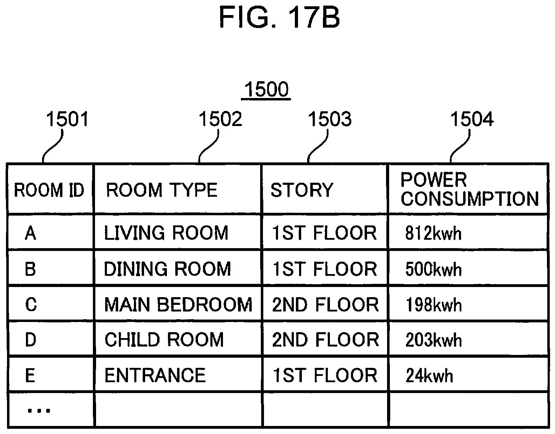

The room screen 540 includes the display field 600 for displaying power consumption of the room, the next page button 506, the return button 507, and operation screens 541, 542, 544, and 545. A name or an abbreviated name of the room (the living room in Fig. 6) is described at center in an upper part of the room screen 540. Based on power consumption 1504 in room information 1500 (Fig. 17B), the display control section 103 displays the power consumption of the room (the living room in Fig. 6) in the display field 600.

When the touch panel control section 102 senses the selection of the next page button 506 by the user, the display control section 103 scrolls the operation screens 541, 542, 544, and 545 and displays an operation screen for controlling the other devices 200 installed in the room on the display 101.

The operation screen 544 at the left end in Fig. 6 is an operation screen for controlling settings of all of the devices 200 that are installed in the room. The operation screen 544 includes a description that reads "all devices (collective control)". The operation screen 544 will be described later.

The operation screens 541, 542, and 545 that are arranged to the right of the operation screen 544 are screens to be operated in order to control the devices 200. A name or an abbreviated name of a corresponding device is described at center in an upper part of the operation screens 541, 542, and 545. In Fig. 6, the operation screen 541 that is immediately adjacent to the right of the operation screen 544 is an operation screen for controlling a first air conditioner 201 installed in the room. The operation screen 541 includes a description that reads "air conditioner 1".

The operation screen 542 at the second from the right in Fig. 6 is an operation screen for controlling a second air conditioner 201 installed in the room. This operation screen 542 includes a description that reads "air conditioner 2". The operation screen 545 at the right end in Fig. 6 is an operation screen for controlling the illumination device 202 installed in the room. The operation screen 545 includes a description that reads "illumination".

Among the device icons 501 included in the room icon 502 representing the living room shown in Fig. 5, the first air conditioner corresponds to the device icon 501 representing an air conditioner at a left end, the second air conditioner corresponds to the device icon 501 representing an air conditioner that is second from left, and the illumination device corresponds to the device icon 501 representing an illumination device that is third from left. Fig. 6 shows an example where the device icon 501 representing the air conditioner at the left end is selected by the user among device icons 501 included in the room icon 502 representing the living room on the basic screen shown in Fig. 5.

The respective operation screens 541, 542, and 545 for controlling the first air conditioner 201, the second air conditioner 201, and the illumination device 202 include the device icon 501, a simple control button 503, and a detail setting button 504. The simple control button 503 is for controlling on/off states of a power supply of the device 200 and includes an "on" button and an "off' button.

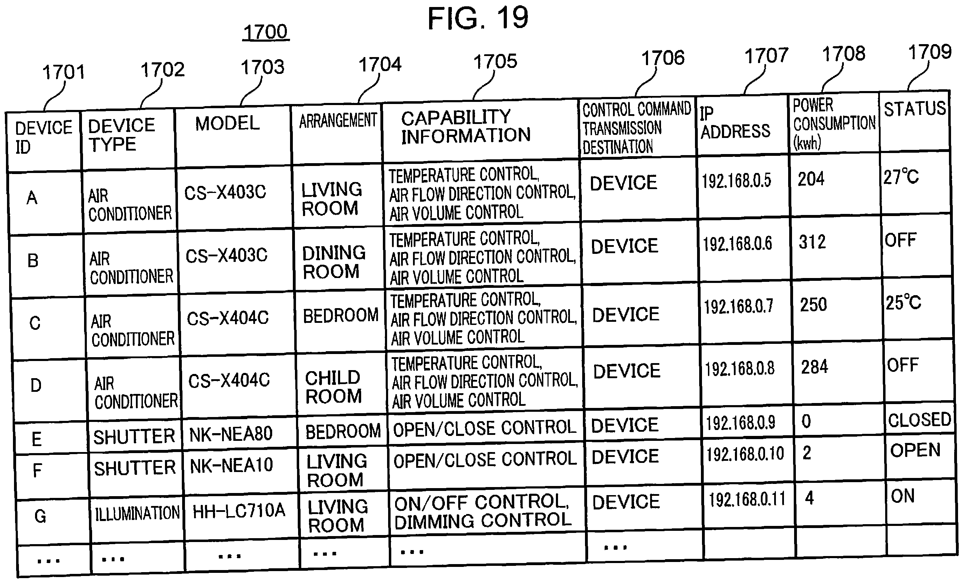

The display control section 103 displays the "on" button or the "off' button of the simple control button 503 in a different color in accordance with a status 1709 of a device list 1700 (Fig. 19 to be described later) that is managed by the device management section 105. Fig. 6 shows that the first air conditioner is turned on, the second air conditioner is turned off, and the illumination device is turned on. Accordingly, the user can readily learn the status of the respective devices 200 that are installed in the room (the living room in Fig. 6).

When the user selects the simple control button 503 of any of the operation screens 541, 542, and 545 in a state where the operation screens 541, 542, and 545 are displayed as shown in Fig. 6, the touch panel control section 102 senses the selection thereof. As a result, the device control section 106 generates a control command for controlling on/off states of the power supply of the device 200 corresponding to the selected simple control button 503. The device control section 106 transmits the generated control command to the relevant device 200 via the communication control section 107 and the network. In addition, in accordance with a selection of the simple control button 503 by the user, the display control section 103 changes display states of the "on" button and the "off' button.

In Fig. 6, for example, when the user selects the "off button of the simple control button 503 of the operation screen 541 (an example of the first operation screen) of the first air conditioner (an example of the first target device) corresponding to the device icon 501 at the left end that has been selected on the basic screen shown in Fig. 5, the touch panel control section 102 senses the selection thereof. As a result, the device control section 106 generates a control command (an example of the first control command) for turning off the power supply of the first air conditioner in the living room. The device control section 106 transmits the generated control command to the first air conditioner in the living room via the communication control section 107 and the network. In addition, the display control section 103 restores the "on" button of the simple control button 503 of the operation screen 541 of the first air conditioner to a default color and changes the color of the "off' button.

In Fig. 6, for example, when the user selects the "on" button of the simple control button 503 of the operation screen 542 (an example of the second operation screen) of the second air conditioner (an example of the second target device) which differs from a device corresponding to the device icon 501 at the left end that has been selected on the basic screen shown in Fig. 5, the touch panel control section 102 senses the selection thereof. As a result, the device control section 106 generates a control command (an example of the third control command) for turning on the power supply of the second air conditioner in the living room. The device control section 106 transmits the generated control command to the second air conditioner in the living room via the communication control section 107 and the network. In addition, the display control section 103 restores the "off' button of the simple control button 503 of the operation screen 542 of the second air conditioner to a default color and changes the color of the "on" button.

In Fig. 6, for example, when the user selects the "off' button of the simple control button 503 of the operation screen 545 (an example of the second operation screen) of the illumination device (an example of the second target device) which differs from a device corresponding to the device icon 501 at the left end that has been selected on the basic screen shown in Fig. 5, the touch panel control section 102 senses the selection thereof. As a result, the device control section 106 generates a control command (an example of the third control command) for turning off the power supply of the illumination device in the living room. The device control section 106 transmits the generated control command to the illumination device in the living room via the communication control section 107 and the network. In addition, the display control section 103 restores the "on" button of the simple control button 503 of the operation screen 545 of the illumination device to a default color and changes the color of the "off' button.

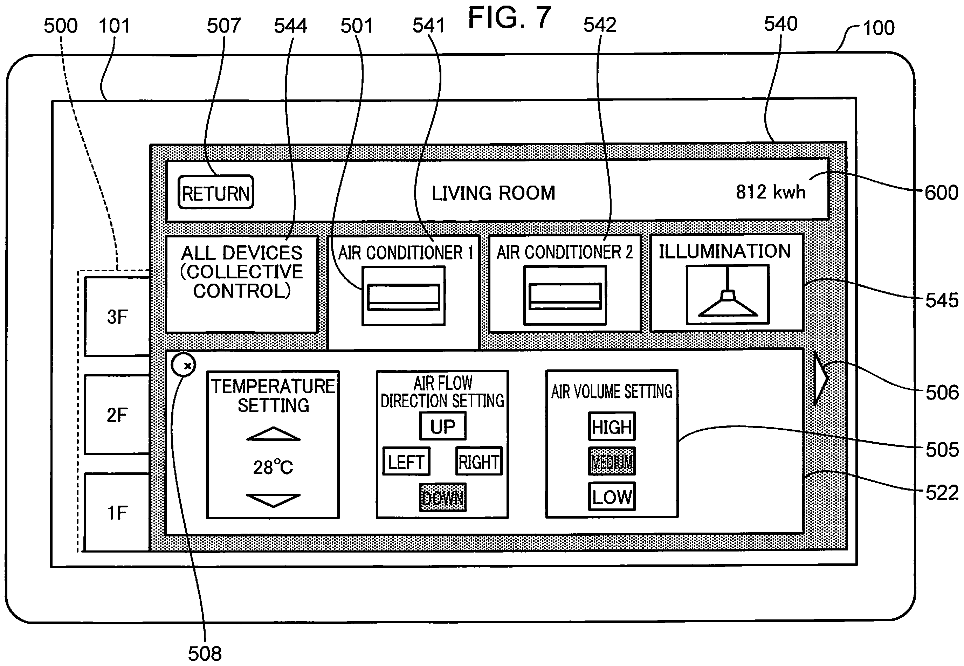

Fig. 7 is a diagram showing an example of the detail control screen 522 displayed on the display 101 of the home controller 100. When the user selects the detail setting button 504 of any of the operation screens 541, 542, and 545 in a state where the operation screens 541, 542, and 545 are displayed on the display 101 as shown in Fig. 6, the touch panel control section 102 senses the selection thereof. As a result, the display control section 103 displays the detail control screen 522 of a device 200 corresponding to the selected operation screen 541, 542, or 545 on the display 101 so as to overlap with the floor plan 500.

In Fig. 6, for example, when the user selects the detail setting button 504 (an example of the first operation button) of the operation screen 541 of the first air conditioner corresponding to the device icon 501 at the left end that has been selected on the basic screen shown in Fig. 5, the touch panel control section 102 senses the selection thereof. As a result, as shown in Fig. 7, the display control section 103 displays the detail control screen 522 (an example of the first extended operation screen) of the first air conditioner on the display 101.

As shown in Fig. 7, the detail control screen 522 includes the detail control button 505 and a close button 508. The detail control button 505 is a button for controlling a state of the device 200 in detail. In Fig. 7, since the device 200 is an air conditioner, the detail control screen 522 includes a detail control button 505 for setting temperature, a detail control button 505 for setting air flow direction, and a detail control button 505 for setting air volume.

In addition, the display control section 103 controls a display state of the detail control buttons 505 according to a status of the device 200 that is managed by the device management section 105. Fig. 7 shows that the first air conditioner in the living room is set to a temperature of "28°C", an air flow direction of "downward", and an air volume of "medium". Accordingly, the user can readily learn a detailed current status of the first air conditioner.

When the user selects the detail control button 505 in a state where the detail control screen 522 is displayed as shown in Fig. 7, the touch panel control section 102 senses the selection thereof. Accordingly, the device control section 106 generates a control command (an example of the second control command) in accordance with the detail control button 505 selected by the user. In addition, the device control section 106 transmits the generated control command to the first air conditioner in the living room via the communication control section 107 and the network. The display control section 103 changes a display state of the detail control button 505 in accordance with the selection of the detail control button 505 by the user.

In addition, in Fig. 7, for example, when the user selects an upward arrow button of the detail control button 505 for setting temperature, the touch panel control section 102 senses the selection thereof. As a result, the device control section 106 generates a control command (an example of the second control command) for raising the temperature setting by 1°C. The device control section 106 transmits the generated control command to the first air conditioner in the living room via the communication control section 107 and the network. The display control section 103 changes a display temperature of the detail control button 505 for temperature setting to 29°C.

Furthermore, in Fig. 7, for example, when the user selects an "upward" button of the detail control button 505 for setting air flow direction, the touch panel control section 102 senses the selection thereof. As a result, the device control section 106 generates a control command (an example of the second control command) for changing the air flow direction to upward. The device control section 106 transmits the generated control command to the first air conditioner in the living room via the communication control section 107 and the network. The display control section 103 restores the "downward" button of the detail control button 505 for setting air flow direction to the default color and changes the color of the "upward" button.

In addition, in Fig. 7, for example, when the user selects a "low" button of the detail control button 505 for setting air volume, the touch panel control section 102 senses the selection thereof. As a result, the device control section 106 generates a control command for changing the air volume to low. The device control section 106 transmits the generated control command (an example of the second control command) to the first air conditioner in the living room via the communication control section 107 and the network. The display control section 103 restores the "medium" button of the detail control button 505 for setting air volume to the default color and changes the color of the "low" button.

In Fig. 7, for example, when the user selects the close button 508, the touch panel control section 102 senses the selection thereof. As a result, the display control section 103 restores the display state of the display 101 and displays the room screen 540 on the display 101 as shown in Fig. 6.

As shown in Fig. 7, the display control section 103 displays the detail control screen 522 and the operation screen 541 of the first air conditioner so as to come into contact with each other. In addition, the display control section 103 displays the detail control screen 522, the operation screen 544 of all devices, the operation screen 542 of the second air conditioner, and the operation screen 545 of the illumination device so as to be separated from one another. According to this display, the user can readily understand that the detail control screen 522 shown in Fig. 7 is the detail control screen 522 of the first air conditioner.

Subsequently, in the display state shown in Fig. 7, for example, when the user selects the operation screen 542 or 545 other than the operation screen 541 of the first air conditioner, the touch panel control section 102 senses the selection thereof. As a result, the display control section 103 displays the detail control screen 522 of the corresponding device 200 on the display 101. Moreover, a case where the user selects the operation screen 544 for all devices in the display state shown in Fig. 7 will be described later.

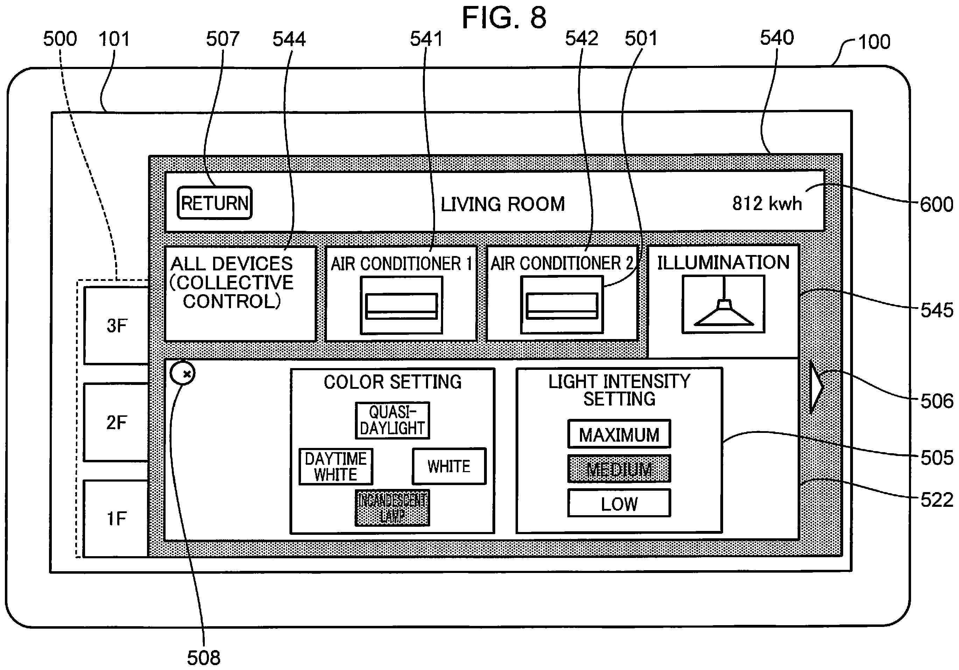

Fig. 8 is a diagram showing an example of a detail control screen of another device displayed on the display 101 of the home controller 100.

In a state where the room screen 540 is displayed on the display 101 as shown in Fig. 6, when the user selects the detail setting button 504 (an example of the second operation button) of the operation screen 545 (an example of the second operation screen) of the illumination device which differs from a device corresponding to the device icon 501 at the left end that has been selected on the basic screen shown in Fig. 5, the touch panel control section 102 senses the selection thereof. As a result, the display control section 103 displays the detail control screen 522 (an example of the second extended operation screen) shown in Fig. 8 on the display 101 so as to overlap with the floor plan 500.

Alternatively, in the display state shown in Fig. 7, for example, when the user selects the operation screen 545 of the illumination device, the touch panel control section 102 senses the selection thereof. As a result, the display control section 103 displays the detail control screen 522 shown in Fig. 8 on the display 101 so as to overlap with the floor plan 500.

In Fig. 8, since the device 200 is the illumination device, the detail control screen 522 includes the detail control button 505 for setting color and the detail control button 505 for setting light intensity. The detail control button 505 for setting color includes a "quasi-daylight" button, a "daytime white" button, a "white" button, and an "incandescent lamp" button. The detail control button 505 for setting light intensity includes a "maximum" button, a "medium" button, and a "low" button.

In a similar manner to the case of the detail control screen 522 shown in Fig. 7, the display control section 103 changes display states of the detail control button 505 in accordance with a selection of the detail control button 505 by the user as sensed by the touch panel control section 102. In addition, the device control section 106 generates a control command (an example of the fourth control command) and transmits the generated control command to the illumination device in accordance with the selection of the detail control button 505 by the user as sensed by the touch panel control section 102.

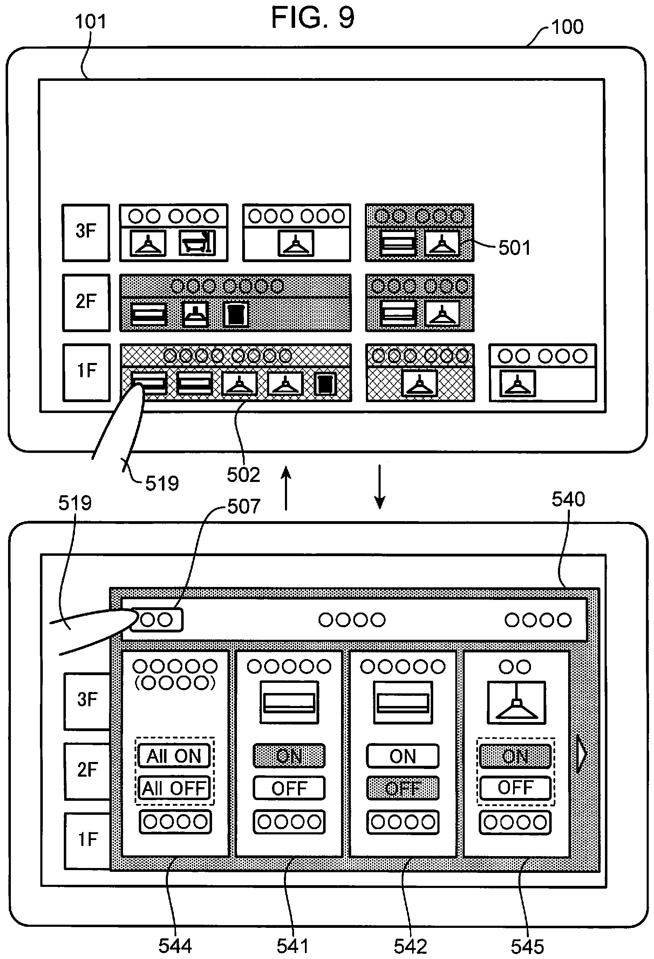

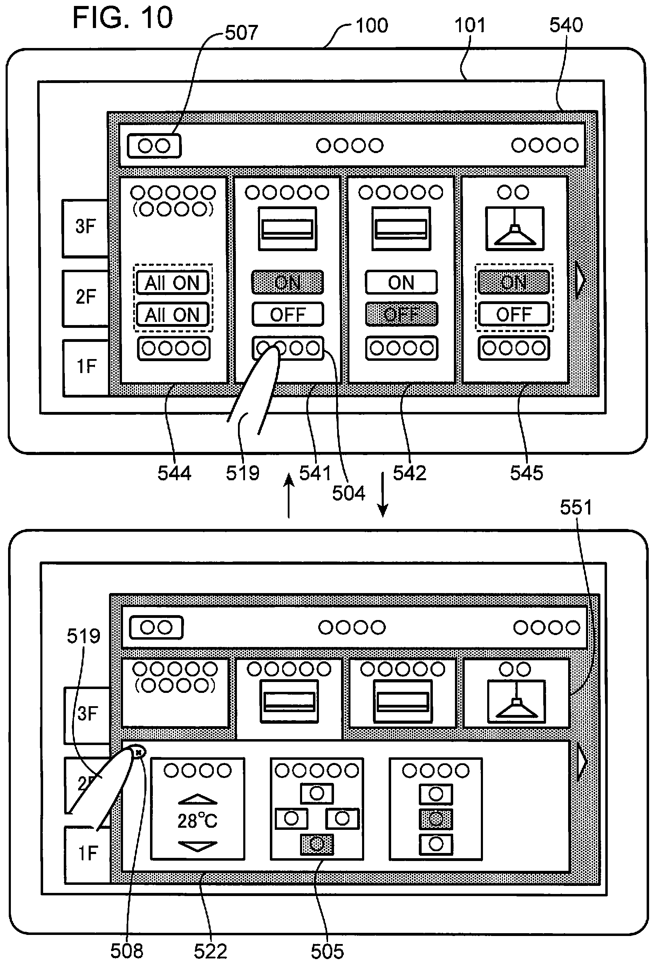

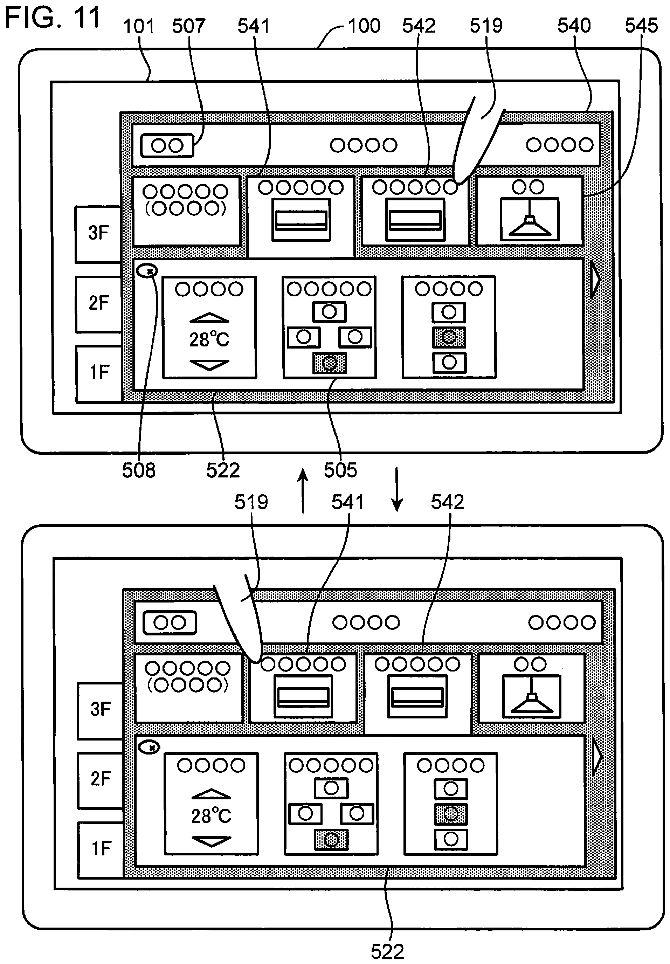

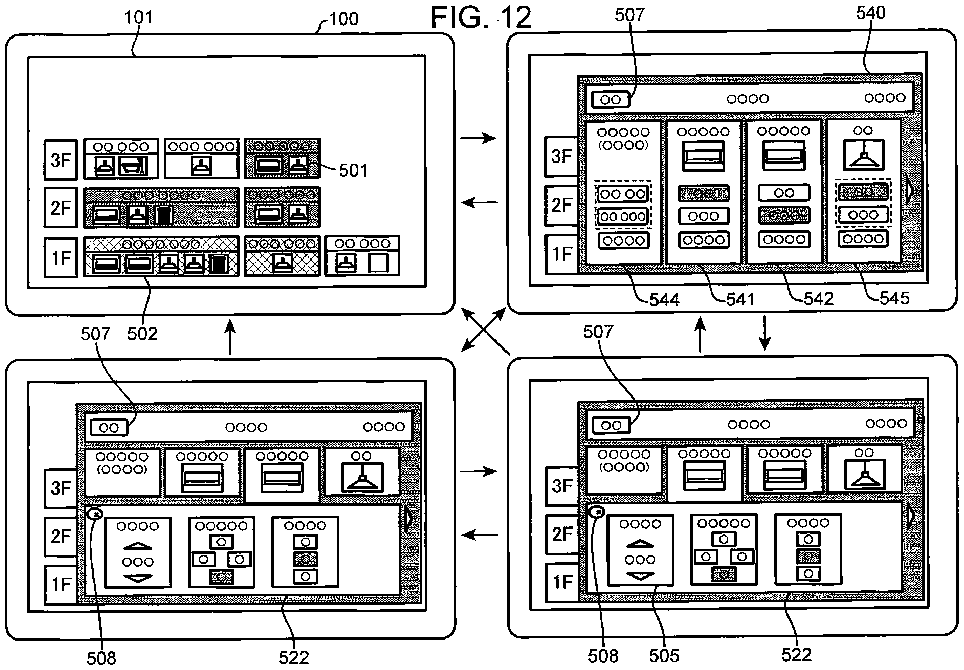

Figs. 9 to 12 are diagrams showing examples of transition of a display screen on the display 101 according to the present embodiment. An upper diagram in Fig. 9 shows the basic screen shown in Fig. 5 and a lower diagram in Fig. 9 shows the display screen shown in Fig. 6. An upper diagram in Fig. 10 shows the display screen shown in Fig. 6 and a lower diagram in Fig. 10 shows the display screen shown in Fig. 7. An upper diagram in Fig. 11 shows the display screen shown in Fig. 7. An upper left diagram in Fig. 12 shows the basic screen shown in Fig. 5, an upper right diagram in Fig. 12 shows the display screen shown in Fig. 6, a lower right diagram in Fig. 12 shows the display screen shown in Fig. 9, and a lower left diagram in Fig. 12 shows the display screen shown in the lower diagram in Fig. 11.

On the basic screen shown in the upper diagram in Fig. 9 (the upper left diagram in Fig. 12), when the user brings a contacting object (for example, a finger of the user) 519 into contact with a device icon 501 (in this case, the device icon 501 representing the air conditioner at the left end in the room icon 502 representing the living room) which represents the device 200 to be controlled, the contact is sensed by the touch panel control section 102. As a result, for example, the display control section 103 displays the room screen 540 of the room in which the device 200 corresponding to the contacted device icon 501 is installed as shown in the lower diagram in Fig. 9 (the upper right diagram in Fig. 12). Accordingly, the display state of the basic screen makes a transition to the display state of the room screen 540.

On the other hand, when the user brings the contacting object 519 into contact with the return button 507 in the display state of the room screen 540 of the living room shown in the lower diagram in Fig. 9 (the upper right diagram in Fig. 12), the contact is sensed by the touch panel control section 102. As a result, as shown in the upper diagram in Fig. 9 (the upper left diagram in Fig. 12), the display control section 103 displays the basic screen on the display 101. Accordingly, the display state of the room screen 540 makes a transition to the display state of the basic screen.

Next, in the display state of the room screen 540 shown in the upper diagram in Fig. 10 (the upper right diagram in Fig. 12), when the user brings the contacting object 519 into contact with the detail setting button 504 (an example of the first operation button) included in the operation screen 541 of the first air conditioner, the contact is sensed by the touch panel control section 102. As a result, as shown in the lower diagram in Fig. 10 (the lower right diagram in Fig. 12), the display control section 103 displays the detail control screen 522 (an example of the first extended operation screen) of the first air conditioner on the display 101. Accordingly, the display state of the room screen 540 makes a transition to the display state of the detail control screen 522.

On the other hand, when the user brings the contacting object 519 into contact with the close button 508 in the display state of the detail control screen 522 shown in the lower diagram in Fig. 10 (the lower right diagram in Fig. 12), the contact is sensed by the touch panel control section 102. As a result, as shown in the upper diagram in Fig. 10 (the upper right diagram in Fig. 12), the display control section 103 displays the room screen 540 on the display 101. Accordingly, the display state of the detail control screen 522 makes a transition to the display state of the room screen 540.

Next, when the user brings the contacting object 519 into contact with the operation screen 542 of the second air conditioner in the display state of the detail control screen 522 of the first air conditioner shown in the upper diagram in Fig. 11 (the lower right diagram in Fig. 12), the contact is sensed by the touch panel control section 102. As a result, as shown in the lower diagram in Fig. 11 (the lower left diagram in Fig. 12), the display control section 103 displays the detail control screen 522 of the second air conditioner on the display 101. Accordingly, the display state of the detail control screen 522 of the first air conditioner makes a transition to the display state of the detail control screen 522 of the second air conditioner.

On the other hand, when the user brings the contacting object 519 into contact with the operation screen 541 of the first air conditioner in the display state of the detail control screen 522 of the second air conditioner shown in the lower diagram in Fig. 11 (the lower left diagram in Fig. 12), the contact is sensed by the touch panel control section 102. As a result, as shown in the upper diagram in Fig. 11 (the lower right diagram in Fig. 12), the display control section 103 displays the detail control screen 522 of the first air conditioner on the display 101. Accordingly, the display state of the detail control screen 522 of the second air conditioner makes a transition to the display state of the detail control screen 522 of the first air conditioner.

Furthermore, when the user brings the contacting object 519 into contact with the return button 507 on the display screen shown in the lower right diagram and the lower left diagram in Fig. 12, the contact is sensed by the touch panel control section 102. As a result, as shown in the upper left diagram in Fig. 12, the display control section 103 displays the basic screen on the display 101. Accordingly, the display state of the detail control screen 522 makes a transition to the display state of the basic screen.

Moreover, in the display state of the room screen 540 shown in the upper right diagram in Fig. 12, when the user brings the contacting object 519 into contact with the detail setting button 504 (an example of the second operation button) included in the operation screen 541 of the second air conditioner, the contact is sensed by the touch panel control section 102. As a result, as shown in the lower left diagram in Fig. 12, the display control section 103 displays the detail control screen 522 (an example of the second extended operation screen) of the second air conditioner on the display 101. Accordingly, the display state of the room screen 540 makes a transition to the display state of the detail control screen 522.

On the other hand, when the user brings the contacting object 519 into contact with the close button 508 in the display state of the detail control screen 522 of the second air conditioner shown in the lower left diagram in Fig. 12, the contact is sensed by the touch panel control section 102. As a result, as shown in the upper right diagram in Fig. 12, the display control section 103 displays the room screen 540 on the display 101. Accordingly, the display state of the detail control screen 522 of the second air conditioner makes a transition to the display state of the room screen 540.

Returning to Fig. 6, the operation screen 544 for controlling all devices 200 will be described. The operation screen 544 includes a collective control button 509 and a collective control setting button 510. The collective control button 509 includes a collective off button 509a and a collective on button 509b.

When the user selects the collective off button 509a in a state where the room screen 540 is displayed as shown in Fig. 6, the touch panel control section 102 senses the selection thereof. As a result, the device control section 106 generates a control command for turning off the power supplies of all of the devices 200 in the room (the living room in Fig. 6). In addition, the device control section 106 transmits the generated control command to all of the devices 200 in the living room via the communication control section 107 and the network. The display control section 103 changes the color of the "off' button of the simple control button 503 of the operation screens 541, 542, and 545 and changes the color of the "on" button to a default color.

When the user selects the collective on button 509b in a state where the room screen 540 is displayed as shown in Fig. 6, the touch panel control section 102 senses the selection thereof. As a result, the device control section 106 generates a control command for turning on the power supplies of all of the devices 200 in the room (the living room in Fig. 6). In addition, the device control section 106 transmits the generated control command to all of the devices 200 in the living room via the communication control section 107 and the network. The display control section 103 changes the color of the "on" button of the simple control button 503 of the operation screens 541, 542, and 545 and changes the color of the "off' button to a default color.

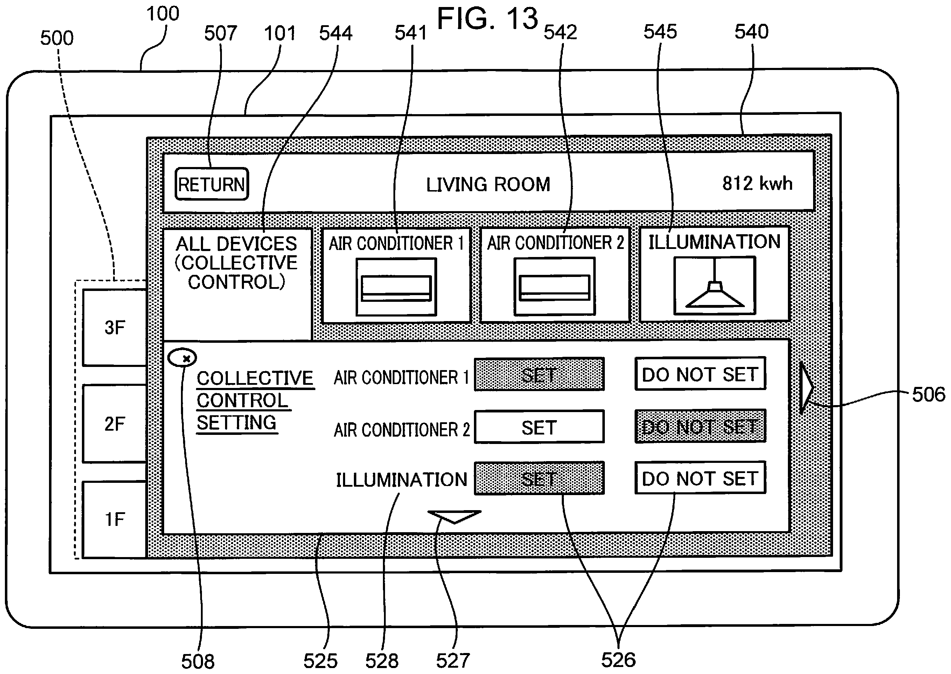

When the user selects the collective control setting button 510 in a state where the room screen 540 is displayed as shown in Fig. 6, the touch panel control section 102 senses the selection thereof. As a result, the display control section 103 displays the collective control setting screen 525 shown in Fig. 13 on the display 101 so as to overlap with lower half portions of the operation screens 541, 542, 544, and 545.

Fig. 13 is a diagram showing an example of the collective control setting screen 525 displayed on the display 101 of the home controller 100. The collective control setting screen 525 includes a setting button 526, a next page button 527, and a device name 528. The setting button 526 includes a "set" button and a "do not set" button. The collective control setting screen 525 includes a description that reads "collective control setting" at a left end thereof and is configured so as to be clearly recognizable as the collective control setting screen 525.

The device name 528 is described to the right of where the description reading "collective control setting" is located. As the device name 528, in the example shown in Fig. 13, "air conditioner 1" that represents the first air conditioner is described in a first row, "air conditioner 2" that represents the second air conditioner is described in a second row, and "illumination" that represents an illumination device is described in a third row. The setting button 526 is arranged in correspondence with each of the device names 528.

As shown in Fig. 13, the display control section 103 displays the collective control setting screen 525 and the operation screen 544 of all devices so as to come into contact with each other. In addition, the display control section 103 displays the collective control setting screen 525 and the respective operation screens 541, 542, and 545 so as to be separated from one another. Due to this display state, the user can readily understand that the collective control setting screen 525 shown in Fig. 13 is a screen that corresponds to the operation screen 544 of all devices.

When the user selects, for example, the "do not set" button of the setting button 526 corresponding to the second air conditioner in a state where the collective control setting screen 525 is displayed, the touch panel control section 102 senses the selection thereof. As a result, the display control section 103 changes the color of the "do not set" button of the setting button 526 corresponding to the second air conditioner as shown in Fig. 13. In addition, the device control section 106 removes the second air conditioner from control targets of the collective control button 509 shown in Fig. 6.

Once the second air conditioner is removed from the control targets of the collective control button 509, even if the touch panel control section 102 senses selection of the collective off button 509a by the user, the device control section 106 does not generate a control command for turning off the power supply of the second air conditioner. In a similar manner, even if the touch panel control section 102 senses selection of the collective on button 509b by the user, the device control section 106 does not generate a control command for turning on the power supply of the second air conditioner.

When the touch panel control section 102 senses selection of the next page button 527 by the user in a state where the collective control setting screen 525 shown in Fig. 13 is displayed, the display control section 103 scrolls the device name 528 and the setting button 526 and displays a screen for controlling setting of the other devices 200 that are installed in the room on the display 101.

As described above, by providing the collective control setting screen 525, a device 200 whose operation is disrupted if a power supply thereof is turned off such as the refrigerator 205 can be excluded from the control targets of the collective control button 509.

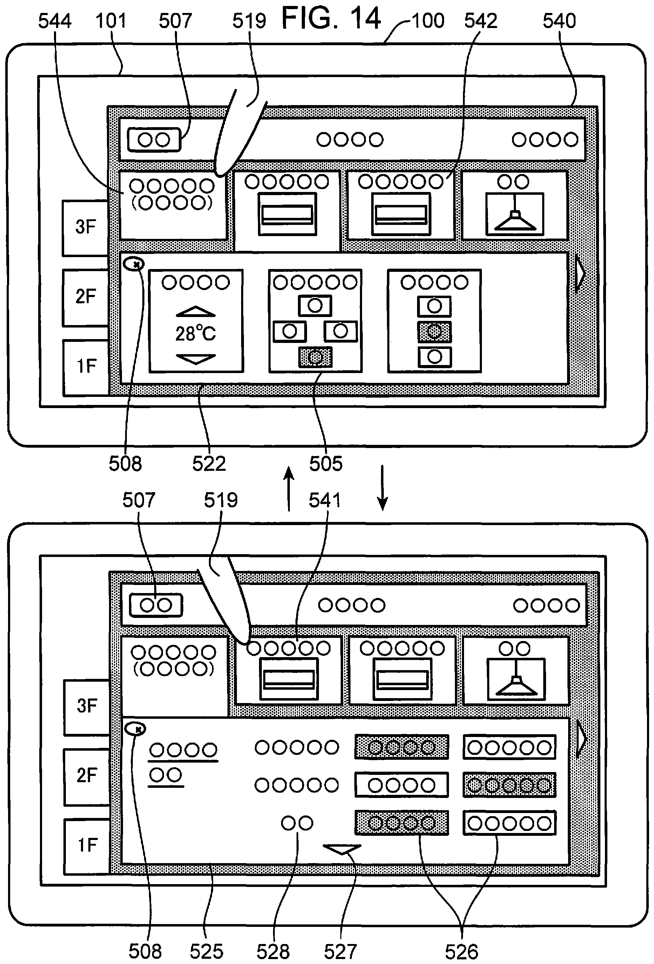

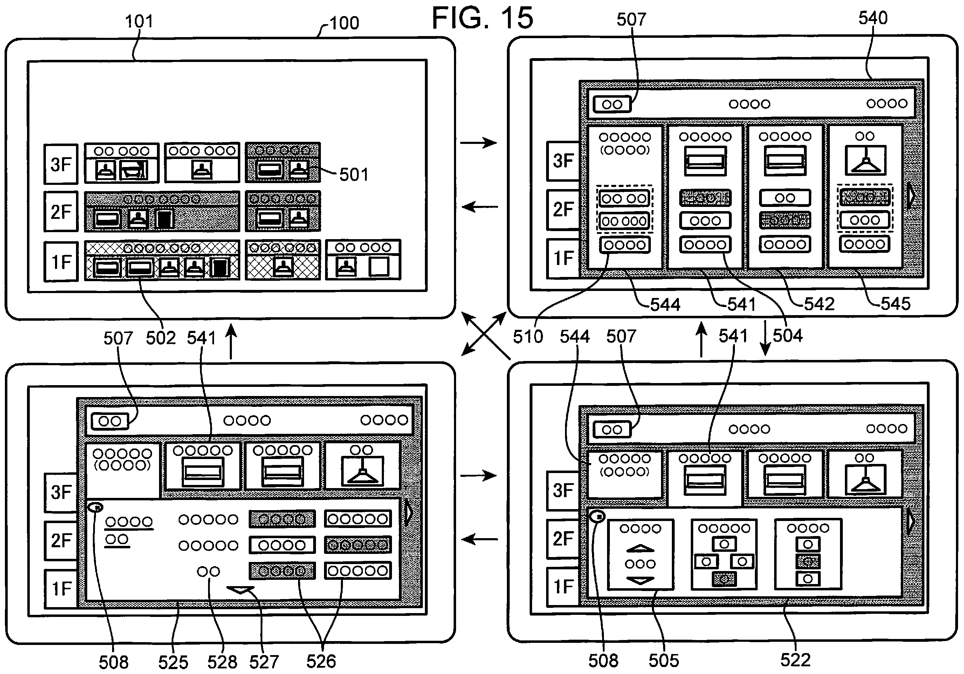

Figs. 14 and 15 are diagrams showing an example of transition of a display screen including the collective control setting screen 525 according to the present embodiment. An upper diagram in Fig. 14 shows the display screen shown in Fig. 7 and a lower diagram in Fig. 14 shows the display screen shown in Fig. 13. An upper left diagram in Fig. 15 shows the basic screen shown in Fig. 5, an upper right diagram in Fig. 15 shows the display screen shown in Fig. 6, a lower right diagram in Fig. 15 shows the display screen shown in Fig. 7, and a lower left diagram in Fig. 15 shows the display screen shown in Fig. 13.

Since the upper left diagram, the upper right diagram, and the lower right diagram in Fig. 15 are the same as the upper left diagram, the upper right diagram, and the lower right diagram in Fig. 12 and make transitions in a similar manner, a detailed description thereof will be omitted.

When the user brings the contacting object 519 into contact with the operation screen 544 of all devices in the display state of the detail control screen 522 of the first air conditioner shown in the upper diagram in Fig. 14 (the lower right diagram in Fig. 15), the contact is sensed by the touch panel control section 102. As a result, as shown in the lower diagram in Fig. 14 (the lower left diagram in Fig. 15), the display control section 103 displays the collective control setting screen 525 on the display 101. Accordingly, the display state of the detail control screen 522 of the first air conditioner makes a transition to the display state of the collective control setting screen 525.

On the other hand, when the user brings the contacting object 519 into contact with the operation screen 541 of the first air conditioner in the display state of the collective control setting screen 525 shown in the lower diagram in Fig. 14 (the lower left diagram in Fig. 15), the contact is sensed by the touch panel control section 102. As a result, as shown in the upper diagram in Fig. 14 (the lower right diagram in Fig. 15), the display control section 103 displays the detail control screen 522 of the first air conditioner on the display 101. Accordingly, the display state of the collective control setting screen 525 makes a transition to the display state of the detail control screen 522 of the first air conditioner.

Furthermore, when the user brings the contacting object 519 into contact with the return button 507 on the display screen shown in the lower left diagram in Fig. 15 (the lower diagram in Fig. 14), the contact is sensed by the touch panel control section 102. As a result, as shown in the upper left diagram in Fig. 15, the display control section 103 displays the basic screen on the display 101. Accordingly, the display state of the collective control setting screen 525 makes a transition to the display state of the basic screen.

Moreover, in the display state of the room screen 540 shown in the upper right diagram of Fig. 15, when the user brings the contacting object 519 into contact with the collective control setting button 510 included in the operation screen 544 for all devices, the touch panel control section 102 senses the selection thereof. As a result, as shown in the lower left diagram in Fig. 15, the display control section 103 displays the collective control setting screen 525 on the display 101. Accordingly, the display state of the room screen 540 makes a transition to the display state of the collective control setting screen 525.

On the other hand, when the user brings the contacting object 519 into contact with the close button 508 in the display state of the collective control setting screen 525 shown in the lower left diagram in Fig. 15, the contact is sensed by the touch panel control section 102. As a result, as shown in the upper right diagram in Fig. 15, the display control section 103 displays the room screen 540 on the display 101. Accordingly, the display state of the collective control setting screen 525 makes a transition to the display state of the room screen 540.

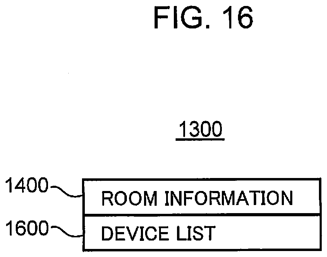

Fig. 16 is a diagram showing a configuration of the home information 1300. The home information 1300 is managed per home by the server 300. Based on the home information 1300 acquired from the server 300, the home controller 100 controls display of the basic screen, the room icon 502, and the like. As shown in Fig. 16, the home information 1300 includes room information 1400 and a device list 1600 that is managed by the server 300.

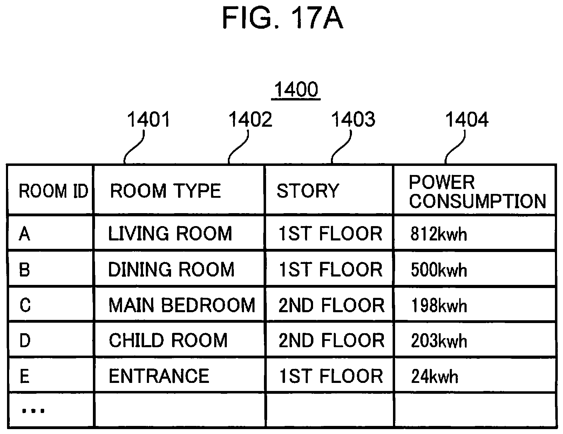

Fig. 17A is a diagram showing a configuration of the room information 1400 that is managed by the server 300. As shown in Fig. 17A, the room information 1400 includes a room ID 1401, a room type 1402, a story 1403, and power consumption 1404. The room ID 1401 is an identifier for identifying a room. The room type 1402 represents a type of a room. The story 1403 indicates which floor a room is on. The power consumption 1404 represents total power consumption by devices 200 installed in a room. For example, Fig. 17A shows that the total power consumption of all of the devices 200 including the air conditioner 201 and the illumination device 202 which are installed in the living room is 812 kwh. A procedure according to which the server 300 acquires power consumption will be described later.

Fig. 17B is a diagram showing a configuration of the room information 1500 that is managed by the home controller 100. As shown in Fig. 17B, the room information 1500 includes a room ID 1501, a room type 1502, a story 1503, and power consumption 1504 in a similar manner to the room information 1400. The home controller 100 acquires the room information 1400 from the server 300 and manages the acquired room information 1400 as the room information 1500. A procedure according to which the home controller 100 acquires power consumption will be described later.

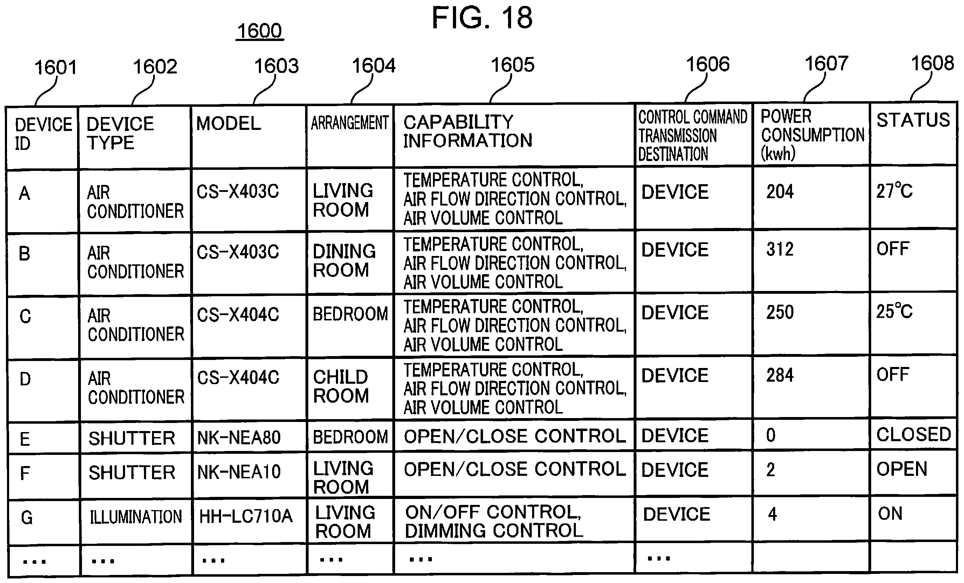

Fig. 18 is a diagram showing a configuration of the device list 1600 that is managed by the server 300. As shown in Fig. 18, the device list 1600 includes a device ID 1601, a device type 1602, a model 1603, an arrangement 1604, capability information 1605, a control command transmission destination 1606, power consumption 1607, and a status 1608.

The device ID 1601 is an identifier of the device 200. The device type 1602 represents a type of the device 200. The model 1603 represents a model of the device 200. The arrangement 1604 represents a room in which the device 200 is installed.

The capability information 1605 represents contents by which the device 200 can be controlled or a state that can be acquired from the device 200. For example, with respect to an air conditioner whose device ID is A, temperature, air flow direction, and air volume can be controlled. The control command transmission destination 1606 represents a transmission destination of a control command for controlling the device 200. For example, with the air conditioner with a device ID of A, since the control command transmission destination 1606 is a device, the control command is directly transmitted from the home controller 100 to the device 200. A control command is a command for operating the device 200 or checking the state of the device 200.

The power consumption 1607 represents power consumption by the device 200. For example, Fig. 18 shows that the power consumption by the device with a device ID of A is 204 kwh. The status 1608 represents a current status of the device 200. For example, Fig. 18 shows that a temperature setting of the air conditioner with a device ID of A is 27°C and that an electric shutter apparatus with a device ID of E is closed.

Moreover, the device list 1600 that is managed by the server may be omitted from the home information 1300. In this case, the home controller 100 may acquire information corresponding to the device type 1602, the model 1603, and the capability information 1605 which are described in the device list 1600 that is managed by the server directly from the device 200.

Fig. 19 is a diagram showing a configuration of the device list 1700 that is managed by the home controller 100. Based on information in this device list 1700, the home controller 100 arranges device icons 501 on the floor plan 500 on the basic screen and controls devices 200.

The device list 1700 includes a device ID 1701, a device type 1702, a model 1703, an arrangement 1704, capability information 1705, a control command transmission destination 1706, an IP address 1707, a power consumption 1708, and a status 1709. The device ID 1701 to the control command transmission destination 1706, the power consumption 1708, and the status 1709 share the same contents as the items with the same names in Fig. 18.

In the device list 1700, contents of the device type 1702, the model 1703, the arrangement 1704, the capability information 1705, the control command transmission destination 1706, the power consumption 1708, and the status 1709 can be acquired by the device management section 105 by having the server 300 transmit the device list 1600. The IP address 1707 is acquired by the device management section 105 from the device 200. However, when the device type 1702, the model 1703, the capability information 1705, the control command transmission destination 1706, the power consumption 1708, and the status 1709 can be directly acquired from the device 200, the device management section 105 may prioritize such contents.

Moreover, as for the control command transmission destination 1706, contents determined in advance by the home controller system may be adopted instead of acquiring the control command transmission destination 1706 from the server 300 or the device 200, the control command transmission destination 1706 may be automatically determined on the basis of a state of the network to which the home controller 100 is connected or the like, or the control command transmission destination 1706 may be set by the user.

As shown in Figs. 17A and 17B, in the present embodiment, room information is managed by both the home controller 100 and the server 300. Alternatively, the room information may be managed by only one of the home controller 100 and the server 300 (for example, the server 300), and the other of the home controller 100 and the server 300 (for example, the home controller 100) may acquire room information from the server 300 as needed.

In a similar manner, as shown in Figs. 18 and 19, in the present embodiment, device lists are managed by both the home controller 100 and the server 300. Alternatively, a device list may be managed by only one of the home controller 100 and the server 300 (for example, the server 300), and the other of the home controller 100 and the server 300 (for example, the home controller 100) may acquire the device list from the server 300 as needed. In this case, the IP address 1707 in the device list 1700 that is managed by the home controller 100 may also be managed by the server 300.

Next, a flow of control of the device 200 by the home controller 100 will be described with reference to the drawings.

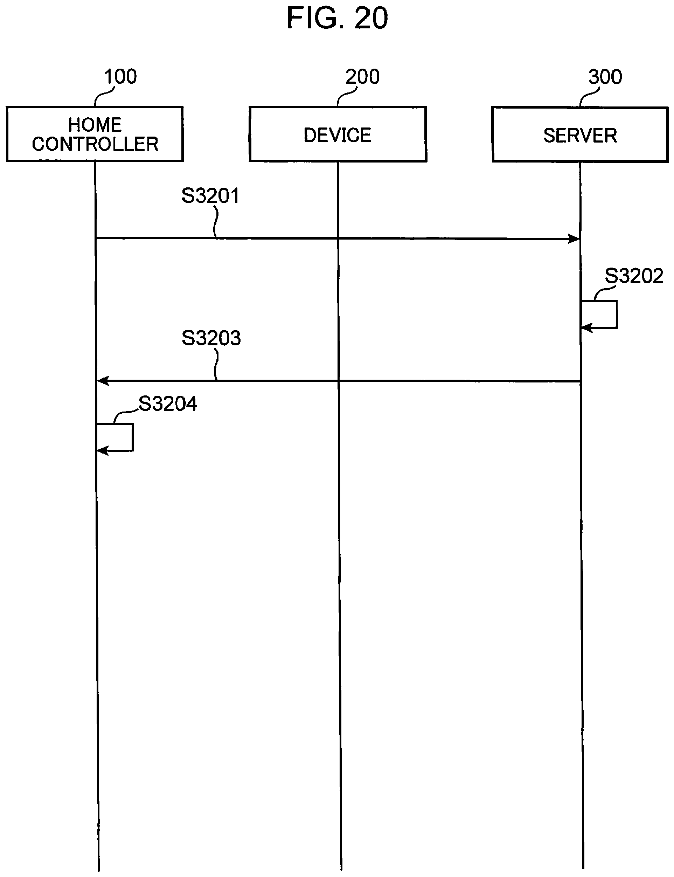

Fig. 20 is a sequence diagram showing a flow of processes by which the home controller 100 acquires the home information 1300 from the server 300. The home controller 100 acquires the home information 1300 from the server 300 at an arbitrary timing such as upon initial use or upon activation. Based on the acquired home information 1300, the home controller 100 performs updating a display content on the display 101 such as generating the basic screen shown in Fig. 5.

First, the device management section 105 of the home controller 100 transmits a home information request to the server 300 (S3201). In this case, the home information request at least includes a home controller ID that indicates a user of the home controller 100 or a home in which the home controller 100 is to be used. The home information management section 301 of the server 300 having received the home information request searches for home information 1300 corresponding to the home controller ID from the storage section 304 (S3202) and transmits the home information 1300 to the home controller 100 (S3203). The device management section 105 of the home controller 100 stores the home information 1300 received from the server 300 in the storage section 104 and, on the basis of the home information 1300, the display control section 103 performs updating the display screen on the display 101 such as generating a basic screen to display the generated basic screen on the display 101 (S3204).

For example, the update of the display screen on the display 101 includes updates of all kinds of information such as an update of the room icon 502 as a result of a change made to the layout due to renovation or the like, an update of power consumption, registration of a newly installed device 200 and an update of the room icon 502, and an update of a status of the device 200. This description is also applicable to the update of a display screen in other sequence diagrams to be described later.

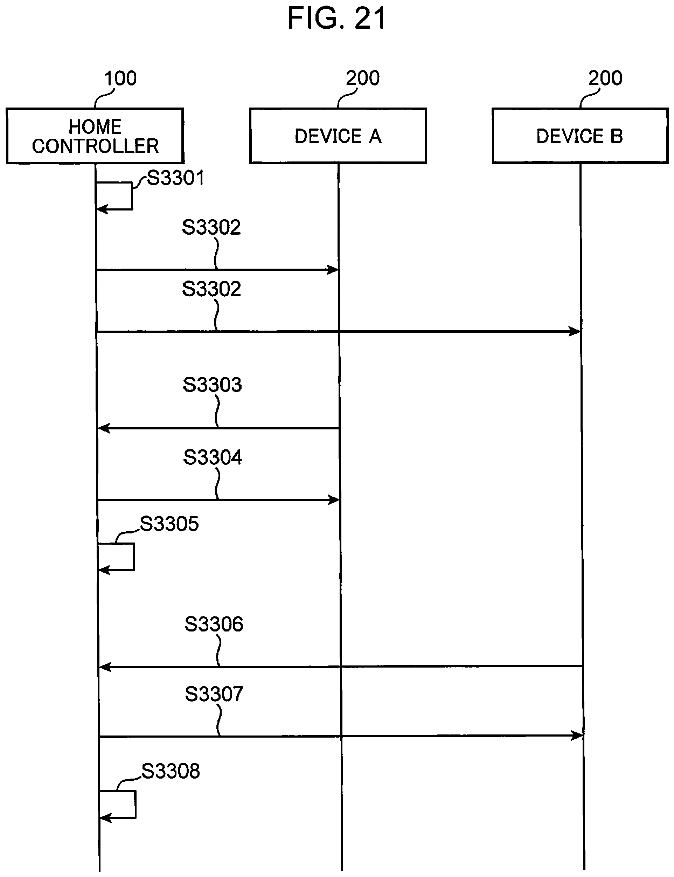

Fig. 21 is a sequence diagram showing a flow of processes by which the home controller 100 detects a device 200 on a network after the home controller 100 connects to the network. Fig. 21 will be described on the assumption that a device A 200 whose device ID is A and a device B 200 whose device ID is B shown in Fig. 19 are connected to the network.

When the home controller 100 connects to the network upon initial use or activation of the home controller 100 (S3301), the device management section 105 of the home controller 100 broadcasts a device search request to all of the devices 200 on the network (S3302). The device A 200 having received the device search request sends a device search response to the home controller 100 (S3303). The home controller 100 having received the device search response acquires device information from the device A 200 (S3304) and updates the display screen (S3305).

In a similar manner, the device B 200 having received the device search request sends a device search response to the home controller 100 (S3306). The home controller 100 having received the device search response acquires device information from the device B 200 (S3307) and updates the display screen (S3308). In this case, device information refers to information indicating a device type, a model, capability information, and the like of the device 200. Based on the device information, the device management section 105 of the home controller 100 generates the device list 1700 (refer to Fig. 19).

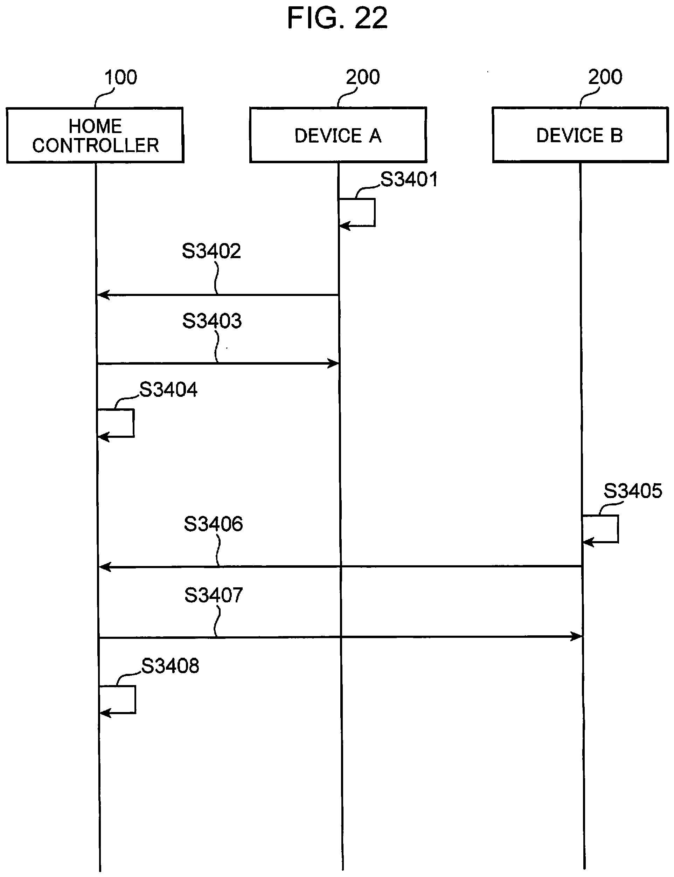

Fig. 22 is a sequence diagram of a flow of processes by which the home controller 100 detects a device 200 on a network when the device 200 connects to the network. When the device A 200 connects to the network upon initial use or activation (S3401), the device A 200 broadcasts a network connection notification to all of the home controllers 100 on the network (S3402). In the home controller 100 having received the network connection notification, the device management section 105 acquires device information from the device A 200 (S3403) and the display control section 103 updates the display screen (S3404). A process that is performed upon connection of the device B 200 to the network is similar to that of the device A 200 (S3405 to S3408).

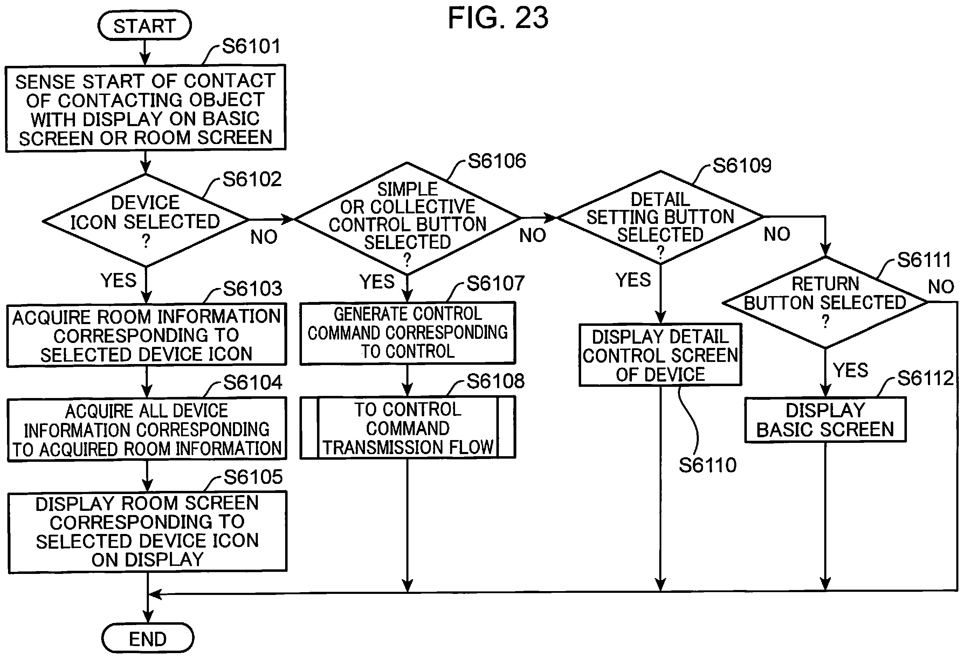

Fig. 23 is a flowchart showing a flow of processes by which the home controller 100 controls the device 200 when the basic screen (Fig. 5) or the room screen 540 (Fig. 6) is displayed on the display 101 according to an embodiment of the present invention.

First, in a state where the basic screen or the room screen 540 is being displayed, the touch panel control section 102 senses a start of contact of the contacting object 519 with the display 101 by the user (S6101). Next, the touch panel control section 102 determines whether or not the user has selected the device icon 501 (S6102). When the user has selected the device icon 501 (YES in S6102), the display control section 103 acquires room information corresponding to the selected device icon 501 (S6103). Specifically, in the device list 1700 (Fig. 19), the display control section 103 extracts the device ID 1701 corresponding to the selected device icon 501 and acquires the arrangement 1704 of the extracted device ID 1701 as room information.

Next, the display control section 103 acquires all of the device information of the devices 200 installed in a room corresponding to the acquired room information (S6104). Specifically, in the device list 1700 (Fig. 19), the display control section 103 acquires information such as the status 1709 of all of the devices whose arrangement 1704 acquired as room information is the same. For example, when the arrangement 1704 acquired in S6103 is the living room, information such as the status 1709 of all of the devices whose arrangement 1704 is the living room is acquired in S6104.

Next, based on the acquired device information, the display control section 103 displays the room screen 540 of the room corresponding to the selected device icon 501 on the display 101 (S6105) and the process ends.

On the other hand, in S6102, when the user has not selected the device icon 501 (NO in S6102), the touch panel control section 102 determines whether or not the user has selected the simple control button 503 or the collective control button 509 on the room screen 540 (S6106). When the user has selected the simple control button 503 or the collective control button 509 (YES in S6106), the device control section 106 generates a control command corresponding to the control of the selected simple control button 503 or the collective control button 509 (S6107). Next, the device control section 106 executes a control command transmission flow (S6108) to be described later with reference to Fig. 25. Subsequently, the process ends.

On the other hand, when the user has selected neither the simple control button 503 nor the collective control button 509 in S6106 (NO in S6106), the touch panel control section 102 determines whether or not the user has selected the detail setting button 504 (S6109). When the user has selected the detail setting button 504 (YES in S6109), the display control section 103 displays the detail control screen 522 of the device 200 on the display 101 (S6110). Subsequently, the process ends.

On the other hand, in S6109, when the user has not selected the detail setting button 504 (NO in S6109), the touch panel control section 102 determines whether or not the user has selected the return button 507 (S6111). When the user had selected the return button 507 (YES in S6111), the display control section 103 displays the basic screen on the display 101 (S6112). Subsequently, the process ends. On the other hand, in S6111, when the user has not selected the return button 507 (NO in S6111), the process ends.

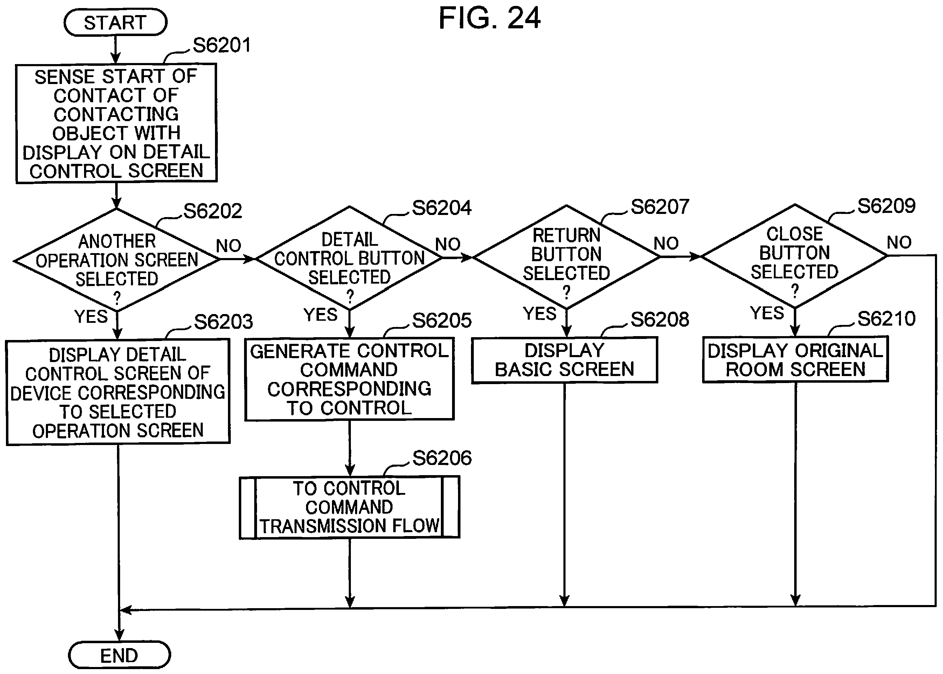

Fig. 24 is a flowchart showing a flow of processes by which the home controller 100 controls the device 200 when the detail control screen 522 is displayed on the display 101 according to an embodiment of the present invention.

First, on the detail control screen 522, the touch panel control section 102 senses a start of contact of the contacting object 519 with the display 101 by the user (S6201). Next, the touch panel control section 102 determines whether or not the user has selected another operation screen (an operation screen other than an operation screen corresponding to the displayed detail control screen 522 among the operation screens 541, 542, and 545) (S6202). When the user has selected another operation screen (YES in S6202), the display control section 103 displays the detail control screen 522 of the device 200 corresponding to the selected operation screen on the display 101 (S6203), and then the process ends.

On the other hand, in S6202, when the user has not selected another operation screen (NO in S6202), the touch panel control section 102 determines whether or not the user has selected the detail control button 505 (S6204). When the user has selected the detail control button 505 (YES in S6204), the device control section 106 generates a control command corresponding to the control of the selected detail control button 505 (S6205). Next, the device control section 106 executes a control command transmission flow (S6206) to be described later with reference to Fig. 25. Subsequently, the process ends.

On the other hand, in S6204, when the user has not selected the detail control button 505 (NO in S6204), the touch panel control section 102 determines whether or not the user has selected the return button 507 (S6207). When the user has selected the return button 507 (YES in S6207), the display control section 103 displays the basic screen on the display 101 (S6208). Subsequently, the process ends.

On the other hand, in S6207, when the user has not selected the return button 507 (NO in S6207), the touch panel control section 102 determines whether or not the user has selected the close button 508 (S6209). When the user has selected the close button 508 (YES in S6209), the display control section 103 displays the original room screen 540 on the display 101 (S6210). Subsequently, the process ends. On the other hand, in S6209, when the user has not selected the close button 508 (NO in S6209), the process ends.

Fig. 25 is a flowchart showing details of the control command transmission flow that is executed in S6108 in Fig. 23 and in S6206 in Fig. 24. First, the device control section 106 determines whether or not the home controller 100 is connected to a home network (S3701), and if the home controller 100 is connected to the home network (YES in S3701), the device control section 106 checks a transmission destination of a control command according to contents of the control command transmission destination 1706 in the device list 1700 (S3702). In this case, a home network refers to a network in the home of the user. Therefore, if the user is operating a home controller 100 from outside of the home, a determination of NO is made in S3701, and if the user is operating a home controller 100 from inside the home, a determination of YES is made in S3701.

In S3702, if the transmission destination of the control command is a "device", the device control section 106 transmits the control command to the relevant device 200 (S3703). On the other hand, in S3702, if the transmission destination of the control command is a "server", the device control section 106 transmits the control command to the server 300 (S3704).

For example, in the device list 1700, since the control command transmission destination 1706 for an air conditioner is "device", the device control section 106 transmits the control command to the air conditioner. In addition, even when it is determined in S3701 that the home controller 100 is not connected to the home network (NO in S3701), the process of S3704 is performed.

In S3705, the device control section 106 receives a control result from the device 200. Next, when transmission of the control command has been completed to all of the devices 200 to be simultaneously operated (YES in S3706), the device control section 106 advances the process to S3707. On the other hand, when transmission of the control command has not been completed to all of the devices 200 to be simultaneously operated (NO in S3706), the device control section 106 returns the process to S3702 and repeats the process of S3702 and thereafter.

For example, when two illumination devices are installed in a same room and the two illumination devices are set in advance to be simultaneously operated, the device control section 106 transmits the control command to each of the two illumination devices. Moreover, a determination of NO is not made in S3706 for a device 200 that is not operated at the same time as other devices 200.

Next, the display control section 103 updates the screen displayed on the display 101 (S3707). For example, when a temperature setting of an air conditioner has been changed, the temperature is displayed so as to flicker until the temperature setting of the air conditioner is changed by a control command. In addition, the detail control screen 522 (for example, Fig. 7) is updated so that the flickering of the temperature display ends once the temperature setting of the air conditioner is changed by the control command. Furthermore, for example, when the first air conditioner in the living room has been turned off, the display control section 103 restores the "on" button of the simple control button 503 of the operation screen 541 of the first air conditioner on the room screen 540 of the living room shown in Fig. 6 to a default color and changes the color of the "off' button.

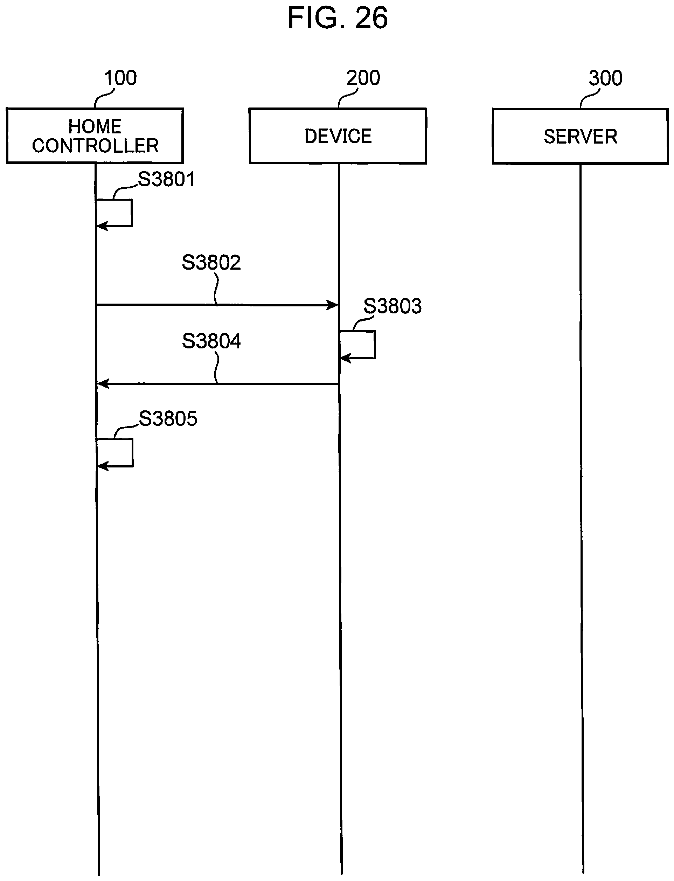

Fig. 26 is a sequence diagram showing a flow of processes by which the home controller 100 directly controls the device 200. First, the touch panel control section 102 of the home controller 100 senses an operation of the simple control button 503 or the detail control screen 522 by the user (S3801). Next, the device control section 106 of the home controller 100 generates a control command corresponding to the operation by the user and transmits the control command to the device 200 (S3802).

The device 200 having received the control command executes the control command (S3803) and transmits a control result to the home controller 100 (S3804). The display control section 103 of the home controller 100 having received the control result updates the display screen according to the control result (S3805).

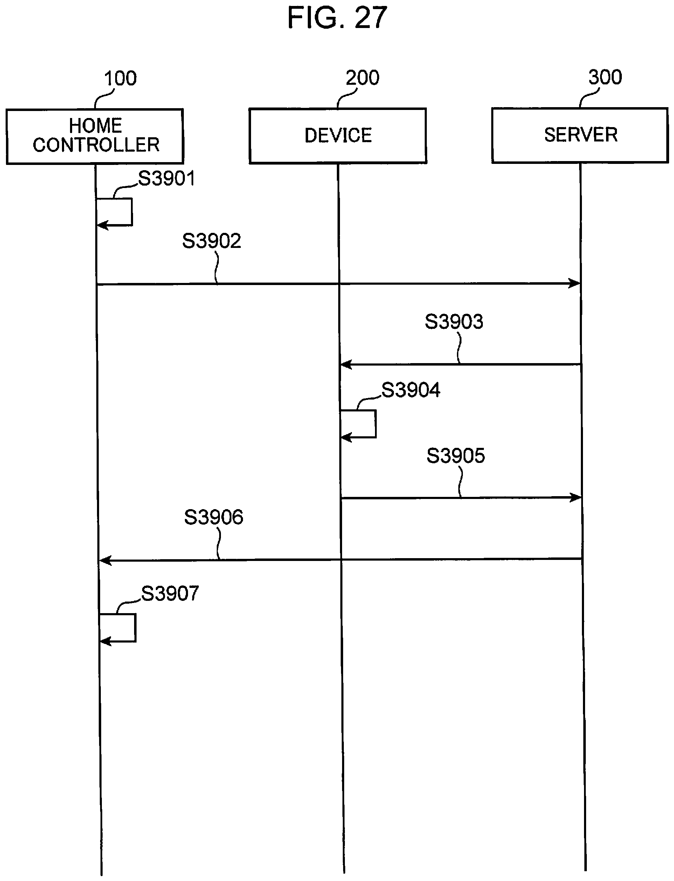

Fig. 27 is a sequence diagram showing a flow of processes by which the home controller 100 controls the device 200 via the server 300. First, the touch panel control section 102 of the home controller 100 senses an operation of the simple control button 503 or the detail control screen 522 by the user (S3901). Next, the device control section 106 of the home controller 100 generates a control command corresponding to the operation by the user and transmits the control command to the server 300 (S3902).

The server 300 having received the control command transmits the relevant control command to the device 200 (S3903). The device 200 having received the control command executes the control command (S3904) and transmits a control result to the server 300 (S3905). The server 300 having received the control result transmits the control result to the home controller 100 (S3906). The display control section 103 of the home controller 100 having received the control result updates the display screen according to the control result (S3907).

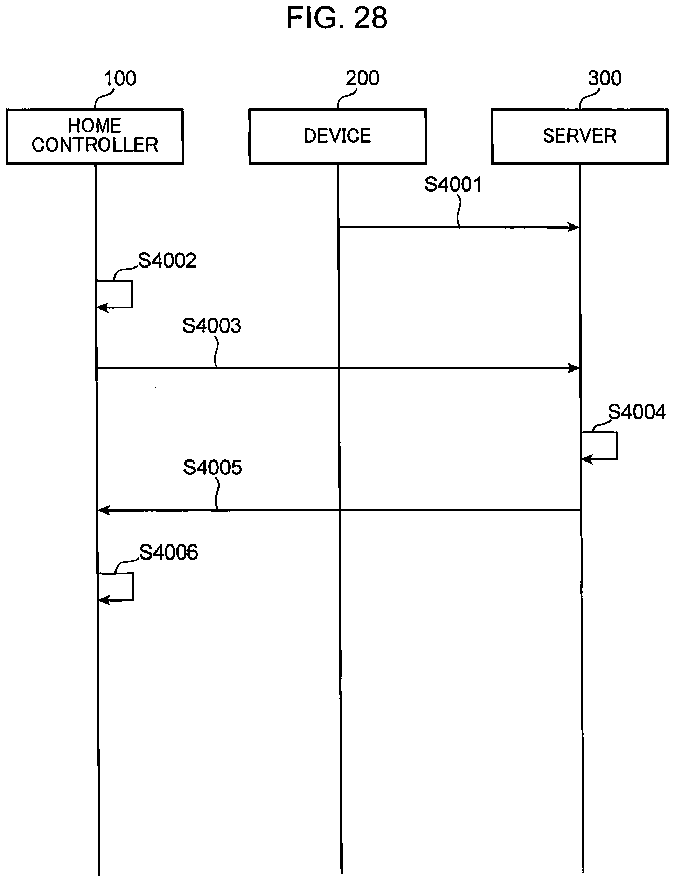

Fig. 28 is a sequence diagram showing a flow of processes by which the home controller 100 acquires a state of the device 200 via the server 300. First, the device 200 transmits a current device state to the server 300 (S4001). In this case, the device 200 transmits a device state to the server 300 when turned on, when turned off, when the device state changes, or periodically, and causes the server 300 to store device states. Moreover, the process of S4001 may be asynchronously executed with respect to processes of S4002 to S4006.

Next, the touch panel control section 102 of the home controller 100 senses an operation of the simple control button 503 or the detail control screen 522 by the user (S4002). The device control section 106 of the home controller 100 then generates a control command corresponding to the operation by the user and transmits the control command to the server 300 (S4003). In this case, a control command for checking the device state of the device 200 has been generated.

The server 300 having received the control command searches for a current device state of the relevant device 200 (S4004) and transmits the device state of the relevant device 200 as a control result to the home controller 100 (S4005). The display control section 103 of the home controller 100 having received the control result updates the display screen according to the control result (S4006). For example, when the room screen 540 is displayed on the display 101, display contents of the simple control button 503 of the operation screens 541, 542, and 545 of the room screen 540 are updated according to the control result.

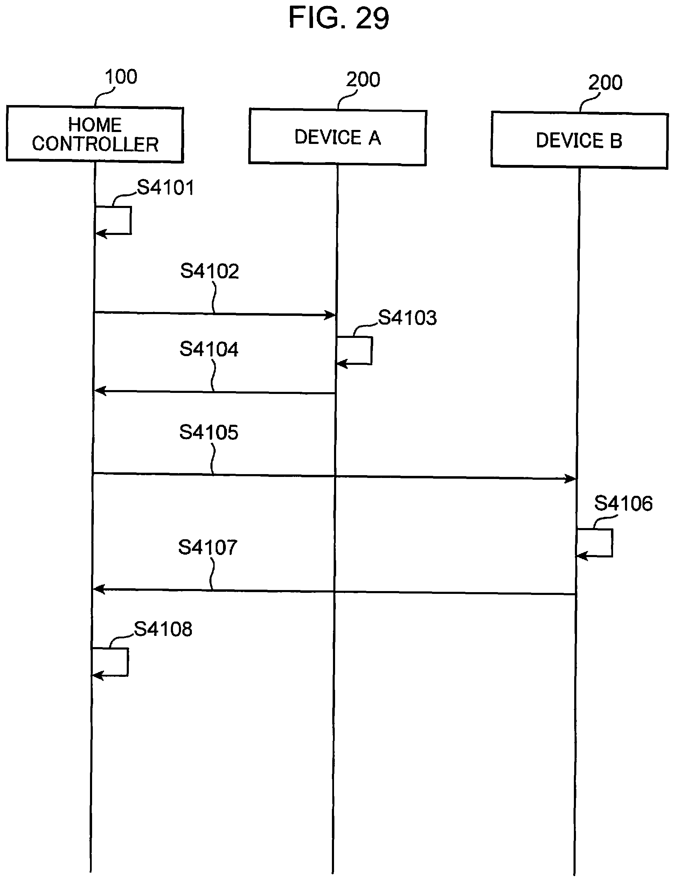

Fig. 29 is a sequence diagram showing a flow of processes by which the home controller 100 directly controls the device 200 in a case where the home controller 100 controls a plurality of devices 200 by a single operation. A description will now be given using a case where the home controller 100 controls a device A 200 and a device B 200. In addition, it is assumed that the devices A 200 and B 200 are installed in one room and are controlled by an operation made on the collective control button 509 of the operation screen 544 on the room screen 540 (Fig. 6).

First, the touch panel control section 102 of the home controller 100 senses an operation of the collective control button 509 of the operation screen 544 on the room screen 540 by the user (S4101). Next, the device control section 106 of the home controller 100 generates a control command corresponding to the operation by the user and transmits the control command to the device A 200 (S4102).

The device A 200 having received the control command executes the control command (S4103) and transmits a control result to the home controller 100 (S4104).

Next, the device control section 106 of the home controller 100 transmits, to the device B 200, a same control command as the control command transmitted to the device A 200 (S4105). The device B 200 having received the control command executes the control command (S4106) and transmits a control result to the home controller 100 (S4107).

The display control section 103 of the home controller 100 having received the control result updates the display screen according to the control result (S4108). In this case, for example, if the operation screens 541 and 542 of the room screen 540 of the devices A 200 and B 200 are displayed on the display 101, display contents of the simple control button 503 of the operation screens 541 and 542 of the devices A 200 and B 200 are updated according to the control result.

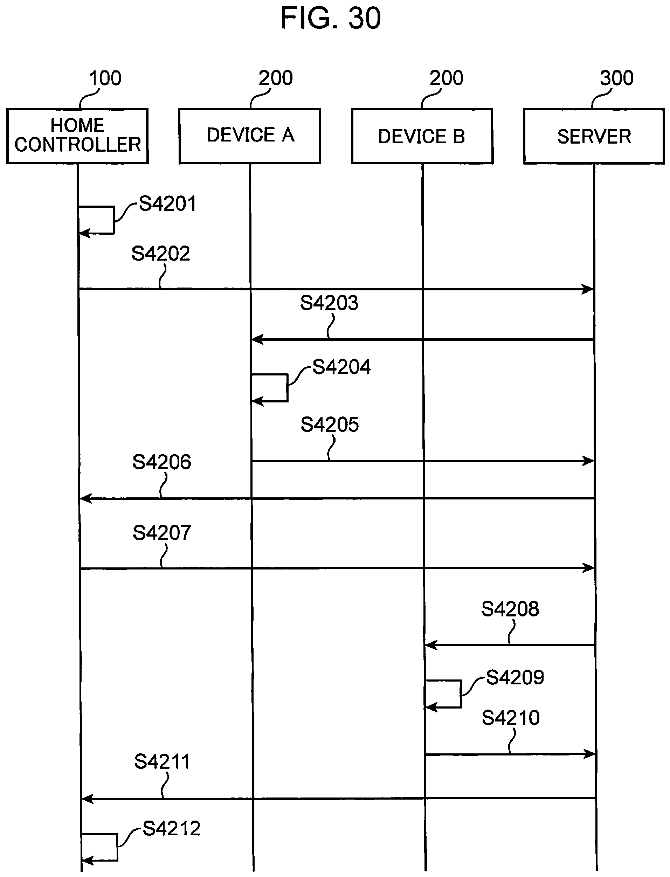

Fig. 30 is a sequence diagram showing a flow of processes by which the home controller 100 controls the device 200 via the server 300 in a case where the home controller 100 controls a plurality of devices 200 by a single operation. A description will now be given using a case where the home controller 100 controls a device A 200 and a device B 200. In addition, it is assumed that the devices A 200 and B 200 are installed in one room and are controlled by an operation made on the collective control button 509 of the operation screen 544 on the room screen 540 (Fig. 6).

First, the touch panel control section 102 of the home controller 100 senses an operation of the collective control button 509 of the operation screen 544 on the room screen 540 by the user (S4201).

Next, the device control section 106 of the home controller 100 generates a control command for the device A 200 which corresponds to the operation by the user and transmits the control command to the server 300 (S4202).

The server 300 having received the control command for the device A 200 transmits the control command to the device A 200 (S4203). The device A 200 having received the control command executes the control command (S4204) and transmits a control result to the server 300 (S4205). The server 300 having received the control result transmits the control result to the home controller 100 (S4206).

In a similar manner, the device control section 106 of the home controller 100 generates a control command for the device B 200 which corresponds to the operation by the user and transmits the control command to the server 300 (S4207).

The server 300 having received the control command transmits the control command to the device B 200 (S4208). The device B 200 having received the control command executes the control command (S4209) and transmits a control result to the server 300 (S4210). The server 300 having received the control result transmits the control result to the home controller 100 (S4211).

Subsequently, the display control section 103 of the home controller 100 updates the display screen according to the control result (S4212).

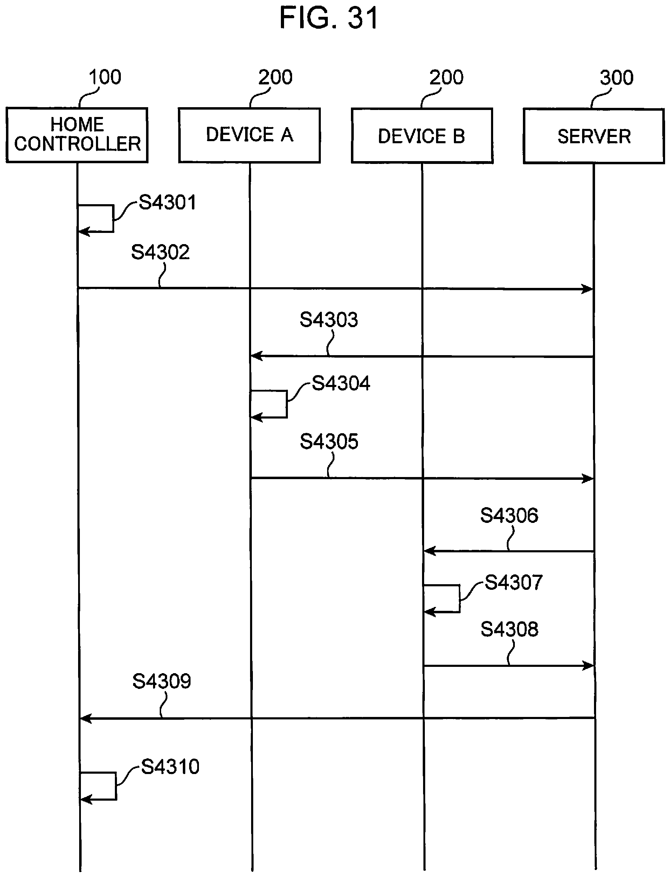

Fig. 31 is a sequence diagram showing a flow of processes by which the home controller 100 controls the device 200 via the server 300 in a case where the home controller 100 controls a plurality of devices 200 by a single operation. A description will now be given using a case where the home controller 100 controls a device A 200 and a device B 200. In addition, it is assumed that the devices A 200 and B 200 are installed in one room and are controlled by an operation made on the collective control button 509 of the operation screen 544 on the room screen 540 (Fig. 6).

First, the touch panel control section 102 of the home controller 100 senses an operation of the collective control button 509 of the operation screen 544 on the room screen 540 by the user (S4301).

Next, the device control section 106 of the home controller 100 generates a control command for the device A 200 and the device B 200 in accordance with the operation by the user and transmits the control command to the server 300 (S4302).

The server 300 having received the control command transmits the control command to the device A 200 (S4303). The device A 200 having received the control command executes the control command (S4304) and transmits a control result to the server 300 (S4305).

In a similar manner, the server 300 transmits the control command to the device B 200 (S4306). The device B 200 having received the control command executes the control command (S4307) and transmits a control result to the server 300 (S4308). The server 300 having received the control results of the device A 200 and the device B 200 transmits the control results to the home controller 100 (S4309).

Subsequently, the display control section 103 of the home controller 100 updates the display screen according to the control results (S4310).

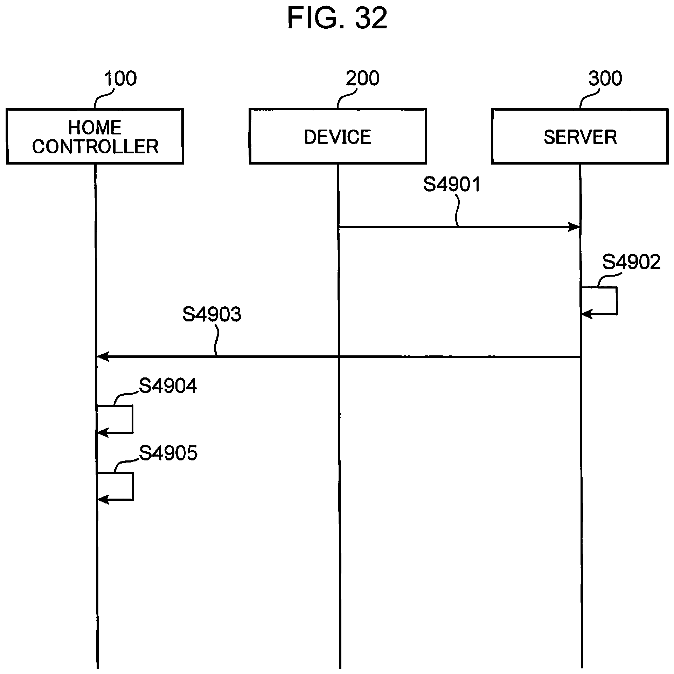

Fig. 32 is a sequence diagram showing an example of processes by which device lists of the home controller 100 and the server 300 are updated. The device 200 transmits a device state indicating a current state of the device itself to the server 300 (S4901). In this case, the device 200 may periodically transmit a device state or may transmit a device state when a change occurs in the state. The server 300 updates the device list 1600 according to contents of the received device state (S4902). At this point, if the information on the device 200 does not exist in the device list 1600, the server 300 adds the information on the device 200 as a new device. In addition, the server 300 transmits a device list update notification to the home controller 100 (S4903).

The device management section 105 of the home controller 100 updates the device list 1700 according to contents of the received device list update notification (S4904). At this point, if the information on the device 200 does not exist in the device list 1700, the device management section 105 adds the information on the device 200 as a new device. Subsequently, the display control section 103 of the home controller 100 updates the display screen (S4905). For example, when information on a new device 200 is added, the update of the display screen includes an update of the room screen 540 corresponding to a room in which the new device 200 is installed, an update of a status display by the simple control button 503 of the operation screens 541, 542, and 545 on the room screen 540, and the like.

As shown, when the state of the device 200 changes, the state change is notified to the server 300. Therefore, the server 300 is able to monitor the state change of the device 200. In addition, the server 300 to which a device state is transmitted from the device 200 notifies the state change to the home controller 100. Therefore, the home controller 100 is able to recognize the current state of the device 200. Furthermore, when a new device 200 is connected to the home network, the server 300 and the home controller 100 can add information on the new device. Therefore, an occurrence of a deviation between an actual state of the device 200 and a state of the device 200 as recognized by the home controller 100 can be prevented.

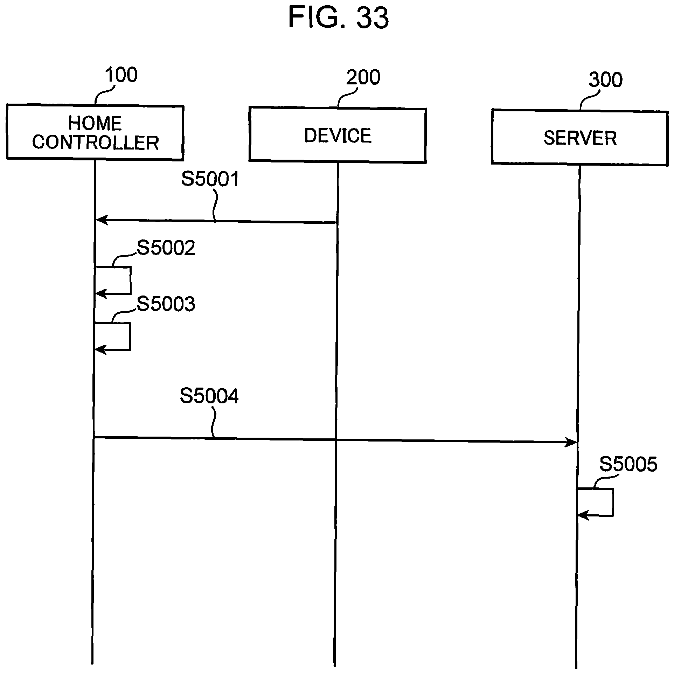

Fig. 33 is a sequence diagram showing another example of processes by which device lists of the home controller 100 and the server 300 are updated. The device 200 transmits a device state to the home controller 100 (S5001). In this case, the device 200 may periodically transmit a device state or may transmit a device state when a change occurs in the state.

The device management section 105 of the home controller 100 updates the device list 1700 according to contents of the received device state (S5002). At this point, if the information on the device 200 does not exist in the device list 1700, the device management section 105 adds the information on the device 200 as a new device. Subsequently, the display control section 103 updates the display screen (S5003).

Next, the device management section 105 of the home controller 100 transmits a device list update notification to the server 300 (S5004). The server 300 updates the device list 1600 according to the received device list update notification (S5005). At this point, if the information on the device 200 does not exist in the device list 1600, the server 300 adds the information on the device 200 as a new device.

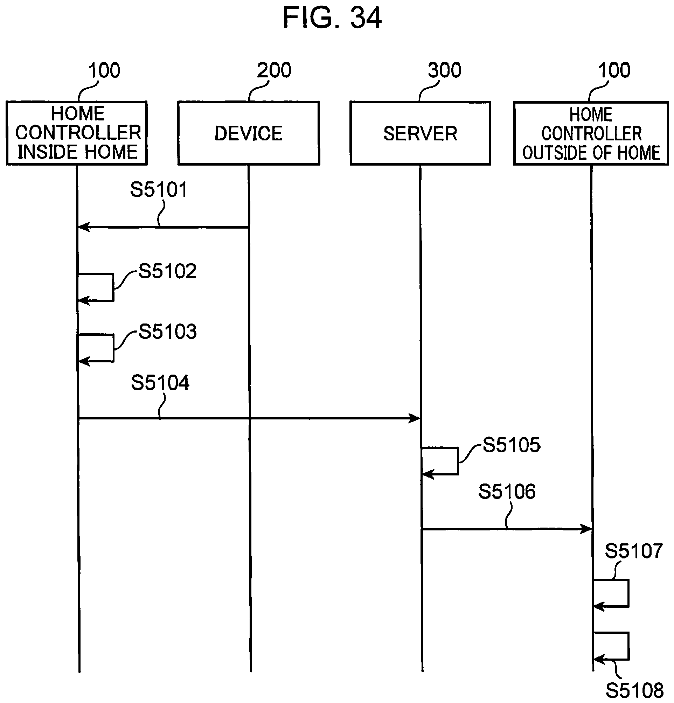

Fig. 34 is a sequence diagram showing yet another example of processes by which the home controller 100 and the server 300 update device lists. In Fig. 34, a description will be given using a case where the owner possesses two home controllers 100 including a home controller 100 inside the home and a home controller 100 outside of the home. In this case, the home controller 100 outside of the home is a home controller 100 that has been carried outside of the home by the user and the home controller 100 inside the home is a home controller 100 that has been left inside the home by the user.

The device 200 transmits a device state to the home controller 100 inside the home (S5101). The home controller 100 inside the home updates the device list 1700 according to contents of the received device state (S5102). At this point, if the information on the device 200 does not exist in the device list 1700, the device management section 105 adds the information on the device 200 as a new device. Subsequently, the display control section 103 of the home controller 100 inside the home updates the display screen (S5103). In addition, the home controller 100 inside the home transmits a device list update notification to the server 300 (S5104).

The server 300 updates the device list 1600 according to contents of the received device list update notification (S5105). At this point, if the information on the device 200 does not exist in the device list 1600, the server 300 adds the information on the device 200 as a new device. In addition, the server 300 transmits the device list update notification to the home controller 100 outside of the home (S5106).

The home controller 100 outside of the home updates the device list 1700 according to contents of the received device list update notification (S5107). At this point, if the information on the device 200 does not exist in the device list 1700, the device management section 105 of the home controller 100 outside of the home adds the information on the device 200 as a new device. Subsequently, the display control section 103 of the home controller 100 outside of the home updates the display screen (S5108).

According to this example, even when one of the home controllers 100 is located outside of the home and the other home controller 100 is located inside the home, an occurrence of a deviation between states of the device 200 as recognized by both home controllers 100 can be prevented.

It should be noted that the sequences and process flows described above are merely examples, and sequences of steps may be rearranged or a part of the steps may be omitted as long as desired processes can be realized. For example, transmissions of control commands to the device A 200 and the device B 200 may be realized in an asynchronous manner.

Figs. 35A and 35B are diagrams showing a configuration of power consumption information that is transmitted by the home controller 100 or the server 300. Power consumption information 1800 shown in Fig. 35A includes a room ID 1801, power consumption 1802, and a level 1803. Power consumption information 1810 shown in Fig. 35B includes a device ID 1811 and power consumption 1812.

The home controller 100 or the server 300 generates the level 1803 on the basis of the power consumption 1802. The level 1803 represents a level of power consumption. A level L1 indicates that TH1 ≤ L1 is satisfied. The threshold TH1 is set to, for example, 500 kWh. A level L2 indicates that TH2 ≤ L2 < TH1 is satisfied. The threshold TH2 is set to, for example, 100 kWh. A level L3 indicates that 0 ≤ L3 < TH2 is satisfied.

In the present embodiment, the home controller 100 or the server 300 transmits both power consumption information including the power consumption information 1800 shown in Fig. 35A and the power consumption information 1810 shown in Fig.35B.

Due to the power consumption information 1800 shown in Fig. 35A, power consumption can be displayed in room units as shown in Fig. 5 at the home controller 100. In addition, due to the power consumption information 1810 shown in Fig. 35B, power consumption can also be displayed in device units at the home controller 100.

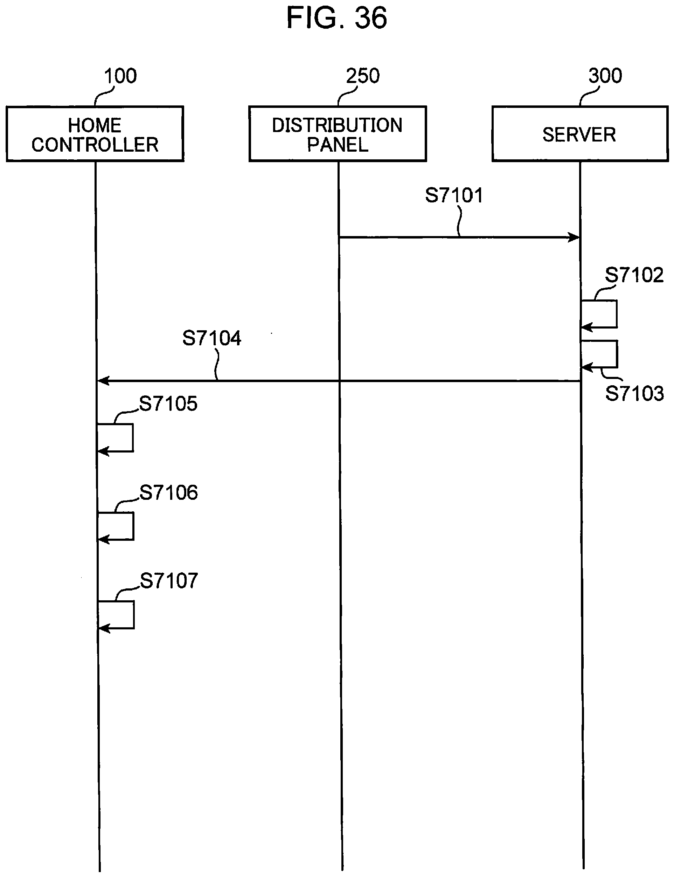

Fig. 36 is a sequence diagram showing an example of processes by which the home controller 100 and the server 300 acquire power consumption. A distribution panel 250 has a function for measuring power consumption for each wire connected to the devices 200. The distribution panel 250 transmits power consumption of each device to the server 300 (S7101). In this case, the distribution panel 250 may periodically transmit power consumption or may transmit power consumption when power consumption changes by a certain value or more.

The server 300 updates the device list 1600 according to the received power consumption (S7102). In addition, the server 300 calculates power consumption per room on the basis of power consumption per device and updates the room information 1400 (S7103). Furthermore, on the basis of the received power consumption, the server 300 generates power consumption information 1800 and 1810. The server 300 transmits the generated power consumption information 1800 and 1810 to the home controller 100 (S7104).

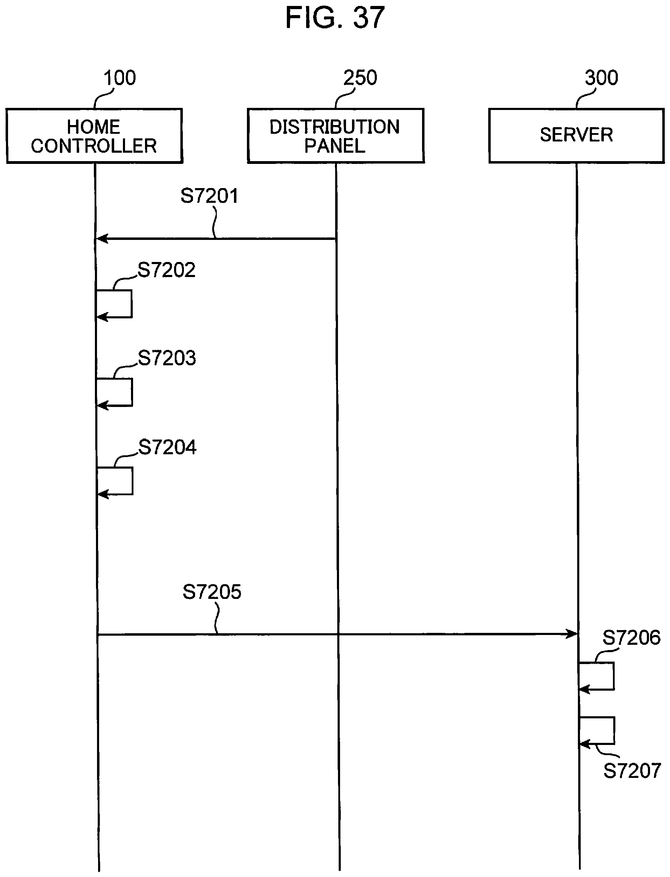

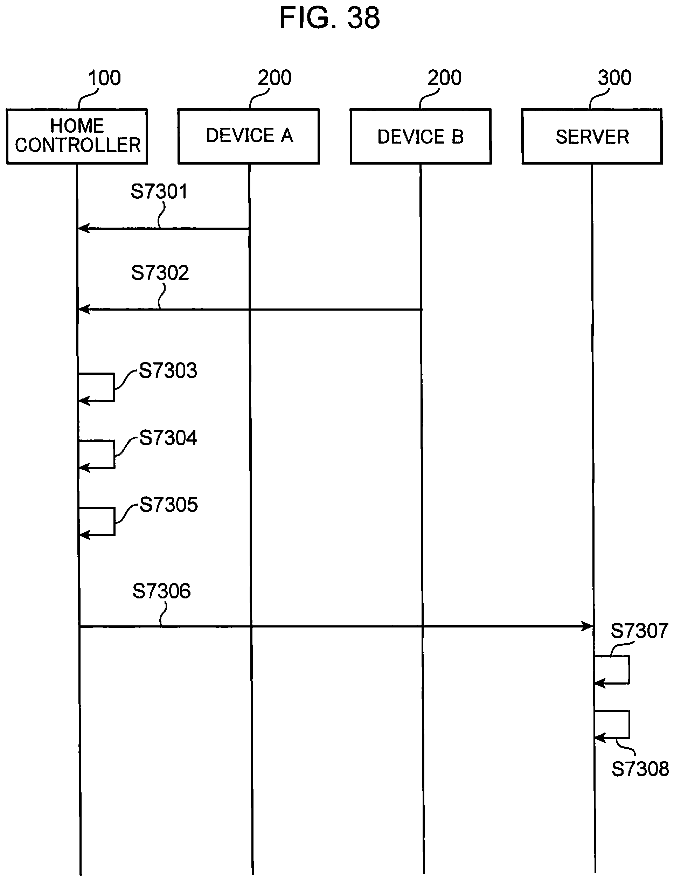

The device management section 105 of the home controller 100 updates the device list 1700 according to contents of the received power consumption information 1810 (S7105). In addition, the home controller 100 updates the room information 1500 according to contents of the received power consumption information 1800 (S7106). Subsequently, the display control section 103 of the home controller 100 updates the display screen (S7107). The update of the display screen includes, for example, update of a display color of the room icon 502 shown in Fig. 5 and update of power consumption in room units which is displayed in the display field 600 of the room icon 502. This also applies to S7204 in Fig. 37 and S7305 in Fig. 38 as will be described later.

As described above, the power consumption of the device 200 is notified to the server 300. Therefore, the server 300 is able to monitor the power consumption of the device 200. In addition, the server 300 to which power consumption is transmitted from the device 200 notifies the power consumption to the home controller 100. Therefore, the home controller 100 is able to recognize the current power consumption of the device 200. The power consumption information 1800 that is transmitted from the server 300 to the home controller 100 corresponds to an example of power information.

Fig. 37 is a sequence diagram showing another example of processes by which the home controller 100 and the server 300 acquire power consumption. The distribution panel 250 transmits power consumption to the home controller 100 (S7201). In this case, the distribution panel 250 may periodically transmit power consumption or may transmit power consumption when power consumption changes by a certain value or more.

The device management section 105 of the home controller 100 updates the device list 1700 according to contents of the received power consumption (S7202). In addition, the home controller 100 calculates power consumption per room on the basis of power consumption per device of the device list 1700 and updates the room information 1500 (S7203). Subsequently, the display control section 103 of the home controller 100 updates the display screen (S7204).

Next, based on the received power consumption, the device management section 105 of the home controller 100 generates power consumption information 1800 and 1810. The device management section 105 transmits the generated power consumption information 1800 and 1810 to the server 300 (S7205). The server 300 updates the device list 1600 according to the received power consumption information 1810 (S7206). In addition, the server 300 updates the room information 1400 according to the received power consumption information 1800 (S7207).

Fig. 38 is a sequence diagram showing yet another example of processes by which the home controller 100 and the server 300 acquire power consumption. In this case, the device 200 is equipped with a function for measuring power consumption. The device A 200 transmits power consumption to the home controller 100 (S7301). In addition, the device B 200 transmits power consumption to the home controller 100 (S7302). In this case, the device A 200 and the device B 200 may periodically transmit power consumption or may transmit power consumption when power consumption changes by a certain value or more.

The device management section 105 of the home controller 100 updates the device list 1700 according to the received power consumption (S7303). In addition, the home controller 100 calculates power consumption per room on the basis of power consumption per device of the device list 1700 and updates the room information 1500 (S7304). Subsequently, the display control section 103 of the home controller 100 updates the display screen (S7305).

Next, based on the received power consumption, the device management section 105 of the home controller 100 generates power consumption information 1800 and 1810. The device management section 105 transmits the generated power consumption information 1800 and 1810 to the server 300 (S7306). The server 300 updates the device list 1600 according to the received power consumption information 1810 (S7307). In addition, the server 300 updates the room information 1400 according to the received power consumption information 1800 (S7308). Moreover, in Figs. 37 and 38, the level 1803 may be omitted when transmitting power consumption information 1800 from the home controller 100 to the server 300.

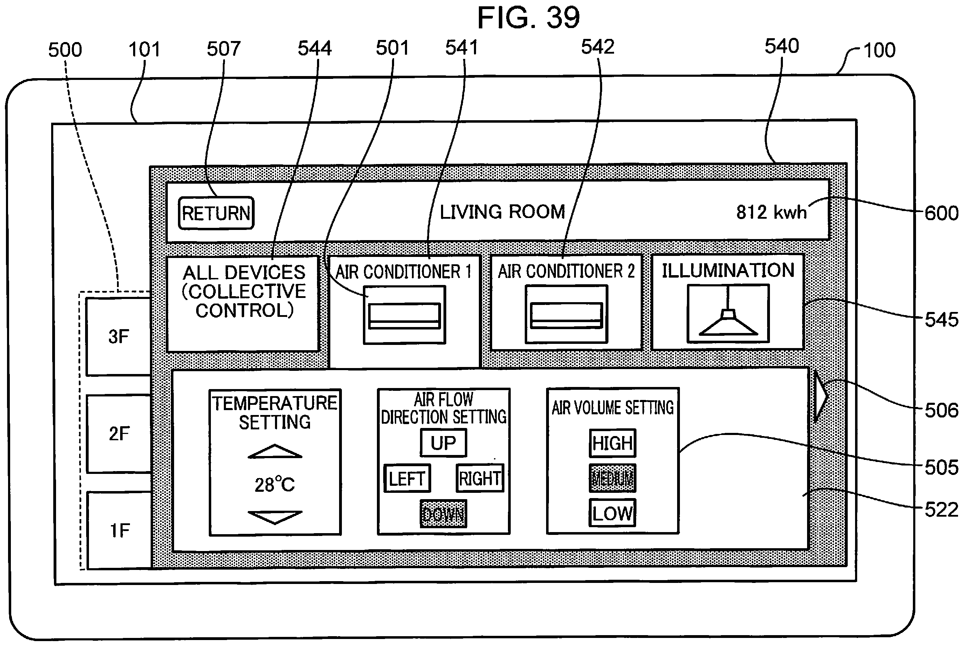

Fig. 39 is a diagram showing another example of the room screen 540 displayed on the display 101 of the home controller 100. When the user selects the device icon 501 included in the room icon 502 on the basic screen shown in Fig. 5, the touch panel control section 102 senses the selection thereof. As a result, the display control section 103 displays a room screen 540 representing a room corresponding to the selected device icon 501 on the display 101 so as to overlap with the floor plan 500.

As shown in Fig. 39, the room screen 540 includes the display field 600, the next page button 506, the return button 507, the operation screen 544 of all devices, the operation screen 541 of the first air conditioner, the operation screen 542 of the second air conditioner, the operation screen 545 of the illumination device, and the detail control screen 522. The detail control screen 522 shown in Fig. 39 is a result of a direct transition from the basic screen shown in Fig. 5. Therefore, unlike the detail control screen 522 shown in Fig. 7, the detail control screen 522 shown in Fig. 39 does not include a close button.

Fig. 39 shows an example where the device icon 501 representing the air conditioner at the left end is selected by the user among device icons 501 included in the room icon 502 representing the living room on the basic screen shown in Fig. 5. Therefore, the detail control screen 522 corresponds to the first air conditioner.

Moreover, as described above, among the device icons 501 included in the room icon 502 representing the living room shown in Fig. 5, the first air conditioner (an example of the first target device) corresponds to the device icon 501 at the left end representing the air conditioner (an example of the first device icon), the second air conditioner (an example of the second target device) corresponds to the device icon 501 at the second from the left representing the air conditioner (an example of the second device icon of a same type as the first device icon), and the illumination device (an example of the second target device) corresponds to the device icon 501 at the third from the left representing the illumination device (an example of the second device icon of a different type from the first device icon).

The display control section 103 displays the detail control screen 522 (an example of the first operation screen) of the first air conditioner on the display 101 in a state where the detail control screen 522 is in contact with the operation screen 541 of the first air conditioner. The display control section 103 displays the detail control screen 522 on the display 101 so as to be separated from the operation screen 544 of all devices, the operation screen 542 of the second air conditioner, and the operation screen 545 of the illumination device.

In a display state of the room screen 540 shown in Fig. 39, when the user selects an operation screen 542 (an example of an operation screen device icon) of the second air conditioner, the touch panel control section 102 senses the selection thereof. As a result, the display control section 103 displays the detail control screen 522 (an example of the second operation screen) of the second air conditioner on the display 101 by switching from the detail control screen 522 of the first air conditioner.

In a display state of the room screen 540 shown in Fig. 39, when the user selects an operation screen 545 (an example of an operation screen device icon) of the illumination device, the touch panel control section 102 senses the selection thereof. As a result, the display control section 103 displays the detail control screen 522 (an example of the second operation screen) of the illumination device on the display 101 by switching from the detail control screen 522 of the first air conditioner.

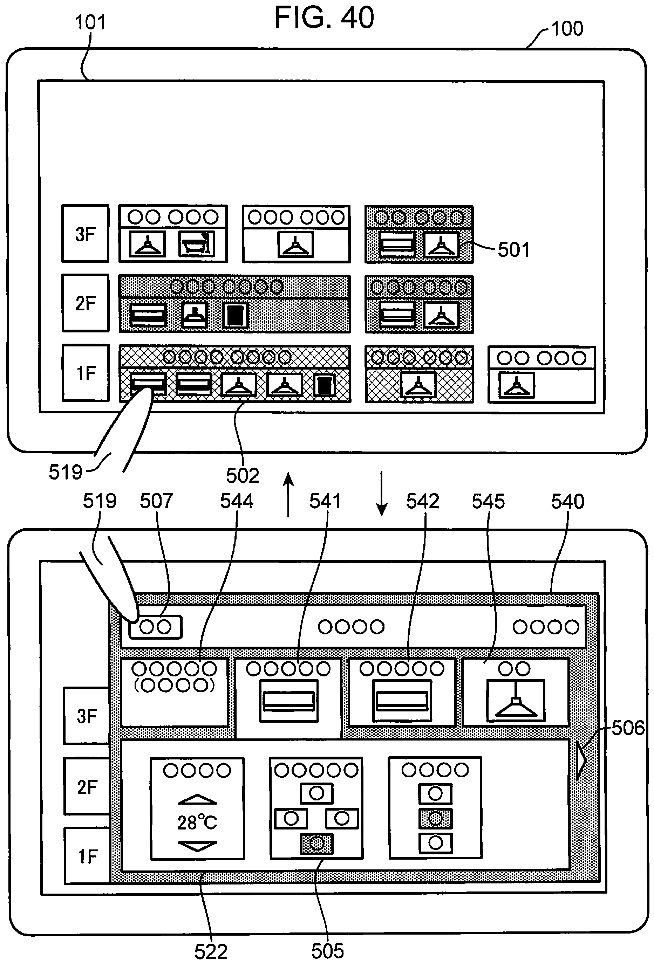

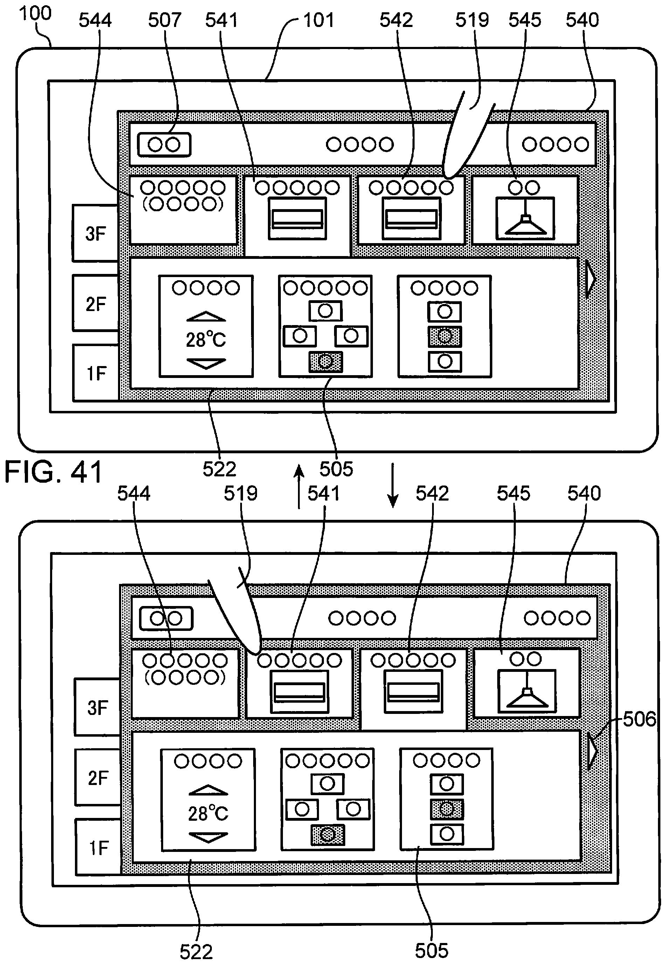

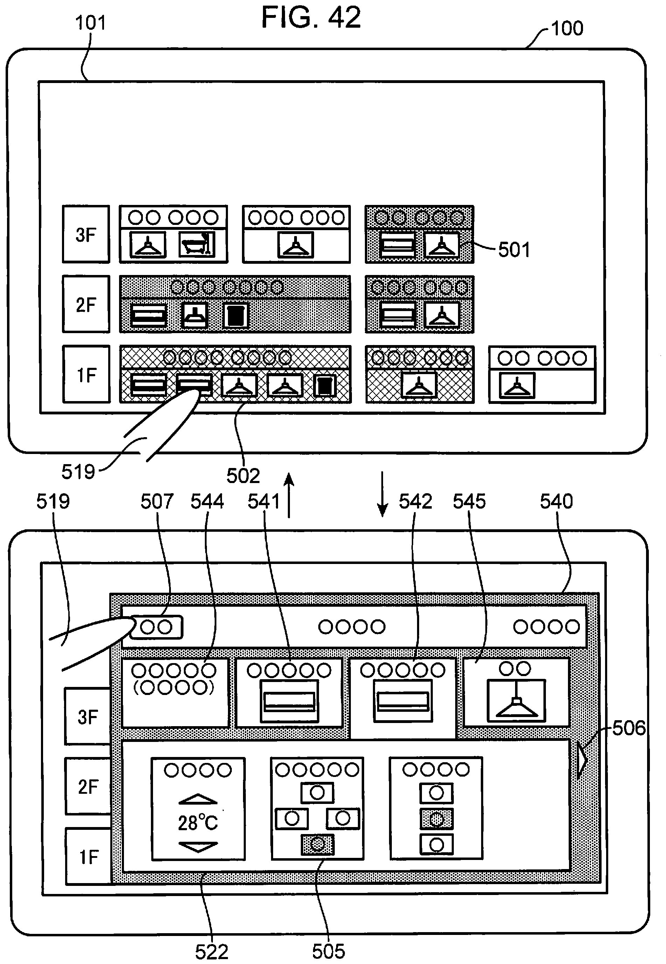

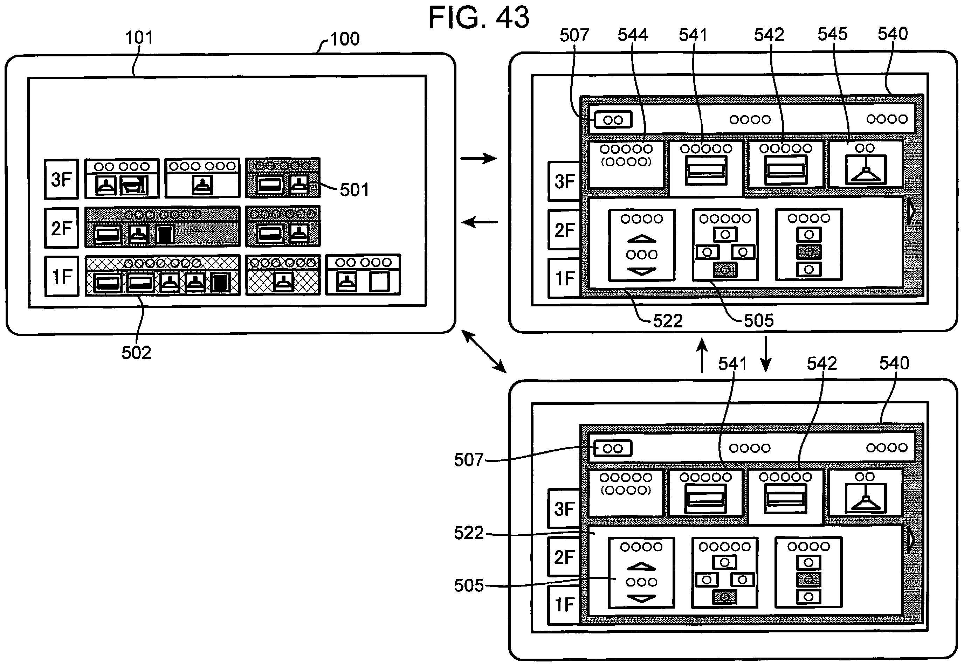

Figs. 40 to 43 are diagrams showing examples of transition of a display screen of the display 101 in the case of the room screen 540 shown in Fig. 39. An upper diagram in Fig. 40 shows the basic screen shown in Fig. 5 and a lower diagram in Fig. 40 shows the display screen shown in Fig. 39. An upper diagram in Fig. 41 shows the display screen shown in Fig. 39. An upper diagram in Fig. 42 shows the basic screen shown in Fig. 5 and a lower diagram in Fig. 42 shows the display screen shown in a lower diagram in Fig. 41. An upper left diagram in Fig. 43 shows the basic screen shown in Fig. 5, an upper right diagram in Fig. 43 shows the display screen shown in Fig. 39 (a lower diagram in Fig. 40, an upper diagram in Fig. 41), and a lower right diagram in Fig. 43 shows a lower diagram shown in Fig. 42.

On the basic screen shown in the upper diagram in Fig. 40 (the upper left diagram in Fig. 43), when the user selects, using the contacting object 519, a device icon 501 (in this case, the device icon 501 at the left end representing the air conditioner in the room icon 502 representing the living room) which represents the device 200 to be controlled, the contact is sensed by the touch panel control section 102. As a result, the display control section 103 displays the room screen 540 of the room corresponding to the room icon 502 including the contacted device icon 501 on the display 101 as shown in the lower diagram in Fig. 40 (the upper right diagram in Fig. 43). The room screen 540 includes the detail control screen 522 (an example of the first operation screen) of the device (the first air conditioner) corresponding to the device icon 501 selected by the user. Accordingly, the display state of the basic screen makes a transition to the display state of the room screen 540.

When the user selects the detail control button 505 with the contacting object 519 in the display state of the room screen 540 shown in the lower diagram in Fig. 40 (the upper right diagram in Fig. 43), the touch panel control section 102 senses the selection thereof. Accordingly, the device control section 106 generates a control command (an example of the first control command) that corresponds to the selected detail control button 505 and transmits the generated control command to the first air conditioner.

On the other hand, when the user brings the contacting object 519 into contact with the return button 507 in the display state of the room screen 540 shown in the lower diagram in Fig. 40 (the upper right diagram in Fig. 43), the contact is sensed by the touch panel control section 102. As a result, as shown in the upper diagram in Fig. 40 (the upper left diagram in Fig. 43), the display control section 103 displays the basic screen on the display 101. Accordingly, the display state of the room screen 540 makes a transition to the display state of the basic screen.

Next, in the display state of the room screen 540 shown in the upper diagram in Fig. 41 (the upper right diagram in Fig. 43), when the user brings the contacting object 519 into contact with the operation screen 542 (an example of the operation screen device icon) of the second air conditioner, the contact is sensed by the touch panel control section 102. As a result, as shown in the lower diagram in Fig. 41 (the lower right diagram in Fig. 43), the display control section 103 displays the detail control screen 522 (an example of the second operation screen) of the second air conditioner on the display 101 by switching from the detail control screen 522 of the first air conditioner. Accordingly, the display state of the room screen 540 including the detail control screen 522 of the first air conditioner makes a transition to the display state of the room screen 540 including the detail control screen 522 of the second air conditioner.

When the user selects the detail control button 505 with the contacting object 519 in the display state of the room screen 540 shown in the lower diagram in Fig. 41 (the lower right diagram in Fig. 43), the touch panel control section 102 senses the selection thereof. Accordingly, the device control section 106 generates a control command (an example of the third control command) that corresponds to the selected detail control button 505 and transmits the generated control command to the second air conditioner.

On the other hand, when the user brings the contacting object 519 into contact with the operation screen 541 (an example of the operation screen device icon) of the first air conditioner in the display state of the detail control screen 522 of the second air conditioner shown in the lower diagram in Fig. 41 (the lower right diagram in Fig. 43), the contact is sensed by the touch panel control section 102. As a result, as shown in the upper diagram in Fig. 41 (the upper right diagram in Fig. 43), the display control section 103 displays the detail control screen 522 of the first air conditioner on the display 101 by switching from the detail control screen 522 of the second air conditioner. Accordingly, the display state of the room screen 540 including the detail control screen 522 of the second air conditioner makes a transition to the display state of the room screen 540 including the detail control screen 522 of the first air conditioner.

Next, when the user brings the contacting object 519 into contact with the device icon 501 (an example of the first device icon) at the second from the left representing the air conditioner in the room icon 502 representing the living room in the display state of the basic screen shown in the upper diagram in Fig. 42 (the upper left diagram in Fig. 43), the contact is sensed by the touch panel control section 102. As a result, as shown in the lower diagram in Fig. 42 (the lower right diagram in Fig. 43), the display control section 103 displays the room screen 540 including the detail control screen 522 (an example of the first operation screen) of the second air conditioner (an example of the first target device) on the display 101. Accordingly, the display state of the basic screen makes a transition to the display state of the room screen 540 including the detail control screen 522 of the second air conditioner.

On the other hand, when the user brings the contacting object 519 into contact with the return button 507 in the display state of the room screen 540 including the detail control screen 522 of the second air conditioner shown in the lower diagram in Fig. 42 (the lower right diagram in Fig. 43), the contact is sensed by the touch panel control section 102. As a result, as shown in the upper diagram in Fig. 42 (the upper left diagram in Fig. 43), the display control section 103 displays the basic screen on the display 101. Accordingly, the display state of the room screen 540 including the detail control screen 522 of the second air conditioner makes a transition to the display state of the basic screen.

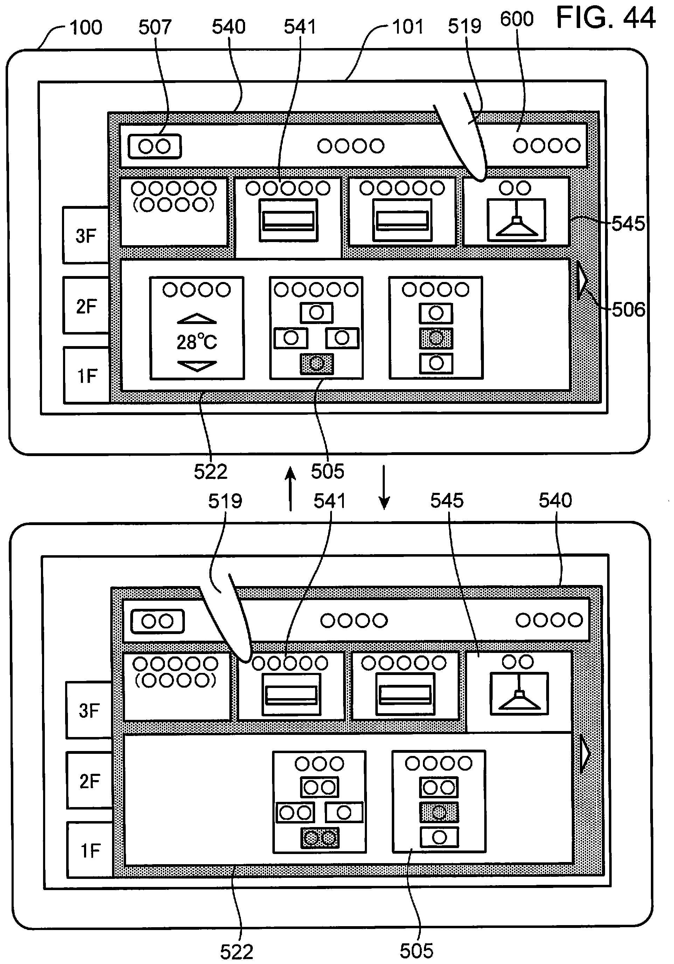

Fig. 44 is a diagram showing another example of transition of a display screen of the display 101 in the case of the room screen 540 shown in Fig. 39. An upper diagram in Fig. 44 shows the display screen (the room screen 540 including the detail control screen 522 of the first air conditioner) shown in Fig. 39 and a lower diagram in Fig. 44 shows the room screen 540 including the detail control screen 522 of the illumination device. The detail control screen 522 of the illumination device shown in the lower diagram in Fig. 44 is the same as the detail control screen 522 of the illumination device shown in Fig. 8 with the exception of a close button not being included.

In a display state of the room screen 540 shown in the upper diagram in Fig. 44, when the user brings the contacting object 519 into contact with the operation screen 545 (an example of an operation screen device icon) of the illumination device, the touch panel control section 102 senses the contact. As a result, as shown in the lower diagram in Fig. 44, the display control section 103 displays the detail control screen 522 (an example of the second operation screen) of the illumination device on the display 101 by switching from the detail control screen 522 of the first air conditioner. Accordingly, the display state of the room screen 540 including the detail control screen 522 (an example of the first operation screen) of the first air conditioner makes a transition to the display state of the room screen 540 including the detail control screen 522 of the illumination device.

On the other hand, when the user brings the contacting object 519 into contact with the operation screen 541 of the first air conditioner in the display state of the detail control screen 522 of the illumination device shown in the lower diagram in Fig. 44, the contact is sensed by the touch panel control section 102. As a result, as shown in the upper diagram in Fig. 44, the display control section 103 displays the room screen 540 including the detail control screen 522 of the first air conditioner on the display 101. Accordingly, the display state of the room screen 540 including the detail control screen 522 of the illumination device makes a transition to the display state of the room screen 540 including the detail control screen 522 of the first air conditioner.

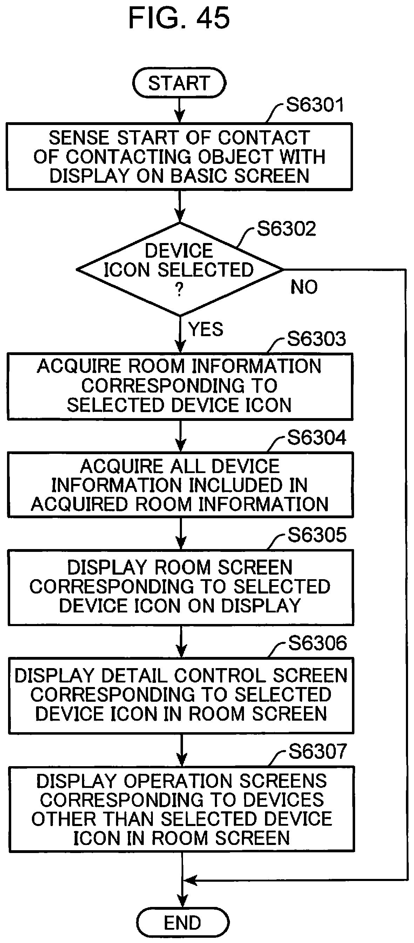

Fig. 45 is a flowchart showing a flow of processes by which the home controller 100 controls the device 200 when the basic screen (Fig. 5) is displayed on the display 101 in the case of the room screen 540 shown in Fig. 39.

First, in a state where the basic screen is being displayed, the touch panel control section 102 senses a start of contact of the contacting object 519 with the display 101 by the user (S6301). Next, the touch panel control section 102 determines whether or not the user has selected the device icon 501 in the room icon 502 (S6302). When the user has not selected the device icon 501 (NO in S6302), the process ends.

On the other hand, in S6302, when the user has selected the device icon 501 (YES in S6302), the display control section 103 acquires room information corresponding to the selected device icon 501 (S6303). Next, the display control section 103 acquires all of the device information of the devices 200 installed in a room corresponding to the acquired room information (S6304).

Next, based on the acquired device information, the display control section 103 displays the room screen 540 of the room corresponding to the selected device icon 501 on the display 101 (S6305). The display control section 103 then displays the detail control screen 522 of the device corresponding to the selected device icon 501 in the room screen 540 (S6306). Next, the display control section 103 displays the operation screen corresponding to a device other than the selected device icon 501 in the room screen 540 (S6307). Subsequently, the process ends.

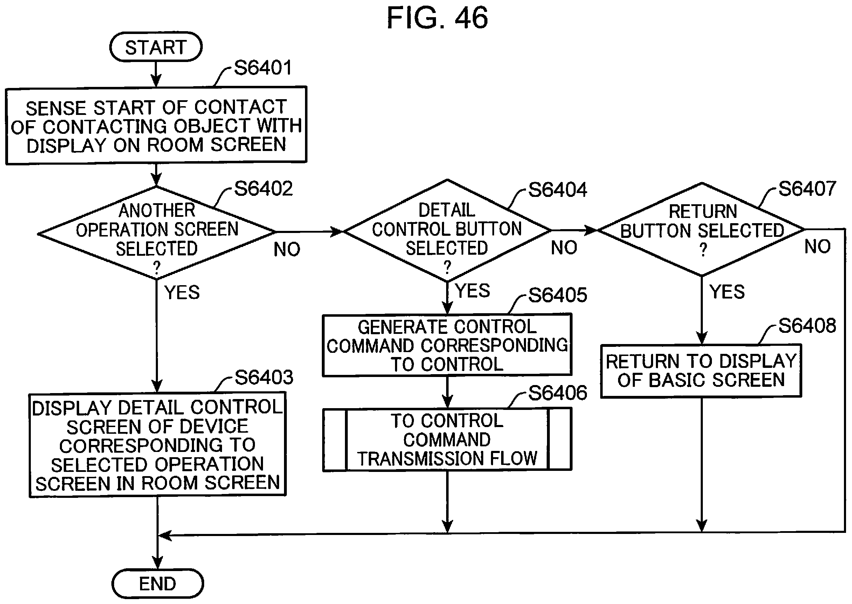

Fig. 46 is a flowchart showing a flow of processes by which the home controller 100 controls the device 200 when the room screen 540 shown in Fig. 39 is displayed on the display 101.

First, on the room screen 540 shown in Fig. 39, the touch panel control section 102 senses a start of contact of the contacting object 519 with the display 101 by the user (S6401). Next, the touch panel control section 102 determines whether or not the user has selected another operation screen (an operation screen other than an operation screen corresponding to the detail control screen 522 included in the room screen 540) (S6402). When the user has selected another operation screen (YES in S6402), the display control section 103 displays the detail control screen 522 of the device 200 corresponding to the selected operation screen in the room screen 540 (S6403), then the process ends.

On the other hand, in S6402, when the user has not selected another operation screen (NO in S6402), the touch panel control section 102 determines whether or not the user has selected the detail control button 505 (S6404). When the user has selected the detail control button 505 (YES in S6404), the device control section 106 generates a control command corresponding to the control of the selected detail control button 505 (S6405). Next, the device control section 106 executes a control command transmission flow (S6406) shown in Fig. 25. Subsequently, the process ends.

On the other hand, in S6404, when the user has not selected the detail control button 505 (NO in S6404), the touch panel control section 102 determines whether or not the user has selected the return button 507 (S6407). When the user has selected the return button 507 (YES in S6407), the display control section 103 displays the basic screen on the display 101 (S6408). Subsequently, the process ends. On the other hand, in S6407, when the user has not selected the return button 507 (NO in S6407), the process ends.

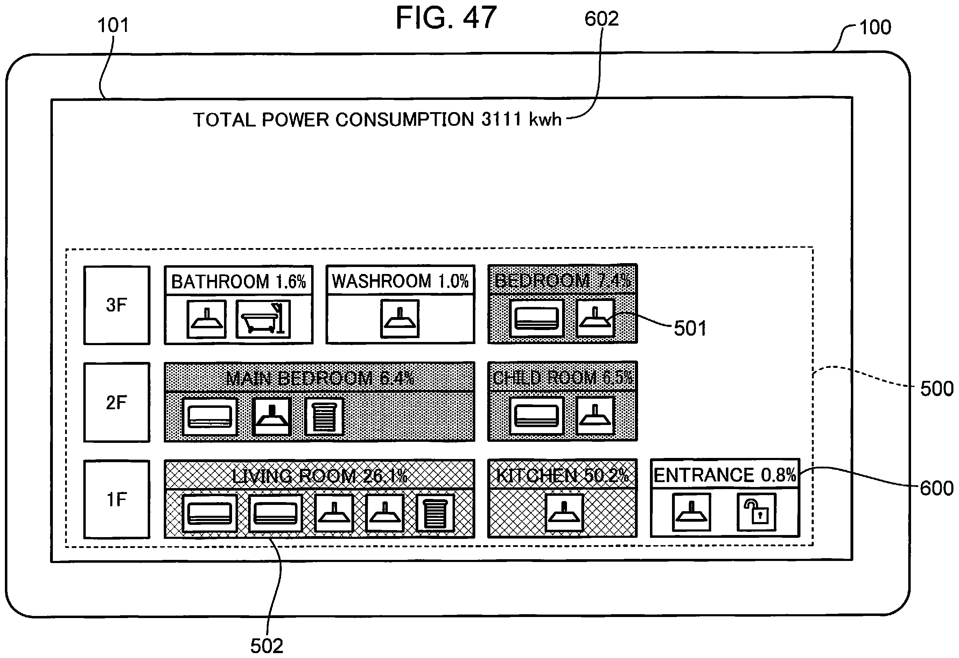

Fig. 47 is a diagram showing another example of a basic screen of the home controller 100. With the basic screen shown in Fig. 47, the display control section 103 displays a display field 602 that displays total power consumption of the home on the display 101 in addition to the floor plan 500 including the room icon 502. With the basic screen shown in Fig. 47, based on power consumption information 1800 (Fig. 35A), the display control section 103 displays a ratio of power consumption of a room with respect to total power consumption in the display field 600 in the room icon 502.

In Fig. 47, the display field 600 of the room icon 502 representing the bathroom displays 1.6%. The display field 600 of the room icon 502 representing the washroom displays 1.0%. The display field 600 of the room icon 502 representing the bedroom displays 7.4%. The display field 600 of the room icon 502 representing the main bedroom displays 6.4%. The display field 600 of the room icon 502 representing the child room displays 6.5%.

The display field 600 of the room icon 502 representing the living room displays 26.1%. The display field 600 of the room icon 502 representing the kitchen displays 50.2%. The display field 600 of the room icon 502 representing the entrance displays 0.8%. According to the basic screen shown in Fig. 47, a user can readily discern a ratio of power consumption of each room in the home.

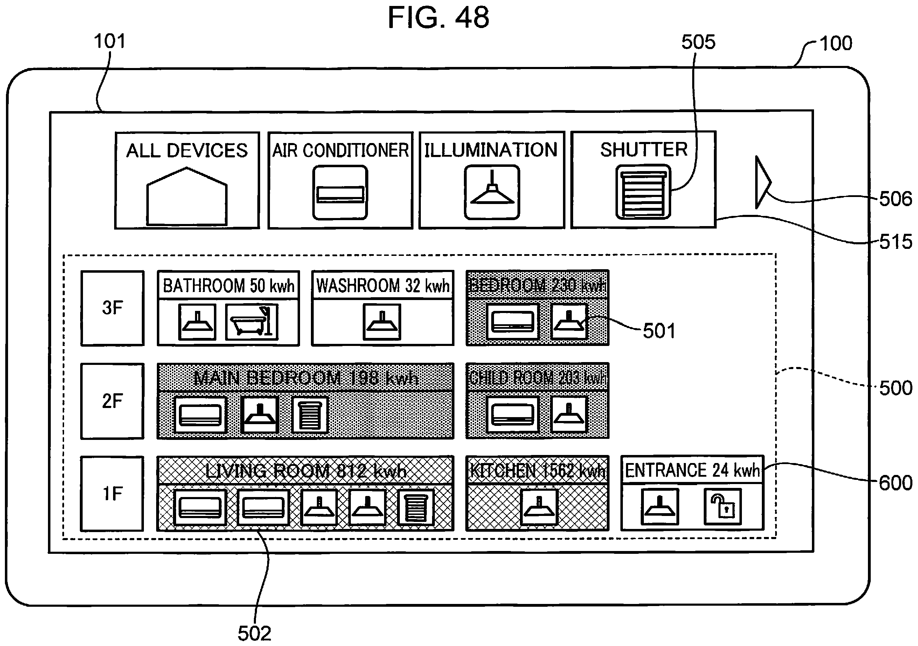

Fig. 48 is a diagram showing yet another example of a basic screen of the home controller 100. With the basic screen shown in Fig. 48, the display control section 103 displays a device type icon 515 and the next page button 506 on the display 101 in addition to the floor plan 500 including the room icon 502.

The device type icon 515 is an icon representing a type of the device 200. A device type icon 515 is prepared for each type of the device 200. The device type icon 515 includes the device icon 501 which schematically represents a device that typifies a type of the device 200. The device type icon 515 is labeled with a name or an abbreviated name of a device.

In the example shown in Fig. 48, the display control section 103 arranges the device type icons 515 side by side above the floor plan 500. As shown in Fig. 48, the display control section 103 displays, in order from left to right, a device type icon 515 representing all devices, a device type icon 515 representing an air conditioner, a device type icon 515 representing an illumination device, and a device type icon 515 representing an electric shutter apparatus on the display 101.

When the user selects the next page button 506 on the basic screen shown in Fig. 48, the touch panel control section 102 senses the selection thereof. As a result, the display control section 103 scrolls the device type icons 515 displayed side by side on the display 101 and displays the other device type icon 515 on the display 101.

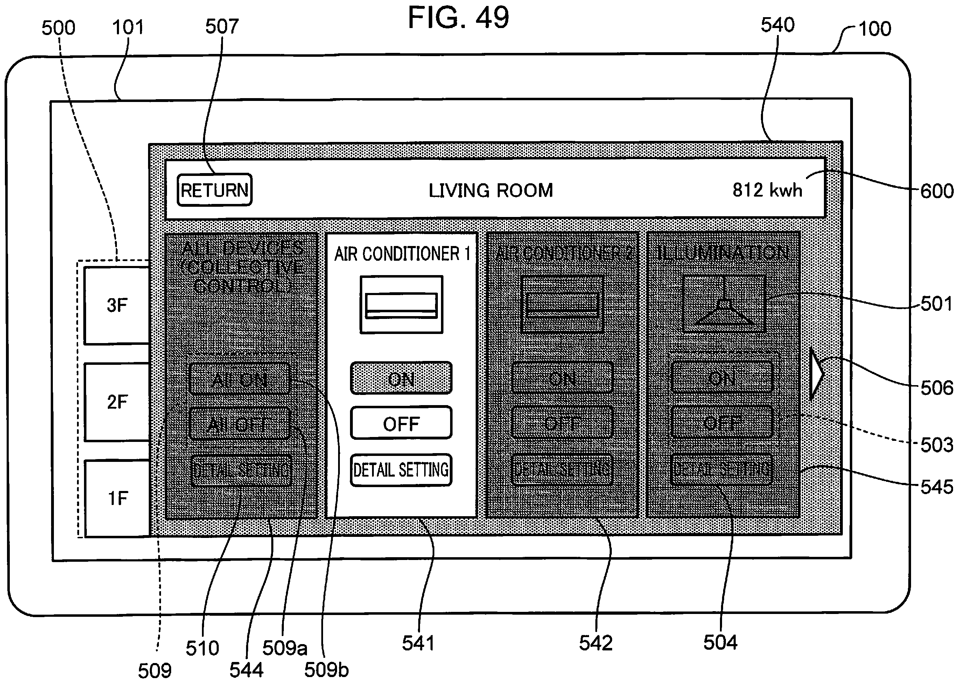

Fig. 49 is a diagram showing another display example of the room screen 540 shown in Fig. 6. As described above, when the user selects the device icon 501 included in the room icon 502 on the basic screen shown in Fig. 5, the touch panel control section 102 senses the selection thereof. As a result, the display control section 103 displays a room screen 540 representing a room corresponding to the selected device icon 501 on the display 101 so as to overlap with the floor plan 500.

For example, when the user selects the device icon 501 at a left end representing the air conditioner in the room icon 502 representing the living room as shown in the upper diagram in Fig. 9, the touch panel control section 102 senses the selection thereof. Consequently, as shown in Fig. 49, the display control section 103 displays the operation screen 541 of the first air conditioner in ordinary brightness on the display 101 and displays the other operation screens 542, 544, and 545 in, for example, a lower brightness than the operation screen 541 or in gray on the display 101.

Due to the display control section 103 displaying the room screen 540 on the display 101 as shown in Fig. 49, the fact that the device icon 501 at the left end representing the air conditioner in the room icon 502 representing the living room has been selected on the basic screen shown in Fig. 5 by the user can be clearly indicated.

### Industrial Applicability

The present disclosure is useful as a control method and a program of controlling one or more target devices connected to a network.

## Claims

1. A method for controlling an information apparatus, the information apparatus having a display and being connected to a network, one or more target devices being controlled over the network,
the method causing a computer of the information apparatus to:
display a display screen on the display, the display screen representing each of rooms included in a building;
display device icons (501) on the display in units of each room represented on the display screen, each of the device icons (501) representing each of the one or more target devices;
when a selection of a first device icon representing a first target device among the one or more target devices is sensed, display a room screen (540) on the display, the room screen (540) representing a room corresponding to the selected first device icon, the displayed room screen (540) including a first operation screen (541) for operating the first target device, the first target device corresponding to the selected first device icon, and the displayed room screen (540) including a second operation screen (542) for operating a second target device, the second target device corresponding to a second device icon other than the selected first device icon, the second target device being arranged in the room represented on the room screen (540);
output to the network a first control command controlling the first target device based on an operation on the first operation screen (541); and
output to the network a second control command controlling the second target device based on an operation on the second operation screen (542).

2. The method according to claim 1, wherein
the first operation screen (541) includes a first operation button (504) for causing a first extended operation screen to be displayed, the first extended operation screen (522) being used for operating instructions other than instructions operable by the first operation screen (541), and
when it is determined that selection of the first operation button (504) is sensed, the first extended operation screen is displayed on the display.

3. The method according to claim 2, wherein
a third control command is outputted to the network based on an operation on the first extended operation screen (522), the third control command controlling the first target device.

4. The control method according to claim 1, wherein
the second operation screen (542) includes a second operation button (504) for causing a second extended operation screen to be displayed, the second extended operation screen being used for operating instructions other than instructions operable by the second operation screen (542), and
when it is determined that selection of the second operation button (504) is sensed, the second extended operation screen is displayed on the display.

5. The control method according to claim 4, wherein
a fourth control command is outputted to the network based on an operation on the second extended operation screen, the fourth control command controlling the second target device.

6. The control method according to any one of claims 1 to 5, wherein
the second device icon is a device icon representing a target device of a same type as the first device icon.

7. The control method according to any one of claims 1 to 5, wherein
the second device icon is a device icon representing a target device of a type that differs from the first device icon.

8. The control method according to any one of claims 1 to 7, wherein
the room screen includes a display field (600) for displaying power consumption of the corresponding room.

9. The control method according to claim 8, wherein
the information apparatus is connected to a management apparatus via a network, the management apparatus managing the power consumption of each of the one or more rooms in units of each room,
power information is acquired from the management apparatus, the power information indicating the power consumption of each of the one or more rooms, and
the power consumption is displayed in the display field (600) based on the power information.

10. A program for controlling an information apparatus, the information apparatus having a display and being connected to a network, one or more target devices being controlled over the network,
the program causing a computer of the information apparatus to:
display a display screen on the display, the display screen representing each of rooms included in a building;
display device icons (501) on the display in units of each room represented on the display screen, each of the device icons (501) representing each of the one or more target devices;
when a selection of a first device icon representing a first target device among the one or more target devices is sensed, display a room screen (540) on the display, the room screen (540) representing a room corresponding to the selected first device icon, the displayed room screen (540) including a first operation screen (541) for operating the first target device, the first target device corresponding to the selected first device icon, and the displayed room screen (540) including a second operation screen (542) for operating a second target device, the second target device corresponding to a second device icon other than the selected first device icon, the second target device being arranged in the room represented on the room screen (540);
output to the network a first control command controlling the first target device based on an operation on the first operation screen (541); and
output to the network a second control command controlling the second target device based on an operation on the second operation screen (542).

11. A method for controlling an information apparatus, the information apparatus having a display and being connected to a network, one or more target devices being controlled over the network,
the method causing a computer of the information apparatus to:
display a display screen on the display, the display screen representing each of rooms included in a building;
display device icons (501) on the display in units of each room represented on the display screen, each of the device icons (501) representing each of the one or more target devices;
when a selection of a first device icon representing a first target device among the one or more target devices is sensed, display a room screen (540) on the display, the room screen (540) representing a room corresponding to the selected first device icon, the displayed room screen (540) including a first operation screen (541) for operating the first target device and including an operation screen device icon for causing a second operation screen (542) for operating a second target device to be displayed on the display, the first target device corresponding to the selected first device icon (501), the second target device corresponding to a second device icon other than the selected first device icon, the second target device being arranged in the room represented on the room screen (540);
when selection of the operation screen device icon on the displayed room screen is sensed, display the second operation screen (542) for operating the second target device, on the display by switching from the first operation screen (541);
output to the network a first control command controlling the first target device based on an operation on the first operation screen; and
output to the network a second control command controlling the second target device based on an operation on the second operation screen (542).

12. The control method according to claim 11, wherein
the second device icon is a device icon representing a target device of a same type as the first device icon.

13. The control method according to claim 11, wherein
the second device icon is a device icon representing a target device of a type that differs from the first device icon.

14. The control method according to any one of claims 11 to 13, wherein
the room screen includes a display field (600) for displaying power consumption of the corresponding room.

15. A program for controlling an information apparatus, the information apparatus having a display and being connected to a network, one or more target devices being controlled over the network,
the program causing a computer of the information apparatus to:
display a display screen on the display, the display screen representing each of rooms included in a building;
display device icons (501) on the display in units of each room represented on the display screen, each of the device icons (501) representing each of the one or more target devices;
when a selection of a first device icon representing a first target device among the one or more target devices is sensed, display a room screen (540) on the display, the room screen (540) representing a room corresponding to the selected first device icon, the displayed room screen (540) including a first operation screen (541) for operating the first target device and including an operation screen device icon for causing a second operation screen (542) for operating a second target device to be displayed on the display, the first target device corresponding to the selected first device icon (501), the second target device corresponding to a second device icon other than the selected first device icon, the second target device being arranged in the room represented on the room screen (540);
when selection of the operation screen device icon on the displayed room screen is sensed, display the second operation screen (542) for operating the second target device, on the display by switching from the first operation screen (541);
output to the network a first control command controlling the first target device based on an operation on the first operation screen; and
output to the network a second control command controlling the second target device based on an operation on the second operation screen (542).

## Patentansprüche

1. Verfahren zum Steuern einer Informationsvorrichtung, wobei die Informationsvorrichtung eine Anzeige aufweist und mit einem Netzwerk verbunden ist, wobei ein oder mehrere Zielgeräte über das Netzwerk gesteuert werden,
wobei das Verfahren einen Computer der Informationsvorrichtung zu Folgendem veranlasst:
Anzeigen eines Bildschirms auf der Anzeige, wobei der Bildschirm jeden von Räumen darstellt, die in einem Gebäude enthalten sind;
Anzeigegerätesymbole (501) auf der Anzeige in Einheiten von jedem Raum, der auf dem Bildschirm dargestellt ist, wobei jedes der Gerätesymbole (501) jedes von dem einen oder den mehreren Zielgeräten darstellt;
wenn eine Auswahl eines ersten Gerätesymbols erfasst wird, das ein erstes Zielgerät aus dem einen oder den mehreren Zielgeräten darstellt, Anzeigen eines Raumbildschirms (540) auf der Anzeige, wobei der Raumbildschirm (540) einen Raum darstellt, der dem ausgewählten ersten Gerätesymbol entspricht, wobei der angezeigte Raumbildschirm (540) einen ersten Betriebsbildschirm (541) zum Betreiben des ersten Zielgeräts beinhaltet, wobei das erste Zielgerät dem ausgewählten ersten Gerätesymbol entspricht, und wobei der angezeigte Raumbildschirm (540) einen zweiten Betriebsbildschirm (542) zum Betreiben eines zweiten Zielgeräts beinhaltet, wobei das zweite Zielgerät einem zweiten anderen Gerätesymbol als dem ausgewählten ersten Gerätesymbol entspricht, wobei das zweite Zielgerät in dem auf dem Raumbildschirm (540) dargestellten Raum angeordnet ist;
Ausgeben eines ersten Steuerbefehls, der das erste Zielgerät steuert, an das Netzwerk basierend auf einem Betrieb auf dem ersten Betriebsbildschirm (541); und
Ausgeben eines zweiten Steuerbefehls, der das zweite Zielgerät steuert, an das Netzwerk basierend auf einem Betrieb auf dem zweiten Betriebsbildschirm (542).

2. Verfahren nach Anspruch 1, wobei
der erste Betriebsbildschirm (541) eine erste Betätigungstaste (504) zum Veranlassen eines ersten erweiterten Betriebsbildschirms dazu, angezeigt zu werden, beinhaltet, wobei der erste erweiterte Betriebsbildschirm (522) zum Betreiben von anderen Anweisungen als Anweisungen, die durch den ersten Betriebsbildschirm (541) betreibbar sind, verwendet wird, und
wenn bestimmt wird, dass eine Auswahl der ersten Betätigungstaste (504) erfasst ist, der erste erweiterte Betriebsbildschirm auf der Anzeige angezeigt wird.

3. Verfahren nach Anspruch 2, wobei
ein dritter Steuerbefehl basierend auf einem Betrieb auf dem ersten erweiterten Betriebsbildschirm (522) an das Netzwerk ausgegeben wird, wobei der dritte Steuerbefehl das erste Zielgerät steuert.

4. Steuerverfahren nach Anspruch 1, wobei
der zweite Betriebsbildschirm (542) eine zweite Betätigungstaste (504) zum Veranlassen eines zweiten erweiterten Betriebsbildschirms dazu, angezeigt zu werden, beinhaltet, wobei der zweite erweiterte Betriebsbildschirm zum Betreiben von anderen Anweisungen als Anweisungen, die durch den zweiten Betriebsbildschirm (542) betreibbar sind, verwendet wird, und
wenn bestimmt wird, dass eine Auswahl der zweiten Betätigungstaste (504) erfasst ist, der zweite erweiterte Betriebsbildschirm auf der Anzeige angezeigt wird.

5. Steuerverfahren nach Anspruch 4, wobei
ein vierter Steuerbefehl basierend auf einem Betrieb auf dem zweiten erweiterten Betriebsbildschirm an das Netzwerk ausgegeben wird, wobei der vierte Steuerbefehl das zweite Zielgerät steuert.

6. Steuerverfahren nach einem der Ansprüche 1 bis 5, wobei
das zweite Gerätesymbol ein Gerätesymbol ist, das ein Zielgerät eines gleichen Typs wie das erste Gerätesymbol darstellt.

7. Steuerverfahren nach einem der Ansprüche 1 bis 5, wobei
das zweite Gerätesymbol ein Gerätesymbol ist, das ein Zielgerät eines Typs darstellt, das sich von dem ersten Gerätesymbol unterscheidet.

8. Steuerverfahren nach einem der Ansprüche 1 bis 7, wobei
der Raumbildschirm ein Anzeigefeld (600) zum Anzeigen eines Stromverbrauchs des entsprechenden Raums beinhaltet.

9. Steuerverfahren nach Anspruch 8, wobei
die Informationsvorrichtung mit einer Verwaltungsvorrichtung über ein Netzwerk verbunden ist, wobei die Verwaltungsvorrichtung den Stromverbrauch von jedem des einen oder der mehreren Räume in Einheiten von jedem Raum verwaltet,
Strominformationen von der Verwaltungsvorrichtung erfasst werden, wobei die Strominformationen den Stromverbrauch von jedem des einen oder der mehreren Räume angeben, und
der Stromverbrauch in dem Anzeigefeld (600) basierend auf den Strominformationen angezeigt wird.

10. Programm zum Steuern einer Informationsvorrichtung, wobei die Informationsvorrichtung eine Anzeige aufweist und mit einem Netzwerk verbunden ist, wobei ein oder mehrere Zielgeräte über das Netzwerk gesteuert werden,
wobei das Programm einen Computer der Informationsvorrichtung zu Folgendem veranlasst:
Anzeigen eines Bildschirms auf der Anzeige, wobei der Bildschirm jeden von Räumen darstellt, die in einem Gebäude enthalten sind;
Anzeigegerätesymbole (501) auf der Anzeige in Einheiten von jedem Raum, der auf dem Bildschirm dargestellt ist, wobei jedes der Gerätesymbole (501) jedes von dem einen oder den mehreren Zielgeräten darstellt;
wenn eine Auswahl eines ersten Gerätesymbols erfasst wird, das ein erstes Zielgerät aus dem einen oder den mehreren Zielgeräten darstellt, Anzeigen eines Raumbildschirms (540) auf der Anzeige, wobei der Raumbildschirm (540) einen Raum darstellt, der dem ausgewählten ersten Gerätesymbol entspricht, wobei der angezeigte Raumbildschirm (540) einen ersten Betriebsbildschirm (541) zum Betreiben des ersten Zielgeräts beinhaltet, wobei das erste Zielgerät dem ausgewählten ersten Gerätesymbol entspricht, und wobei der angezeigte Raumbildschirm (540) einen zweiten Betriebsbildschirm (542) zum Betreiben eines zweiten Zielgeräts beinhaltet, wobei das zweite Zielgerät einem zweiten anderen Gerätesymbol als dem ausgewählten ersten Gerätesymbol entspricht, wobei das zweite Zielgerät in dem auf dem Raumbildschirm (540) dargestellten Raum angeordnet ist;
Ausgeben eines ersten Steuerbefehls, der das erste Zielgerät steuert, an das Netzwerk basierend auf einem Betrieb auf dem ersten Betriebsbildschirm (541); und
Ausgeben eines zweiten Steuerbefehls, der das zweite Zielgerät steuert, an das Netzwerk basierend auf einem Betrieb auf dem zweiten Betriebsbildschirm (542).

11. Verfahren zum Steuern einer Informationsvorrichtung, wobei die Informationsvorrichtung eine Anzeige aufweist und mit einem Netzwerk verbunden ist, wobei ein oder mehrere Zielgeräte über das Netzwerk gesteuert werden,
wobei das Verfahren einen Computer der Informationsvorrichtung zu Folgendem veranlasst:
Anzeigen eines Bildschirms auf der Anzeige, wobei der Bildschirm jeden von Räumen darstellt, die in einem Gebäude enthalten sind;
Anzeigegerätesymbole (501) auf der Anzeige in Einheiten von jedem Raum, der auf dem Bildschirm dargestellt ist, wobei jedes der Gerätesymbole (501) jedes von dem einen oder den mehreren Zielgeräten darstellt;
wenn eine Auswahl eines ersten Gerätesymbols erfasst wird, das ein erstes Zielgerät aus dem einen oder den mehreren Zielgeräten darstellt, Anzeigen eines Raumbildschirms (540) auf der Anzeige, wobei der Raumbildschirm (540) einen Raum darstellt, der dem ausgewählten ersten Gerätesymbol entspricht, wobei der angezeigte Raumbildschirm (540) einen ersten Betriebsbildschirm (541) zum Betreiben des ersten Zielgeräts beinhaltet und ein Betriebsbildschirmgerätesymbol zum Veranlassen eines zweiten Betriebsbildschirms (542) dazu, ein auf der Anzeige anzuzeigendes zweites Zielgerät zu betreiben, beinhaltet, wobei das erste Zielgerät dem ausgewählten ersten Gerätesymbol (501) entspricht, wobei das zweite Zielgerät einem zweiten anderen Gerätesymbol als dem ausgewählten ersten Gerätesymbol entspricht, wobei das zweite Zielgerät in dem auf dem Raumbildschirm (540) dargestellten Raum angeordnet ist;
wenn eine Auswahl des Betriebsbildschirmgerätesymbols auf dem angezeigten Raumbildschirm erfasst wird, Anzeigen des zweiten Betriebsbildschirms (542) zum Betreiben des zweiten Zielgeräts auf der Anzeige durch Umschalten von dem ersten Betriebsbildschirm (541);
Ausgeben eines ersten Steuerbefehls, der das erste Zielgerät steuert, an das Netzwerk basierend auf einem Betrieb auf dem ersten Betriebsbildschirm; und
Ausgeben eines zweiten Steuerbefehls, der das zweite Zielgerät steuert, an das Netzwerk basierend auf einem Betrieb auf dem zweiten Betriebsbildschirm (542).

12. Steuerverfahren nach Anspruch 11, wobei
das zweite Gerätesymbol ein Gerätesymbol ist, das ein Zielgerät eines gleichen Typs wie das erste Gerätesymbol darstellt.

13. Steuerverfahren nach Anspruch 11, wobei
das zweite Gerätesymbol ein Gerätesymbol ist, das ein Zielgerät eines Typs darstellt, das sich von dem ersten Gerätesymbol unterscheidet.

14. Steuerverfahren nach einem der Ansprüche 11 bis 13, wobei
der Raumbildschirm ein Anzeigefeld (600) zum Anzeigen eines Stromverbrauchs des entsprechenden Raums beinhaltet.

15. Programm zum Steuern einer Informationsvorrichtung, wobei die Informationsvorrichtung eine Anzeige aufweist und mit einem Netzwerk verbunden ist, wobei ein oder mehrere Zielgeräte über das Netzwerk gesteuert werden,
wobei das Programm einen Computer der Informationsvorrichtung zu Folgendem veranlasst:
Anzeigen eines Bildschirms auf der Anzeige, wobei der Bildschirm jeden von Räumen darstellt, die in einem Gebäude enthalten sind;
Anzeigegerätesymbole (501) auf der Anzeige in Einheiten von jedem Raum, der auf dem Bildschirm dargestellt ist, wobei jedes der Gerätesymbole (501) jedes von dem einen oder den mehreren Zielgeräten darstellt;
wenn eine Auswahl eines ersten Gerätesymbols erfasst wird, das ein erstes Zielgerät aus dem einen oder den mehreren Zielgeräten darstellt, Anzeigen eines Raumbildschirms (540) auf der Anzeige, wobei der Raumbildschirm (540) einen Raum darstellt, der dem ausgewählten ersten Gerätesymbol entspricht, wobei der angezeigte Raumbildschirm (540) einen ersten Betriebsbildschirm (541) zum Betreiben des ersten Zielgeräts beinhaltet und ein Betriebsbildschirmgerätesymbol zum Veranlassen eines zweiten Betriebsbildschirms (542) dazu, ein auf der Anzeige anzuzeigendes zweites Zielgerät zu betreiben, beinhaltet, wobei das erste Zielgerät dem ausgewählten ersten Gerätesymbol (501) entspricht, wobei das zweite Zielgerät einem zweiten anderen Gerätesymbol als dem ausgewählten ersten Gerätesymbol entspricht, wobei das zweite Zielgerät in dem auf dem Raumbildschirm (540) dargestellten Raum angeordnet ist;
wenn eine Auswahl des Betriebsbildschirmgerätesymbols auf dem angezeigten Raumbildschirm erfasst wird, Anzeigen des zweiten Betriebsbildschirms (542) zum Betreiben des zweiten Zielgeräts auf der Anzeige durch Umschalten von dem ersten Betriebsbildschirm (541);
Ausgeben eines ersten Steuerbefehls, der das erste Zielgerät steuert, an das Netzwerk basierend auf einem Betrieb auf dem ersten Betriebsbildschirm; und
Ausgeben eines zweiten Steuerbefehls, der das zweite Zielgerät steuert, an das Netzwerk basierend auf einem Betrieb auf dem zweiten Betriebsbildschirm (542).

## Revendications

1. Procédé de commande d'un appareil d'informations, l'appareil d'informations comportant un affichage et étant connecté à un réseau, un ou plusieurs dispositifs cibles étant commandés sur le réseau,
le procédé amenant un ordinateur de l'appareil d'informations à :
afficher un écran d'affichage sur l'affichage, l'écran d'affichage représentant chacune des pièces comprises dans un bâtiment ;
afficher des icônes de dispositif d'affichage (501) sur l'affichage dans des unités de chaque pièce représentée sur l'écran d'affichage, chacun des icônes de dispositif (501) représentant chacun desdits un ou plusieurs dispositifs cibles ;
lorsqu'une sélection d'un premier icône de dispositif représentant un premier dispositif cible parmi lesdits un ou plusieurs dispositifs est détectée, afficher un écran de pièce (540) sur l'affichage, l'écran de pièce (540) représentant une pièce correspondant au premier icône de dispositif sélectionné, l'écran de pièce affiché (540) comprenant un premier écran de fonctionnement (541) destiné à faire fonctionner le premier dispositif cible, le premier dispositif cible correspondant au premier icône de dispositif sélectionné, et l'écran de pièce affiché (540) comprenant un deuxième écran de fonctionnement (542) destiné à faire fonctionner un deuxième dispositif cible, le deuxième dispositif cible correspondant à un deuxième icône de dispositif autre que le premier icône de dispositif sélectionné, le deuxième dispositif cible étant agencé dans la pièce représentée sur l'écran de pièce (540) ;
émettre vers le réseau un premier ordre de commande commandant le premier dispositif cible en fonction d'un fonctionnement du premier écran de fonctionnement (541) ; et
émettre vers le réseau un deuxième ordre de commande commandant le deuxième dispositif cible en fonction d'un fonctionnement sur le deuxième écran de fonctionnement (542).

2. Procédé selon la revendication 1, dans lequel
le premier écran de fonctionnement (541) comprend un premier bouton de fonctionnement (504) destiné à amener un premier écran de fonctionnement prolongé à être affiché, le premier écran de fonctionnement prolongé (522) étant utilisé pour faire fonctionner des instructions autres que les instructions exploitables par le premier écran de fonctionnement (541), et
lorsque l'on détermine qu'une sélection du premier bouton de fonctionnement (504) est détectée, le premier écran de fonctionnement prolongé est affiché sur l'affichage.

3. Procédé selon la revendication 2, dans lequel
un troisième ordre de commande est émis vers le réseau en fonction d'un fonctionnement sur le premier écran de fonctionnement prolongé (522), le troisième ordre de commande commandant le premier dispositif cible.

4. Programme de commande selon la revendication 1, dans lequel
le deuxième écran de fonctionnement (542) comprend un deuxième bouton de fonctionnement (504) destiné à amener un deuxième écran de fonctionnement prolongé à être affiché, le deuxième écran de fonctionnement prolongé étant utilisé pour faire fonctionner des instructions autres que des instructions exploitables par le deuxième écran de fonctionnement (542), et
lorsque l'on détermine qu'une sélection du deuxième bouton de fonctionnement (504) est détectée, le deuxième écran de fonctionnement prolongé est affiché sur l'affichage.

5. Procédé de commande selon la revendication 4, dans lequel
un quatrième ordre de commande est émis vers le réseau en fonction d'un fonctionnement sur le deuxième écran de fonctionnement prolongé, le quatrième ordre de commande commandant le deuxième dispositif cible.

6. Procédé de commande selon l'une quelconque des revendications 1 à 5, dans lequel
le deuxième icône de dispositif est un icône de dispositif représentant un dispositif cible d'un même type que le premier icône de dispositif.

7. Procédé de commande selon l'une quelconque des revendications 1 à 5, dans lequel
le deuxième icône de dispositif est un icône de dispositif représentant un dispositif cible d'un type qui diffère du premier icône de dispositif.

8. Procédé de commande selon l'une quelconque des revendications 1 à 7, dans lequel
l'écran de pièce comprend un champ d'affichage (600) destiné à afficher une consommation d'énergie de la pièce correspondante.

9. Procédé de commande selon la revendication 8, dans lequel
l'appareil d'informations est connecté à un appareil de gestion par un réseau, l'appareil de gestion gérant la consommation d'énergie de chacune desdites une ou plusieurs pièces dans des unités de chaque pièce,
des informations d'énergie sont acquises depuis l'appareil de gestion, les informations d'énergie indiquant la consommation d'énergie de chacune desdites une ou plusieurs pièces, et
la consommation d'énergie est affichée dans le champ d'affichage (600) en fonction des informations d'énergie.

10. Programme destiné à commander un appareil d'informations, l'appareil d'informations comportant un affichage et étant connecté à un réseau, un ou plusieurs dispositifs cibles étant commandés sur le réseau,
le programme amenant un ordinateur de l'appareil d'informations à :
afficher un écran d'affichage sur l'affichage, l'écran d'affichage représentant chacune des pièces comprises dans un bâtiment ;
afficher des icônes de dispositif (501) sur l'affichage dans des unités de chaque pièce représentée sur l'écran d'affichage, chacun des icônes de dispositif (501) représentant chacun desdits un ou plusieurs dispositifs cibles ;
lorsqu'une sélection d'un premier icône de dispositif représentant un premier dispositif cible parmi lesdits un ou plusieurs dispositifs cibles est détectée, afficher un écran de pièce (540) sur l'affichage, l'écran de pièce (540) représentant une pièce correspondant au premier icône de dispositif sélectionné, l'écran de pièce affiché (540) comprenant un premier écran de fonctionnement (541) destiné à faire fonctionner le premier dispositif cible, le premier dispositif cible correspondant au premier icône de dispositif sélectionné, et l'écran de pièce affiché (540) comprenant un deuxième écran de fonctionnement (542) destiné à faire fonctionner un deuxième dispositif cible, le deuxième dispositif cible correspondant à un deuxième icône de dispositif autre que le premier icône de dispositif sélectionné, le deuxième dispositif cible étant agencé dans la pièce représentée sur l'écran de pièce (540) ;
émettre vers le réseau un premier ordre de commande commandant le premier dispositif cible en fonction d'un fonctionnement du premier écran de fonctionnement (541) ; et
émettre vers le réseau un deuxième ordre de commande commandant le deuxième dispositif cible en fonction d'un fonctionnement sur le deuxième écran de fonctionnement (542).

11. Procédé destiné à commander un appareil d'informations, l'appareil d'informations comportant un affichage et étant connecté à un réseau, un ou plusieurs dispositifs cibles étant commandés sur le réseau,
le procédé amenant un ordinateur de l'appareil d'informations à :
afficher un écran d'affichage sur l'affichage, l'écran d'affichage représentant chacune des pièces comprises dans un bâtiment ;
afficher des icônes de dispositif (501) sur l'affichage dans des unités de chaque pièce représentée sur l'écran d'affichage, chacun des icônes de dispositif (501) représentant chacun desdits un ou plusieurs dispositifs cibles ;
lorsqu'une sélection d'un premier icône de dispositif représentant un premier dispositif cible parmi lesdits un ou plusieurs dispositifs cibles est détectée, afficher un écran de pièce (540) sur l'affichage, l'écran de pièce (540) représentant une pièce correspondant au premier icône de dispositif sélectionné, l'écran de pièce affiché (540) comprenant un premier écran de fonctionnement (541) destiné à faire fonctionner le premier dispositif cible et comprenant un icône de dispositif d'écran de fonctionnement destiné à amener un deuxième écran de fonctionnement (542) à faire fonctionner un deuxième dispositif cible devant être affiché sur l'affichage, le premier dispositif cible correspondant au premier icône de dispositif sélectionné (501), le deuxième dispositif cible correspondant à un deuxième icône de dispositif autre que le premier icône de dispositif sélectionné, le deuxième dispositif cible étant agencé dans la pièce représentée sur l'écran de pièce (540) ;
lorsqu'une sélection de l'icône de dispositif d'écran de fonctionnement sur l'écran de pièce affiché est détectée, afficher le deuxième écran de fonctionnement (542) destiné à faire fonctionner le deuxième dispositif cible, sur l'affichage en commutant à partir du premier écran de fonctionnement (541) ;
émettre vers le réseau un premier ordre de commande commandant le premier dispositif cible en fonction d'un fonctionnement sur le premier écran de fonctionnement ; et
émettre vers le réseau un deuxième ordre de commande commandant le deuxième dispositif cible en fonction d'un fonctionnement sur le deuxième écran de fonctionnement (542).

12. Procédé de commande selon la revendication 11, dans lequel
le deuxième icône de dispositif est un icône de dispositif représentant un dispositif cible d'un même type que le premier icône de dispositif.

13. Procédé de commande selon la revendication 11, dans lequel
le deuxième icône de dispositif est un icône de dispositif représentant un dispositif cible d'un type qui diffère du premier icône de dispositif.

14. Procédé de commande selon l'une quelconque des revendications 11 à 13, dans lequel
l'écran de pièce comprend un champ d'affichage (600) destiné à afficher une consommation d'énergie de la pièce correspondante.

15. Programme destiné à commander un appareil d'informations, l'appareil d'informations comportant un affichage et étant connecté à un réseau, un ou plusieurs dispositifs cibles étant commandés sur le réseau,
le programme amenant un ordinateur de l'appareil d'informations à :
afficher un écran d'affichage sur l'affichage, l'écran d'affichage représentant chacune des pièces comprises dans un bâtiment ;
afficher des icônes de dispositif (501) sur l'affichage dans des unités de chaque pièce représentée sur l'écran d'affichage, chacun des icônes de dispositif (501) représentant chacun desdits un ou plusieurs dispositifs cibles ;
lorsqu'une sélection d'un premier icône de dispositif représentant un premier dispositif cible parmi lesdits un ou plusieurs dispositifs cibles est détectée, afficher un écran de pièce (540) sur l'affichage, l'écran de pièce (540) représentant une pièce correspondant au premier icône de dispositif sélectionné, l'écran de pièce affiché (540) comprenant un premier écran de fonctionnement (541) destiné à faire fonctionner le premier dispositif cible et comprenant un icône de dispositif d'écran de fonctionnement destiné à amener un deuxième écran de fonctionnement (542) à faire fonctionner un deuxième dispositif cible devant être affiché sur l'affichage, le premier dispositif cible correspondant au premier icône de dispositif sélectionné (501), le deuxième dispositif cible correspondant à un deuxième icône de dispositif autre que le premier icône de dispositif sélectionné, le deuxième dispositif cible étant agencé dans la pièce représentée sur l'écran de pièce (540) ;
lorsqu'une sélection de l'icône de dispositif d'écran de fonctionnement sur l'écran de pièce affiché est détectée, afficher le deuxième écran de fonctionnement (542) destiné à faire fonctionner le deuxième dispositif cible, sur l'affichage par commutation à partir du premier écran de fonctionnement (541) ;
émettre vers le réseau un premier ordre de commande commandant le premier dispositif cible en fonction d'un fonctionnement sur le premier écran de fonctionnement ; et
émettre vers le réseau un deuxième ordre de commande commandant le deuxième dispositif cible en fonction d'un fonctionnement sur le deuxième écran de fonctionnement (542).
